(19) Europäisches Patentamt
European Patent Office
Office européen des brevets

(11) EP 4 130 097 A1

(12) EUROPEAN PATENT APPLICATION
published in accordance with Art. 153(4) EPC

(43) Date of publication:
**08.02.2023 Bulletin 2023/06**

(21) Application number: **21780035.8**

(22) Date of filing: **01.04.2021**

(51) International Patent Classification (IPC):
***C08G 64/18*** *(1990.01)* ***C08G 81/00*** *(1974.07)*
***C08G 85/00*** *(1974.07)* ***C08L 67/03*** *(1990.01)*
***C08L 69/00*** *(1974.07)* ***C08G 63/91*** *(1990.01)*

(52) Cooperative Patent Classification (CPC):
**C08G 63/91; C08G 64/18; C08G 81/00; C08G 85/00; C08L 67/03; C08L 69/00**

(86) International application number:
**PCT/JP2021/014164**

(87) International publication number:
**WO 2021/201228 (07.10.2021 Gazette 2021/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.04.2020 JP 2020065625**

(71) Applicant: **Idemitsu Kosan Co., Ltd**
**Tokyo 100-8321 (JP)**

(72) Inventors:
- **HIKOSAKA Takaaki**
  **Sodegaura-shi, Chiba 299-0293 (JP)**
- **CHIBA Kazunori**
  **Sodegaura-shi, Chiba 299-0293 (JP)**
- **HIRATA Kengo**
  **Sodegaura-shi, Chiba 299-0293 (JP)**

(74) Representative: **Gille Hrabal Partnerschaftsgesellschaft mbB**
**Patentanwälte**
**Brucknerstraße 20**
**40593 Düsseldorf (DE)**

(54) **RESIN, RESIN PRECURSOR COMPOSITION, COATING COMPOSITION, ELECTROPHOTOGRAPHIC PHOTORECEPTOR, MOLDED ARTICLE, ELECTRONIC DEVICE, AND ELECTROPHOTOGRAPHIC PHOTORECEPTOR PRODUCTION METHOD**

(57) At least one resin selected from the group consisting of aromatic polycarbonates and polyarylates has a bond between polymer chains formed by Diels-Alder reaction.

EP 4 130 097 A1

## Description

TECHNICAL FIELD

The present invention relates to a resin, a resin precursor composition, a coating liquid composition, an electrophotographic photoreceptor, a molded product, an electronic device, and a method for producing an electrophotographic photoreceptor.

BACKGROUND ART

Polycarbonate resins have been used as materials of molded products in various industrial fields because of their excellent mechanical properties, thermal properties, and electrical properties. In recent years, polycarbonate resins have also often been used in the fields of functional products that use, for example, optical properties of the polycarbonate resins in combination. With such an extension of the fields of applications, the performance required for polycarbonate resins has also been diversified, and not only polycarbonate resins that have been used to date but also polycarbonate resins having various Formulaical structures have been proposed.

One example of such a functional product is an organic electrophotographic photoreceptor in which a polycarbonate resin is used as a binder resin of a functional material such as a charge generating material or a charge transporting material.

This organic electrophotographic photoreceptor is required to have predetermined sensitivity, electrical characteristics, and optical characteristics according to the electrophotographic process used. The electrophotographic photoreceptor is repeatedly subjected to operations such as corona charging, toner development, transfer to paper, and cleaning process on a surface of a photosensitive layer thereof, and thus electrical or mechanical external force is applied to the surface each time any of these operations is performed. Accordingly, in order to maintain the quality of an electrophotographic image for a long period of time, the photosensitive layer disposed on the surface of the electrophotographic photoreceptor is required to have durability to such external force. The organic electrophotographic photoreceptor is typically produced by a method including: dissolving a binder resin in an organic solvent together with a functional material; and forming a film on a conductive substrate or the like by casting. Therefore, solubility and stability in the organic solvent are required for the organic electrophotographic photoreceptor.

To date, polycarbonate resins produced by using, for example, 2,2-bis(4-hydroxyphenyl)propane or 1,1-bis(4-hydroxyphenyl)cyclohexane as a raw material have been used as a binder resin for a photoreceptor. However, such polycarbonate resins are not sufficiently satisfactory in terms of durability. One possible method for improving durability is to improve abrasion resistance of the photosensitive layer. A known effective technique for improving abrasion resistance of the photosensitive layer is a technique for cross-linking polycarbonate.

In a resin described in Patent Literature 1, a technique for cross-linking PC having an allyl group with a radical initiator is disclosed, and the results show that mechanical strength (such as tensile strength) is better than that of a bisphenol A polycarbonate resin.

Patent Literature 2 describes a polycarbonate copolymer which is cross-linked with an ionic mechanism such as an epoxy group. Furthermore, Patent Literature 3 describes a cross-linking technique by causing a polycarbonate having a double bond to react with a compound having a plurality of silicon-hydrogen bonds in the presence of a platinum catalyst, and a cross-linking technique by causing a polycarbonate having a double bond to react with a compound having an alkoxy group and hydrogen on a silicon atom in the presence of a platinum catalyst, and subsequently performing hydrolysis and condensation reaction.

Patent Literature 4 discloses a cross-linking technique by irradiating a polycarbonate having an allyl group with an electron beam while heating 120 degrees C to 260 degrees C.

Patent Literature 5 discloses a method for cross-linking a polycarbonate having an allyl group with a triarylamine having a specific structure and a radical polymerizable compound having no triarylamine structure by heating without a catalyst.

Patent Literature 6 reports a resin whose chain length is extended with a bismaleimide, the resin having an anthracene skeleton at a terminal of an aliphatic-aromatic polyester.

Patent Literature 7 discloses cross-linked resins produced by reaction between an aliphatic polyester, polyamide, or polyurea having a furan structure and a polyfunctional maleimide.

Patent Literature 8 discloses a curable composition in which a polymerizable functional group such as an acrylic group is introduced into an anthracene skeleton, and cross-linking reaction is performed in the moiety of the functional group.

Non Patent Literature 1 discloses a resin produced by cross-linking, with a bifunctional maleimide compound, an aliphatic-aromatic polyester resin in which an anthracenedicarboxylic acid skeleton is partially introduced.

CITATION LIST

PATENT LITERATURES

Patent Literature 1: JP-H10-77338A
Patent Literature 2: JP-H09-319102A
Patent Literature 3: JP2000-44668A
Patent Literature 4: JP2007-314719A
Patent Literature 5: JP2010-72019A
Patent Literature 6: JP2003-286347A
Patent Literature 7: U.S. Patent No. 3,435,003
Patent Literature 8: JP2012-224569A

NON PATENT LITERATURE

Non Patent Literature 1: Macromolecules 1999, 32, 5786 to 5792

SUMMARY OF THE INVENTION

PROBLEMS TO BE SOLVED BY THE INVENTION

However, the polycarbonate described in Patent Literature 1 has problems in that the use of the radical initiator deteriorates a charge transporting substance (CTM) and that the added initiator remains in a photoreceptor, resulting in an increase in the residual potential when used as a photoreceptor.

The polycarbonate described in Patent Literature 2 has problems in that since a compound having a nucleophilic group such as an amino group, or an acidic group such as a carboxylic anhydride group is used in initiation reaction, a CTM is deteriorated, and that the added compound remains in a photoreceptor, resulting in an increase in the residual potential when used as a photoreceptor. In addition, there is no description as to the confirmation of cross-linking of the disclosed resin, and thus it is unclear whether the disclosed effect of the improvement in the physical properties is due to the cross-linked structure.

The polycarbonate described in Patent Literature 3 has problems in that the use of the platinum catalyst deteriorates a CTM and that the added catalyst remains in a photoreceptor, resulting in an increase in the residual potential when used as a photoreceptor. In addition, it is difficult to inhibit reaction in the coating liquid, resulting in a problem of, for example, an increase in viscosity or occurrence of gelation during the storage of the coating liquid.

The polycarbonate described in Patent Literature 4 has a problem in that a CTM is deteriorated when irradiated with the electron beam, resulting in an increase in the residual potential when used as a photoreceptor.

There are also examples where a cross-linked polycarbonate and a cross-linked polyarylate are obtained without containing a radical initiator or reaction catalyst which may cause degradation of electrical characteristics or without using UV, an electron beam, and the like which may deteriorate a CTM, as described above.

As such an example, Patent Literature 5 reports a technique of using a monomer that has high radical polymerization activity and that is subjected to radical polymerization only by heating without using an initiator or without irradiation with UV, and causing a polycarbonate having an allyl group to coexist with the monomer. However, it is considered that the use of the monomer that is subjected to radical polymerization without an initiator or light irradiation mainly produces a homopolymer of the polymerizable monomer and lowers the reaction probability between the polymerizable monomer and the polycarbonate having an allyl group with relatively low radical polymerization activity. Therefore, the resulting composition does not have a dense three-dimensional mesh-like structure of a polymer but is a composition in which a polycarbonate resin and a cross-linked polymer of the radical polymerizable monomer are separately present, and only portions thereof are bound together. The effect of improving physical properties due to the increase in the molecular weight of a charge transporting substance, which is normally present as a low-molecular weight substance, is dominant, and an improvement in the physical properties due to cross-linking of the polycarbonate moiety is insufficient. In addition, since the highly active compound that is subjected to radical polymerization even without an initiator is used, it is difficult to inhibit the progress of polymerization at the stage of a coating liquid composition, resulting in a problem of, for example, an increase in viscosity or occurrence of gelation during the storage of the coating liquid.

Regarding a cross-linking technique that can satisfy these requirements, Patent Literature 6 discloses, as an example of the use of a resin other than polycarbonate, a straight-chain polymer produced by molecular-weight extension reaction of an aliphatic-aromatic polyester by Diels-Alder reaction. However, the object of the invention described in

Patent Literature 6 is to provide a technology with the following feature: the occurrence of retro-Diels-Alder reaction in which a bond formed by Diels-Alder reaction is dissociated at high temperature is used, and at high temperature, thermal moldability is improved by a decrease in melt viscosity due to a decrease in viscosity, and in an operating temperature region, mechanical physical properties are improved by an increase in the molecular weight, and solubility is maintained because the polymer has a straight-chain structure. This object differs from an object of the invention in which an improvement in solvent resistance and an improvement in mechanical strength are attempted by introducing a cross-linked structure. Moreover, Patent Literature 6 neither describes nor suggests the application of the technology described in Patent Literature 6 to an aromatic polycarbonate or a wholly aromatic polyester.

Patent Literature 7 describes examples in which an aliphatic polyester, polyamide, or polyurea is cross-linked by Diels-Alder reaction. However, an object of these examples is to provide solvent resistance and to obtain an elastomer applicable to a diaphragm seal or an adhesive, which is an intended use, by cross-linking a soft aliphatic resin. The technical idea of these examples differs from the idea of the invention in which the strength of an aromatic polycarbonate or wholly aromatic polyester having high mechanical strength is further enhanced by cross-linking. Moreover, Patent Literature 7 neither describes nor suggests the application of the technology described in Patent Literature 7 to an aromatic polycarbonate or a wholly aromatic polyester.

Non Patent Literature 1 describes an example in which an anthracenedicarboxylic acid skeleton is introduced into polyethylene terephthalate (PET), and the resin is cross-linked with a bifunctional maleimide compound. The object of this example is similar to the object of the invention in that mechanical physical properties are improved by thermal cross-linking; however, Non Patent Literature 1 neither describes nor suggests an example of application to a polycarbonate or a polyarylate. In addition, considering the application to an electrophotographic photoreceptor, PET cannot be used for this application because PET has low solubility in an organic solvent such as THF, which is typically used as a coating solvent, and has poor compatibility with a charge transporting substance such as a triarylamine.

Patent Literature 8 discloses an example in which a polymerizable functional group such as an acrylic group is introduced into an anthracene skeleton, and cross-linking reaction is performed in the moiety of the functional group. However, Patent Literature 8 neither discloses nor suggests that the anthracene moiety is used for cross-linking reaction. In addition, the invention described in Patent Literature 8 aims to keep the function of the anthracene skeleton, and the technology of the invention in which Diels-Alder reaction by which an anthracene skeleton is eliminated is applied is against this aim.

A first object of the invention is to provide at least one resin of an aromatic polycarbonate or polyarylate that has a novel structure, that does not contain a radical initiator, a reaction catalyst, or the like which may cause degradation of electrical characteristics, that can be produced without using UV, an electron beam, or the like which may deteriorate a charge transporting substance (CTM), and that includes substantially no polymer composed only of a single component when a plurality of polymerizable components are present. A second object of the invention is to provide a resin precursor composition having a feature that a variation in characteristics is small because reaction is unlikely to occur at the stage of a coating liquid composition, and a coating liquid composition. A third object of the invention is to provide an electrophotographic photoreceptor that includes the above resin and thus that has good solvent resistance and abrasion resistance, is unlikely to be subjected to mechanical degradation, and does not undergo degradation of the residual potential.

## MEANS FOR SOLVING THE PROBLEMS

According to an aspect of the invention, there is provided at least one resin selected from the group consisting of aromatic polycarbonates and polyarylates, the resin having a bond between polymer chains formed by Diels-Alder reaction.

According to an aspect of the invention, there is provided a resin precursor composition capable of producing the resin according to the aspect of the invention by cross-linking reaction.

According to an aspect of the invention, there is provided a coating liquid composition containing the resin precursor composition according to the aspect of the invention and an organic solvent.

According to an exemplary embodiment of the invention, there is provided an electrophotographic photoreceptor including the resin according to the aspect of the invention in an outermost layer.

According to an aspect of the invention, there is provided a method for producing an electrophotographic photoreceptor, the method including: applying the coating liquid composition according to the aspect of the invention to a conductive base by a wet molding method; removing the organic solvent in the coating liquid composition by performing heating; and performing cross-linking reaction of the resin precursor composition in the coating liquid composition either simultaneously with the heating in the removal of the organic solvent or by continuously performing heating.

According to an aspect of the invention, there is provided a molded product including the resin according to the aspect of the invention.

According to an aspect of the invention, there is provided an electronic device including the resin according to

the aspect of the invention.

An aspect of the invention can provide at least one resin of an aromatic polycarbonate or polyarylate having a novel structure, in which the resin does not contain a radical initiator, a reaction catalyst, or the like which may cause degradation of electrical characteristics, can be produced without using UV, an electron beam, or the like which may deteriorate a charge transporting substance (CTM), and includes substantially no homopolymer of a polymerizable component. An aspect of the invention can provide a resin precursor composition having a feature that a variation in characteristics is small because reaction is unlikely to occur at the stage of a coating liquid composition, and a coating liquid composition. An aspect of the invention can provide an electrophotographic photoreceptor including the above resin that has good solvent resistance, has good abrasion resistance, is unlikely to be subjected to mechanical degradation, and does not undergo degradation of the residual potential.

BRIEF DESCRIPTION OF DRAWINGS

Fig. 1 is a graph showing measurement results of electrophotographic photoreceptor characteristics in specimens prepared in Example 2 and Comparative Examples 2 and 101.

Fig. 2 is a graph showing measurement results with a differential scanning calorimeter (DSC) in a specimen prepared in Example 3.

Fig. 3 is a graph showing measurement results of three-dimensional excitation-emission matrix fluorescence spectroscopy in specimens prepared in Examples 3 and Comparative Example 3-1.

DESCRIPTION OF EMBODIMENTS

[Resin]

A resin according to this exemplary embodiment is at least one resin selected from the group consisting of aromatic polycarbonates and polyarylates. Examples of the specific resin include aromatic polycarbonates, polyarylates, and aromatic polycarbonate-polyarylate copolymers (hereinafter, these may also be simply referred to as "PCs").

The resin according to the exemplary embodiment has a bond between polymer chains formed by Diels-Alder reaction. The resin having a bond between polymer chains has a structure represented by a formula (S1) below. In the formula (S1) below, * represents a bonding position. The structure of a portion ahead of each wavy line is not particularly limited; however, the resin has at least one bonding position at any portion ahead of the wavy line. The portion ahead of the wavy line may form a linked cyclic structure (including an aromatic ring and a heterocycle). The aromatic ring and the heterocycle may each be any cyclic structure such as a three-membered ring, a four-membered ring, a five-membered ring, a six-membered ring, or a seven-membered ring. The structure of a cross-linking site where polymer chains are bonded together is, for example, a bonding form represented by a formula below.

[Formula 1]

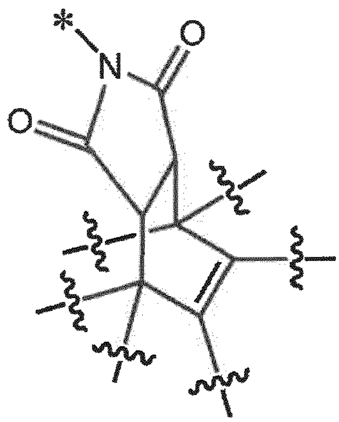

(S1)

[Formula 2]

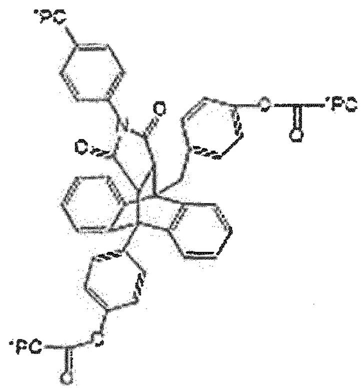

In the above formula, each *PC represents a polymer chain of any of PCs.

Thus, the cross-linking form according to the exemplary embodiment has a rigid cyclic structure, which is a difference from cross-linking by typical radical reaction that provides a straight-chain structure. Since the resin has a cyclic structure, the resin has a stronger structure than a straight-chain cross-linking. This is considered to be one reason why the mechanical strength is improved compared with that of a resin having substantially the same cross-linking density and a straight-chain cross-linking form.

As a result of extensive studies to achieve the above objects of the invention, the inventors of the invention have found that PCs cross-linkable by Diels-Alder reaction have good solution stability and are cross-linked at a current photoreceptor production process temperature, and that the resulting cross-linked resin has good abrasion resistance and does not undergo degradation of electrical characteristics. This finding led to the completion of the invention.

The resin according to the exemplary embodiment can be obtained by cross-linking reaction using a combination of a polymer having, in the structure thereof, at least one of a conjugated diene or dienophile having Diels-Alder reactivity and a cross-linking agent or polymer having at least one group of the corresponding partner.

The bond between polymer chains according to the exemplary embodiment can be formed by, for example, reactions of the following combinations.

(i) Reaction between a polymer having two or more conjugated diene structures in a polymer chain and a compound having di- or higher-functional dienophile groups
(ii) Reaction between a polymer having two or more dienophile structures in a polymer chain and a compound having di- or higher-functional conjugated diene groups
(iii) Reaction between a polymer having two or more conjugated diene structures in a polymer chain and a polymer having two or more dienophile structures in a polymer chain
(iv) Reaction of a polymer which has both a conjugated diene structure and a dienophile structure in a single polymer chain and in which average numbers of the conjugated diene structures and the dienophile structures per one polymer chain are each 1 or more

The bond between polymer chains in the resin according to the exemplary embodiment may be formed by, for example, reaction (i-1) below.

(i-1)
Reaction between a polymer having two or more conjugated diene structures in a main chain of a polymer chain and a compound having di- or higher-functional dienophile groups
The bond between polymer chains in the resin according to the exemplary embodiment may be formed by, for example, at least one of reactions (iii-1) to (iii-8) below.
(iii-1)
Reaction between a polymer having two dienophile structures, the polymer having one of the dienophile structures at one terminal of a polymer chain and having the other dienophile structure at the other terminal of the polymer chain, and a polymer having more than two conjugated diene structures in a polymer chain
(iii-2)
Reaction between a polymer having two dienophile structures, the polymer having one of the dienophile structures at one terminal of a polymer chain and having the other dienophile structure at the other terminal of the polymer chain, and a polymer having more than two conjugated diene structures in a polymer chain, the polymer having one of the conjugated diene structures at one terminal of the polymer chain, having another one of the conjugated diene

structures at the other terminal of the polymer chain, and also having one or more of the conjugated diene structures in a main chain

(iii-3)

Reaction between a polymer having two dienophile structures, the polymer having one of the dienophile structures at one terminal of a polymer chain and having the other dienophile structure at the other terminal of the polymer chain, and a polymer having more than two conjugated diene structures in a polymer chain, the polymer having one of the conjugated diene structures at one terminal of the polymer chain, having none of the conjugated diene structures at the other terminal of the polymer chain, and having two or more of the conjugated diene structures in a main chain

(iii-4)

Reaction between a polymer having two dienophile structures, the polymer having one of the dienophile structures at one terminal of a polymer chain and having the other dienophile structure at the other terminal of the polymer chain, and a polymer having no conjugated diene structure at each terminal of a polymer chain and having more than two conjugated diene structures in a main chain

(iii-5)

Reaction between a polymer having two conjugated diene structures, the polymer having one of the conjugated diene structures at one terminal of a polymer chain and having the other conjugated diene structure at the other terminal of the polymer chain, and a polymer having more than two dienophile structures in a polymer chain

(iii-6)

Reaction between a polymer having two conjugated diene structures, the polymer having one of the conjugated diene structures at one terminal of a polymer chain and having the other conjugated diene structure at the other terminal of the polymer chain, and a polymer having more than two dienophile structures in a polymer chain, the polymer having one of the dienophile structures at one terminal of the polymer chain, having another one of the dienophile structures at the other terminal of the polymer chain, and also having one or more of the dienophile structures in a main chain

(iii-7)

Reaction between a polymer having two conjugated diene structures, the polymer having one of the conjugated diene structures at one terminal of a polymer chain and having the other conjugated diene structure at the other terminal of the polymer chain, and a polymer having more than two dienophile structures in a polymer chain, the polymer having one of the dienophile structures at one terminal of the polymer chain, having none of the dienophile structures at the other terminal of the polymer chain, and having two or more of the dienophile structures in a main chain

(iii-8)

Reaction between a polymer having two conjugated diene structures, the polymer having one of the conjugated diene structures at one terminal of a polymer chain and having the other conjugated diene structure at the other terminal of the polymer chain, and a polymer having no dienophile structure at each terminal of a polymer chain and having more than two dienophile structures in a main chain

It is also preferable that the polymer used for a bond between polymer chains in the resin according to the exemplary embodiment not have two or more of at least one of the conjugated diene structures or the dienophile structures at a terminal of the polymer chain.

For example, in the case of the reaction (i) above, in the polymer having two or more conjugated diene structures, a conjugated diene structure need not necessarily be bonded to at least one of one terminal or the other terminal of the polymer chain. A conjugated diene structure need not necessarily be bonded to the terminals of the polymer chain.

For example, in the case of the reaction (ii) above, in the polymer having two or more dienophile structures, a dienophile structure need not necessarily be bonded to at least one of one terminal or the other terminal of the polymer chain. A dienophile structure need not necessarily be bonded to the terminals of the polymer chain.

For example, in the case of the reaction (iii) above, in the polymer having two or more conjugated diene structures, a conjugated diene structure need not necessarily be bonded to at least one of one terminal or the other terminal of the polymer chain, and in the polymer having two or more dienophile structures, a dienophile structure need not necessarily be bonded to at least one of one terminal or the other terminal of the polymer chain. Neither a conjugated diene structure nor a dienophile structure may be bonded to the terminals of the polymer chains.

It is also preferable that the polymer used for a bond between polymer chains in the resin according to the exemplary embodiment have one or more of at least one of the conjugated diene structures or the dienophile structures in a main chain of the polymer chain.

For example, in the case of the reaction (i) above, in the polymer having two or more conjugated diene structures, one or more conjugated diene structures may be bonded to the main chain of the polymer chain, and all the conjugated diene structures may be bonded to the main chain of the polymer chain.

For example, in the case of the reaction (ii) above, in the polymer having two or more dienophile structures, one or more dienophile structures may be bonded to the main chain of the polymer chain, and all the dienophile structures may be bonded to the main chain of the polymer chain.

For example, in the case of the reaction (iii) above, in the polymer having two or more conjugated diene structures, one or more conjugated diene structures may be bonded to the main chain of the polymer chain, and in the polymer having two or more dienophile structures, one or more dienophile structures may be bonded to the main chain of the polymer chain.

For example, in the case of the reaction (iii) above, in the polymer having two or more conjugated diene structures, all the conjugated diene structures may be bonded to the main chain of the polymer chain, and in the polymer having two or more dienophile structures, all the dienophile structures may be bonded to the main chain of the polymer chain.

In the case where a conjugated diene structure or a dienophile structure is bonded to a main chain of a polymer chain, the conjugated diene structure or the dienophile structure may be bonded to the main chain of the polymer chain either directly or with another group therebetween.

It is also preferable that the polymer used for a bond between polymer chains in the resin according to the exemplary embodiment not have two or more of at least one of the conjugated diene structure or the dienophile structure at a terminal of the polymer chain.

For example, in the case of the reaction (iv) above, the polymer having both a conjugated diene structure and a dienophile structure in a single polymer chain may be any of polymers of the following forms.

(iv-1) A polymer in which neither a conjugated diene structure nor a dienophile structure is bonded to at least one of one terminal or the other terminal of a polymer chain

(iv-2) A polymer in which one of a conjugated diene structure and a dienophile structure is bonded to one terminal of a polymer chain, none of the conjugated diene structure and the dienophile structure is bonded to the other terminal of the polymer chain, and one or more of the other of the conjugated diene structure and the dienophile structure is bonded to the main chain of the polymer chain

(iv-3) A polymer in which neither a conjugated diene structure nor a dienophile structure is bonded to a terminal of a polymer chain

It is also preferable that the polymer used for a bond between polymer chains in the resin according to the exemplary embodiment have one or more of at least one of the conjugated diene structure or the dienophile structure in a main chain of the polymer chain.

For example, in the case of the reaction (iv) above, in the polymer having both a conjugated diene structure and a dienophile structure in a single polymer chain, any one or more of the conjugated diene structure and the dienophile structure may be bonded to the main chain of the polymer chain, and all the conjugated diene structure and the dienophile structure may be bonded to the main chain of the polymer chain.

For example, in the case of the reaction (iv) above, the polymer having both a conjugated diene structure and a dienophile structure in a single polymer chain may be a polymer of the following form.

(iv-4) A polymer in which one dienophile structure is bonded to each terminal of the polymer chain and at least one conjugated diene structure is bonded to the main chain of the polymer chain

In the case where a conjugated diene structure or a dienophile structure is bonded to a main chain of a polymer chain, the conjugated diene structure or the dienophile structure may be bonded to the main chain of the polymer chain either directly or with another group therebetween.

It is also preferable that the bond between polymer chains in the resin according to the exemplary embodiment not be a bond only between terminals of polymer chains.

That is, it is also preferable that the bond between polymer chains in the resin according to the exemplary embodiment have at least one of a bond between one of a conjugated diene structure and a dienophile structure bonded to a terminal of one polymer and the other of the conjugated diene structure and the dienophile structure bonded to the main chain of another polymer, or a bond between one of a conjugated diene structure and a dienophile structure bonded to the main chain of one polymer and the other of the conjugated diene structure and the dienophile structure bonded to the main chain of another polymer.

When the bond is not a bond only between terminals of polymer chains, three-dimensional cross-linking between polymer chains occurs, and, for example, solvent resistance of the resin is likely to improve.

Even when the bond is not a bond only between terminals of polymer chains, also in the case of a bond between polymer chains each having two reactive groups, similarly, three-dimensional cross-linking does not occur, and a straight-chain polymer is produced. Therefore, it is also preferable that the bond between polymer chains in the resin according to the exemplary embodiment not be a bond formed by reaction only between polymers each having two reaction sites (reactive groups) in the polymer chain (for example, between polymers each having reactive groups at terminals thereof).

The bond between polymer chains in the resin according to the exemplary embodiment may include a bond between terminals of polymer chains.

Any structure that causes Diels-Alder reaction can be applied to the conjugated diene structure. Structures having an anthracene skeleton, a furan skeleton, or a styryl skeleton are suitably used in view of their high reactivity.

Examples of the conjugated diene structure include groups derived from dihydroxyanthracene, anthracenedicarboxylic acid, 9-(4-hydroxybenzyl)-10-(4-hydroxyphenyl)anthracene, 9-(3-methyl-4-hydroxybenzyl)-10-(3-methyl-4-hydroxyphenyl)anthracene, 9-(4-hydroxyphenyl)anthracene, 9-(3-methyl-4-hydroxyphenyl)anthracene, 9,10-bis(4-hydroxyphenyl)anthracene, 9,10-bis(3-methyl-4-hydroxyphenyl)anthracene, hydroxyanthracene, 1,4-dihydroxyanthracene, anthracenecarboxylic acid, 2-(2-furanylmethyl)hydroquinone, furandicarboxylic acid, isoeugenol, and the like.

In the exemplary embodiment, the conjugated diene structure or the conjugated diene group (hereinafter may also be simply referred to as a "conjugated diene") preferably includes at least one of structures represented by formulae (DE1) and (DE2) below.

[Formula 3]

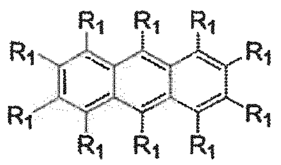

(DE1)

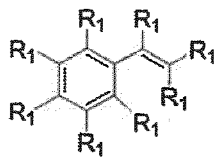

(DE2)

In the formulae (DE1) and (DE2):

each $R_1$ is independently a single bond, a bonding group to another skeleton, a hydrogen atom, an aliphatic hydrocarbon group having 1 to 12 carbon atoms, an aromatic hydrocarbon group having 6 to 12 ring carbon atoms, or an alkoxy group having 1 to 10 carbon atoms;
one or two of $R_1$ are a single bond or a linking group to another skeleton; and
$R_1$ serving as the linking group is a group which contains at least one atom selected from the group consisting of a carbon atom, an oxygen atom, a nitrogen atom, a sulfur atom, a silicon atom, a phosphorus atom, and a boron atom and in which bonding forms between atoms constituting the linking group are each a covalent bond.

A plurality of $R_1$ may be linked together to form a cyclic structure (including an aromatic ring and a heterocycle).

In the formulae (DE1) and (DE2), examples of the aliphatic hydrocarbon group having 1 to 12 carbon atoms and represented by $R_1$ include saturated or unsaturated aliphatic hydrocarbon groups (an alkyl group, an alkenyl group, and an alkynyl group).

Examples of the alkyl group serving as the aliphatic hydrocarbon group having 1 to 12 carbon atoms include a methyl group, an ethyl group, a n-propyl group, a n-butyl group, a n-pentyl group, a n-hexyl group, an isopropyl group, an isobutyl group, a sec-butyl group, a tert-butyl group, an isopentyl group, a neopentyl group, a tert-pentyl group, an isohexyl group, a sec-hexyl group, a tert-hexyl group, a heptyl group, an octyl group, a nonyl group, a decyl group, an undecyl group, and a dodecyl group.

Examples of the alkenyl group serving as the aliphatic hydrocarbon group having 1 to 12 carbon atoms include a vinyl group (ethenyl group), a 1-propenyl group, a 2-propenyl group, a 2-butenyl group, a 1-butenyl group, a 1-hexenyl group, an octenyl group, a decenyl group, and a dodecenyl group.

Examples of the alkynyl group serving as the aliphatic hydrocarbon group having 1 to 12 carbon atoms include an ethynyl group, a 1-propynyl group, a 2-propynyl group, a 1-butynyl group, a 3-hexynyl group, an octynyl group, a decynyl group, and a dodecynyl group.

In the formulae (DE1) and (DE2), examples of the aromatic hydrocarbon group having 6 to 12 ring carbon atoms and represented by $R_1$ include a phenyl group, a naphthyl group, and a biphenyl group.

In the formulae (DE1) and (DE2), examples of the alkoxy group having 1 to 10 carbon atoms and represented by $R_1$ include a methoxy group, an ethoxy group, a n-propoxy group, a n-butoxy group, a n-pentyloxy group, a n-hexyloxy group, a n-heptyloxy group, a n-octyloxy group, a n-nonyloxy group, a n-decyloxy group, an isopropoxy group, an isobutoxy group, a sec-butoxy group, a tert-butoxy group, an isopentyloxy group, a neopentyloxy group, a tert-pentyloxy group, an isohexyloxy group, a sec-hexyloxy group, a terthexyloxy group, an isoheptyloxy group, a sec-heptyloxy group, a tertheptyloxy group, an isooctyloxy group, a sec-octyloxy group, a tert-octyloxy group, an isononyloxy group, a sec-nonyloxy group, a tert-nonyloxy group, an isodecyloxy group, a sec-decyloxy group, and a tert-decyloxy group.

In the formulae (DE1) and (DE2), $R_1$ serving as the linking group may be a divalent group that contains at least one atom selected from the group consisting of a carbon atom, an oxygen atom, a nitrogen atom, a sulfur atom, a silicon atom, a phosphorus atom, and a boron atom. The structure of this divalent group may include a divalent aromatic hydrocarbon group. Examples of the divalent aromatic hydrocarbon group include a phenylene group (-Ph-), a naphthylene group, and a biphenylene. Examples of the divalent group that includes a phenylene group include -Ph-O-, -Ph-(C=O)-O-, -Ph-O-(C=O)-O-, - Ph-O-(C=O)-, and -Ph-S-.

In the exemplary embodiment, the conjugated diene more preferably includes at least one of structures represented by formulae (DE3) to (DE8) below.

[Formula 4]

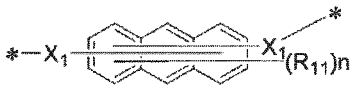

(DE3)

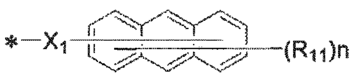

(DE4)

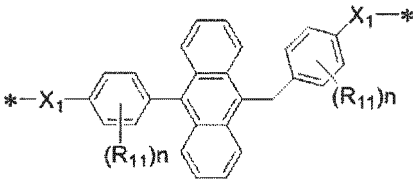

(DE5)

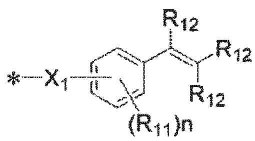

(DE6)

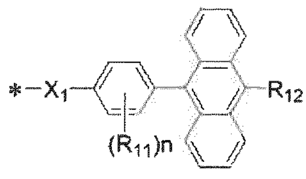

(DE7)

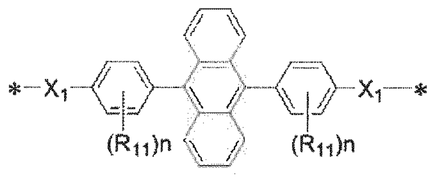

(DE8)

In the formulae (DE3) to (DE8):

each $X_1$ is independently -O-, -(C=O)-O-, -O-(C=O)-O-, -O-(C=O)-, or - S-;
each $R_{11}$ is independently a hydrogen atom, an aliphatic hydrocarbon group having 1 to 12 carbon atoms, an aromatic hydrocarbon group having 6 to 12 ring carbon atoms, or an alkoxy group having 1 to 10 carbon atoms; and a plurality of $R_{11}$ may be linked together to form a cyclic structure (including an aromatic ring and a heterocycle).

Each $R_{12}$ is independently a hydrogen atom, an aliphatic hydrocarbon group having 1 to 12 carbon atoms, or an aromatic hydrocarbon group having 6 to 12 carbon atoms; and

n represents 0 or a natural number whose upper limit is the number of substitutable positions.
* represents a bonding position.

In the exemplary embodiment, the conjugated diene particularly preferably includes at least one of structures represented by formulae (DE9) to (DE16) below.

[Formula 5]

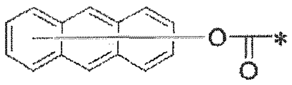

(DE9)

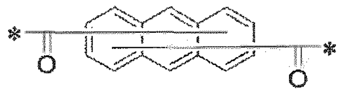

(DE10)

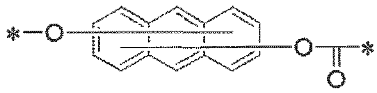

(DE11)

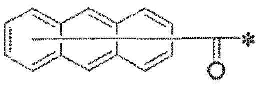

(DE12)

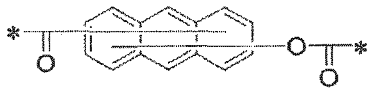

(DE13)

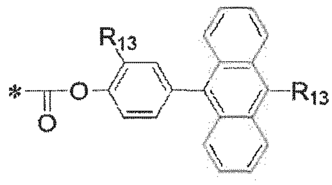

(DE14)

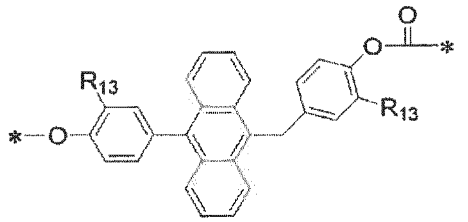

(DE15)

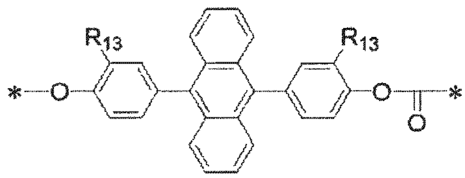

(DE16)

In the formulae (DE9) to (DE16),
each $R_{13}$ is independently a hydrogen atom, an aliphatic hydrocarbon group having 1 to 12 carbon atoms, or an aromatic hydrocarbon group having 6 to 12 carbon atoms.

In the formula (DE14), each $R_{13}$ is preferably independently an aliphatic hydrocarbon group having 1 to 12 carbon atoms, or an aromatic hydrocarbon group having 6 to 12 carbon atoms.
* represents a bonding position.

In the exemplary embodiment, the conjugated diene preferably includes at least one of structures represented by formulae (DE17) and (DE18) below.

[Formula 6]

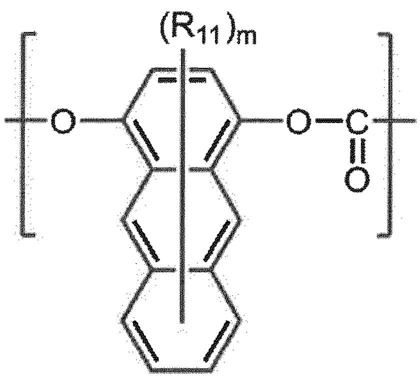

(DE17)

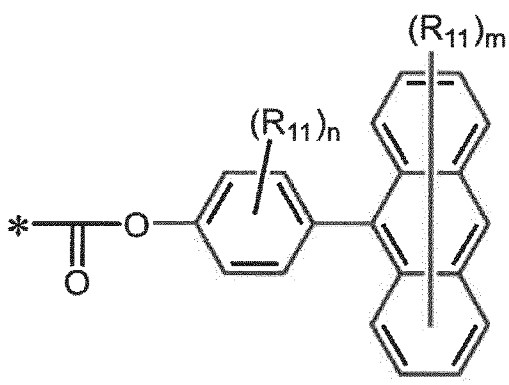

(DE18)

In the formulae (DE17) and (DE18), each $R_{11}$ is independently a hydrogen atom, a halogen atom, an aliphatic hydrocarbon group having 1 to 12 carbon atoms, an aromatic hydrocarbon group having 6 to 12 ring carbon atoms, or an alkoxy group having 1 to 10 carbon atoms; and a plurality of $R_{11}$ may be linked together to form a cyclic structure (including an aromatic ring and a heterocycle).

In the formula (DE17), m represents an integer in a range from 0 to 8.

In the formula (DE18), n represents an integer in a range from 0 to 4, and m represents an integer in a range from 0 to 9.

* represents a bonding position.

In the exemplary embodiment, the conjugated diene preferably includes at least one structure represented by a formula (DE19) below.

[Formula 7]

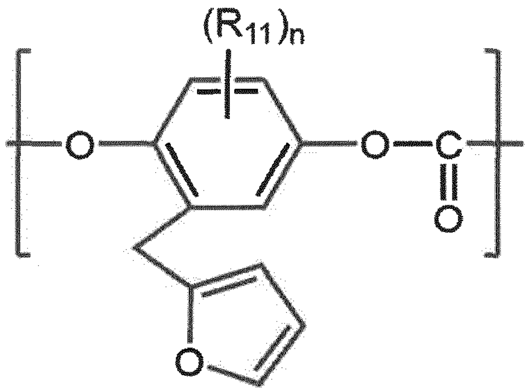

(DE19)

In the formula (DE19):

each $R_{11}$ is independently a hydrogen atom, a halogen atom, an aliphatic hydrocarbon group having 1 to 12 carbon atoms, an aromatic hydrocarbon group having 6 to 12 ring carbon atoms, or an alkoxy group having 1 to 10 carbon atoms; and
a plurality of $R_{11}$ may be linked together to form a cyclic structure (including an aromatic ring and a heterocycle).
n represents an integer in a range from 0 to 3.
* represents a bonding position.

Any structure that causes Diels-Alder reaction can be applied to the dienophile structure. Structures having a maleimide skeleton are suitably used in view of their high reactivity.

Examples of the dienophile structure include bismaleimides such as 4,4'-diphenylmethane bismaleimide, m-phenylene bismaleimide, 2,2-bis[4-(4-maleimidophenoxy)phenyl]propane, bisphenol A diphenyl ether bismaleimide, 3,3'-dimethyl-5,5'-diethyl-4,4'-diphenylmethane bismaleimide, 4-methyl-1,3-phenylene bismaleimide, 1,6-bismaleimide-(2,2,4-trimethyl)hexane, 4,4'-diphenylether bismaleimide, 4,4'-diphenylsulfone bismaleimide, 1,3-bis(3-maleimidophenoxy)benzene, 1,3-bis(4-maleimidophenoxy)benzene, diphenylmethane-4,4'-bismaleimide polymers having 4,4'-methylenedianiline, N,N'-(2,2'-diethyl-6,6'-dimethylenediphenylene)bismaleimide, N,N'-(4-methyl-m-phenylene)bismaleimide, N,N'-m-phenylenedimaleimide, N,N'-m-phenylenebismaleimide, and polyphenylmethanebismaleimide; and monomaleimides such as N-phenylmaleimide; and PCs having a structure in which a molecular terminal is terminated with a compound below.

[Formula 8]

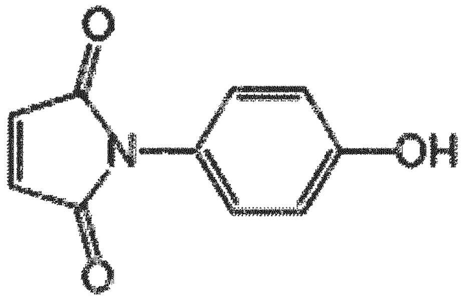

In the exemplary embodiment, the dienophile structure or the dienophile group (hereinafter may also be simply referred to as a "dienophile") preferably includes a structure represented by a formula (DP1) below.

[Formula 9]

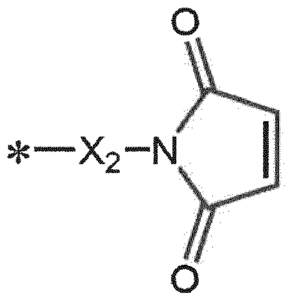

(DP1)

In the formula (DP1):

$X_2$ is a single bond or a linking group to another skeleton; and
$X_2$ serving as the linking group is a group which contains at least one atom selected from the group consisting of a carbon atom, an oxygen atom, a nitrogen atom, a sulfur atom, a silicon atom, a phosphorus atom, and a boron atom and in which bonding forms between atoms constituting the linking group are each a covalent bond.
* represents a bonding position.

In the exemplary embodiment, the dienophile is preferably included in at least one of structures represented by formulae (DP2) and (DP3) below.

[Formula 10]

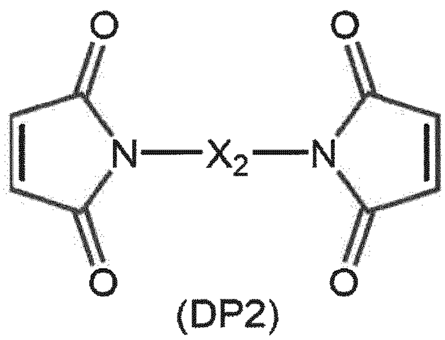

(DP2)

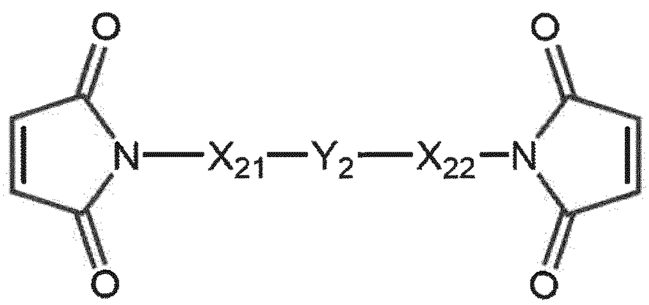

(DP3)

$X_2$ in the formula (DP2) and $X_{21}$ and $X_{22}$ in the formula (DP3) each independently represent the same as $X_2$ in the

formula (DP1), and

$Y_2$ in the formula (DP3) is a group including an aromatic polycarbonate skeleton or a polyarylate skeleton.

In the exemplary embodiment, the dienophile structure or the dienophile group particularly preferably includes a structure represented by a formula (DP4) below. In the formula (DP4) below, * represents a bonding position.

[Formula 11]

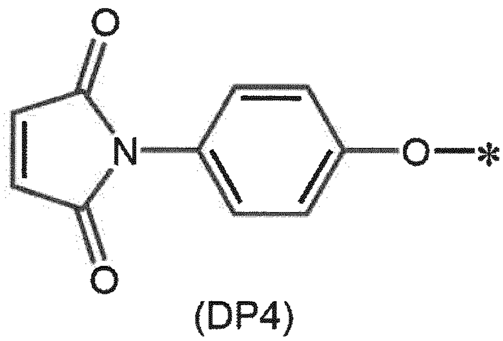

(DP4)

In the exemplary embodiment, a ratio between the conjugated diene and the dienophile can be appropriately determined according to the desired physical properties and intended use. A molar ratio of the conjugated diene to the dienophile (conjugated diene/dienophile) is preferably in a range from 0.01 to 100, more preferably in a range from 0.1 to 10, and still more preferably in a range from 0.2 to 5. If the molar ratio of the conjugated diene to the dienophile is less than 0.01 or exceeds 100, cross-linking does not proceed sufficiently, and the improvements in solvent resistance and mechanical physical properties may be insufficient.

The resin according to the exemplary embodiment preferably includes at least one of structures represented by formulae (UN1) and (UN2) below.

[Formula 12]

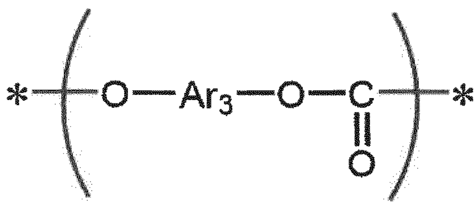

(UN1)

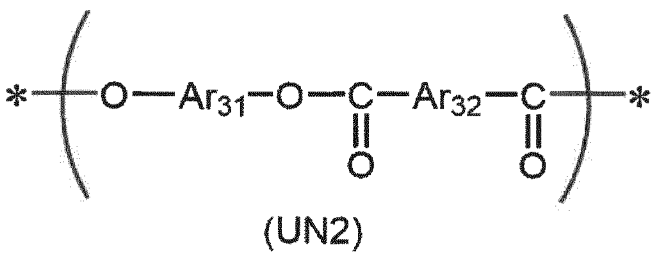

(UN2)

In the formulae (UN1) and (UN2), $Ar_3$, $Ar_{31}$, and $Ar_{32}$ are each independently a group represented by a formula (UN11) below.

* represents a bonding position.

[Formula 13]

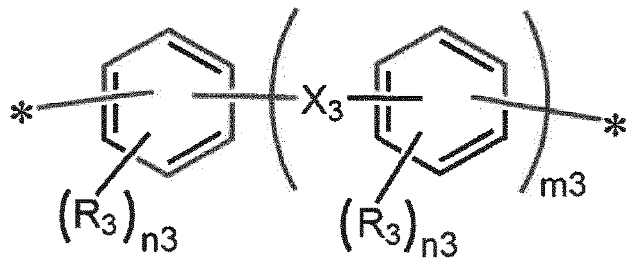

(UN11)

In the formula (UN11):

m3 is 0, 1, or 2;
n3 is 4;
a plurality of $R_3$ are each independently a hydrogen atom, a halogen atom, an alkyl having 1 to 10 carbon atoms, an aryl having 6 to 12 ring carbon atoms, or a fluorinated alkyl having 1 to 10 carbon atoms;
each $X_3$ is independently a group constituted by one or two or more selected from the group consisting of a single bond, $-C(-R_{31})_2-$, -O-, -S-, -SO-, $-SO_2-$, $-N(-R_{32})-$, $-P(-R_{33})-$, $-P=O(-R_{34})-$, a carbonyl, an ester, an amide, an alkylene having 2 to 20 carbon atoms, an alkylidene having 2 to 20 carbon atoms, a cycloalkylene having 3 to 20 ring carbon atoms, a cycloalkylidene having 3 to 20 ring carbon atoms, an arylene having 6 to 20 ring carbon atoms, a bicycloalkanediyl having 4 to 20 ring carbon atoms, a tricycloalkanediyl having 5 to 20 ring carbon atoms, a bicycloalkylidene having 4 to 20 ring carbon atoms, and a tricycloalkylidene having 5 to 20 ring carbon atoms; and
$R_{31}$ to $R_{34}$ are each independently a hydrogen atom, a halogen atom, an alkyl having 1 to 10 carbon atoms, an aryl having 6 to 12 ring carbon atoms, or a fluorinated alkyl having 1 to 10 carbon atoms.
* represents a bonding position.

In the formula (UN11), examples of the halogen atom represented by $R_3$ include a fluorine atom, a chlorine atom, a bromine atom, and an iodine atom.

In the formula (UN11), examples of the alkyl having 1 to 10 carbon atoms and represented by $R_3$ include methyl, ethyl, n-propyl, n-butyl, n-pentyl, n-hexyl, n-heptyl, n-octyl, n-nonyl, n-decyl, isopropyl, isobutyl, sec-butyl, tert-butyl, isopentyl, neopentyl, tert-pentyl, isohexyl, sec-hexyl, tert-hexyl, isoheptyl, sec-heptyl, tert-heptyl, isooctyl, sec-octyl, tert-octyl, isononyl, secnonyl, tert-nonyl, isodecyl, sec-decyl, and tert-decyl groups.

In the formula (UN11), examples of the aryl having 6 to 12 ring carbon atoms and represented by $R_3$ include phenyl, naphthyl, and biphenyl groups.

In the formula (UN11), examples of the fluorinated alkyl having 1 to 10 carbon atoms and represented by $R_3$ include groups of alkyl mentioned as examples of the alkyl having 1 to 10 carbon atoms and represented by $R_3$ in the formula (UN11), in which at least one hydrogen atom bonded to a carbon atom is substituted with a fluorine atom.

In the formula (UN11), the alkylene having 2 to 20 carbon atoms and represented by $X_3$ may be a linear or branched alkylene group, and examples thereof include ethylene, propylene, isopropylene, butylene, hexylene, octylene, and decylene groups.

In the formula (UN11), examples of the alkylidene having 2 to 20 carbon atoms and represented by $X_3$ include ethylidene, propylidene, butylidene, hexylidene, octylidene, decylidene, pentadecylidene, and icosylidene groups.

In the formula (UN11), the cycloalkylene having 3 to 20 carbon atoms and represented by $X_3$ may be a linear or branched alkylene group, and examples thereof include cyclopropylene, cyclobutylene, cyclohexylene, cyclooctylene, cyclodecylene, cyclopentadecylene, and cycloicosylene groups.

In the formula (UN11), examples of the cycloalkylidene having 3 to 20 carbon atoms and represented by $X_3$ include cyclopropylidene, cyclobutylidene, cyclohexylidene, cyclooctylidene, cyclodecylidene, cyclododecylidene, cyclopentadecylidene, and cycloicosylidene groups.

In the formula (UN11), examples of the arylene having 6 to 20 ring carbon atoms and represented by $X_3$ include phenylene, naphthylene, and biphenylene groups.

In the formula (UN11), examples of the bicycloalkanediyl having 4 to 20 ring carbon atoms and represented by $X_3$ include bicyclic products of the cycloalkylene mentioned above, and examples of the tricycloalkanediyl having 5 to 20 ring carbon atoms include tricyclic products of the cycloalkylene mentioned above, such as tricyclodecanediyl and adamantanediyl.

In the formula (UN11), examples of the bicycloalkylidene having 4 to 20 ring carbon atoms and represented

by $X_3$ include bicyclic products of the cycloalkylidene mentioned above, and examples of the tricycloalkylidene having 5 to 20 ring carbon atoms include tricyclic products of the cycloalkylidene mentioned above, such as adamantylidene and tricyclodecylidene.

In the formula (UN11), examples of the halogen atom, the alkyl having 1 to 10 carbon atoms, the aryl having 6 to 12 ring carbon atoms, and the fluorinated alkyl having 1 to 10 carbon atoms, the halogen atom, alkyl, aryl, and fluorinated alkyl being represented by $R_{31}$ to $R_{34}$ of $X_3$, include the same groups as the groups represented by $R_3$ in the formula (UN11).

Resin Precursor Composition

A resin precursor composition according to the exemplary embodiment is one capable of producing the resin according to the exemplary embodiment by cross-linking reaction.

That is, the resin precursor composition according to the exemplary embodiment includes, in combination, a polymer having, in the structure thereof, at least one of a conjugated diene or dienophile having Diels-Alder reactivity and a cross-linking agent or polymer having at least one group of the corresponding partner.

In the resin precursor composition according to the exemplary embodiment, the conjugated diene, the dienophile, and the ratio between the conjugated diene and the dienophile are the same as those of the resin according to the exemplary embodiment.

The concentrations of the conjugated diene and the dienophile in the resin precursor composition according to the exemplary embodiment can be appropriately determined according to the desired physical properties and intended use. A functional group concentration may be calculated based on the total amount of the composition having a Diels-Alder reactive group (at least one of a conjugated diene or a dienophile) using, of the total number of moles of the conjugated diene and the total number of moles of the dienophile group, a smaller number of moles. In this case, the functional group concentration is preferably in a range from 0.01 mmol/g to 10 mmol/g, more preferably in a range from 0.03 mmol/g to 7 mmol/g, still more preferably in a range from 0.1 mmol/g to 5 mmol/g, and particularly preferably in a range from 0.3 mmol/g to 5 mmol/g. If the functional group concentration is less than 0.01 mmol/g, the cross-linking density is low, and the improvements in solvent resistance and mechanical physical properties may be insufficient. A functional group concentration exceeding 10 mmol/g is not preferred because the resulting cross-linked product has insufficient toughness due to an excessively high cross-linking density, unreacted functional groups are likely to remain, and cross-linking reaction and other side reactions proceed over time, and thus physical properties of the material tend to change or deteriorate.

The resin precursor composition according to the exemplary embodiment preferably contains, for example, at least one of components (b1) to (b4) below.

(b1) A polymer having two or more conjugated diene structures in a polymer chain and a compound having di- or higher-functional dienophile groups

(b2) A polymer having two or more dienophile structures in a polymer chain and a compound having di- or higher-functional conjugated diene groups

(b3) A polymer having two or more conjugated diene structures in a polymer chain and a polymer having two or more dienophile structures in a polymer chain

(b4) A polymer which has both a conjugated diene structure and a dienophile structure in a single polymer chain and in which average numbers of the conjugated diene structures and the dienophile structures per one polymer chain are each 1 or more

It is also preferable that the resin precursor composition according to the exemplary embodiment contain, for example, a component (b1-1) below.

(b1-1)

A polymer having two or more conjugated diene structures in a main chain of a polymer chain and a compound having di- or higher-functional dienophile groups

It is also preferable that the resin precursor composition according to the exemplary embodiment contain, for example, least one of components (b3-1) to (b3-8) below.

(b3-1)

A polymer having two dienophile structures, the polymer having one of the dienophile structures at one terminal of a polymer chain and having the other dienophile structure at the other terminal of the polymer chain, and a polymer having more than two conjugated diene structures in a polymer chain

(b3-2)

A polymer having two dienophile structures, the polymer having one of the dienophile structures at one terminal of

a polymer chain and having the other dienophile structure at the other terminal of the polymer chain, and a polymer having more than two conjugated diene structures in a polymer chain, the polymer having one of the conjugated diene structures at one terminal of the polymer chain, having another one of the conjugated diene structures at the other terminal of the polymer chain, and also having one or more of the conjugated diene structures in a main chain

(b3-3)

A polymer having two dienophile structures, the polymer having one of the dienophile structures at one terminal of a polymer chain and having the other dienophile structure at the other terminal of the polymer chain, and a polymer having more than two conjugated diene structures in a polymer chain, the polymer having one of the conjugated diene structures at one terminal of the polymer chain, having none of the conjugated diene structures at the other terminal of the polymer chain, and having two or more of the conjugated diene structures in a main chain

(b3-4)

A polymer having two dienophile structures, the polymer having one of the dienophile structures at one terminal of a polymer chain and having the other dienophile structure at the other terminal of the polymer chain, and a polymer having no conjugated diene structure at each terminal of a polymer chain and having more than two conjugated diene structures in the main chain

(b3-5)

A polymer having two conjugated diene structures, the polymer having one of the conjugated diene structures at one terminal of a polymer chain and having the other conjugated diene structure at the other terminal of the polymer chain, and a polymer having more than two dienophile structures in a polymer chain

(b3-6)

A polymer having two conjugated diene structures, the polymer having one of the conjugated diene structures at one terminal of a polymer chain and having the other conjugated diene structure at the other terminal of the polymer chain, and a polymer having more than two dienophile structures in a polymer chain, the polymer having one of the dienophile structures at one terminal of the polymer chain, having another one of the dienophile structures at the other terminal of the polymer chain, and also having one or more of the dienophile structures in a main chain

(b3-7)

A polymer having two conjugated diene structures, the polymer having one of the conjugated diene structures at one terminal of a polymer chain and having the other conjugated diene structure at the other terminal of the polymer chain, and a polymer having more than two dienophile structures in a polymer chain, the polymer having one of the dienophile structures at one terminal of the polymer chain, having none of the dienophile structures at the other terminal of the polymer chain, and having two or more of the dienophile structures in a main chain

(b3-8)

A polymer having two conjugated diene structures, the polymer having one of the conjugated diene structures at one terminal of a polymer chain and having the other conjugated diene structure at the other terminal of the polymer chain, and a polymer having no dienophile structure at each terminal of a polymer chain and having more than two dienophile structures in a main chain

It is also preferable that the polymer contained in the resin precursor composition according to the exemplary embodiment not have two or more of at least one of the conjugated diene structures or the dienophile structures at a terminal of the polymer chain.

For example, in the case of the composition containing the component (b1) above, in the polymer having two or more conjugated diene structures, a conjugated diene structure need not necessarily be bonded to at least one of one terminal or the other terminal of the polymer chain. A conjugated diene structure need not necessarily be bonded to the terminals of the polymer chain.

For example, in the case of the composition containing the component (b2) above, in the polymer having two or more dienophile structures, a dienophile structure need not necessarily be bonded to at least one of one terminal or the other terminal of the polymer chain. A dienophile structure need not necessarily be bonded to the terminals of the polymer chain.

For example, in the case of the composition containing the component (b3) above, in the polymer having two or more conjugated diene structures, a conjugated diene structure need not necessarily be bonded to at least one of one terminal or the other terminal of the polymer chain, and in the polymer having two or more dienophile structures, a dienophile structure need not necessarily be bonded to at least one of one terminal or the other terminal of the polymer chain. Neither a conjugated diene structure nor a dienophile structure may be bonded to the terminals of the polymer chain.

It is also preferable that the polymer contained in the resin precursor composition according to the exemplary embodiment have one or more of at least one of the conjugated diene structures or the dienophile structures in a main chain of the polymer chain.

For example, in the case of the composition containing the component (b1) above, in the polymer having two or more conjugated diene structures, one or more conjugated diene structures may be bonded to the main chain of the

polymer chain, and all the conjugated diene structures may be bonded to the main chain of the polymer chain.

For example, in the case of the composition containing the component (b2) above, in the polymer having two or more dienophile structures, one or more dienophile structures may be bonded to the main chain of the polymer chain, and all the dienophile structures may be bonded to the main chain of the polymer chain.

For example, in the case of the composition containing the component (b3) above, in the polymer having two or more conjugated diene structures, one or more conjugated diene structures may be bonded to the main chain of the polymer chain, and in the polymer having two or more dienophile structures, one or more dienophile structures may be bonded to the main chain of the polymer chain.

For example, in the case of the composition containing the component (b3) above, in the polymer having two or more conjugated diene structures, all the conjugated diene structures may be bonded to the main chain of the polymer chain, and in the polymer having two or more dienophile structures, all the dienophile structures may be bonded to the main chain of the polymer chain.

In the case where a conjugated diene structure or a dienophile structure is bonded to a main chain of a polymer chain, the conjugated diene structure or the dienophile structure may be bonded to the main chain of the polymer chain either directly or with another group therebetween.

It is also preferable that the polymer contained in the resin precursor composition according to the exemplary embodiment not have two or more of at least one of the conjugated diene structure or the dienophile structure at a terminal of the polymer chain.

For example, in the case of the composition containing the component (b4) above, the polymer having both a conjugated diene structure and a dienophile structure in a single polymer chain may be any of polymers of the following forms.

(b4-1) A polymer in which neither a conjugated diene structure nor a dienophile structure is bonded to at least one of one terminal or the other terminal of a polymer chain

(b4-2) A polymer in which one of a conjugated diene structure and a dienophile structure is bonded to one terminal of a polymer chain, none of the conjugated diene structure and the dienophile structure is bonded to the other terminal of the polymer chain, and one or more of the other of the conjugated diene structure and the dienophile structure is bonded to the main chain of the polymer chain

(b4-3) A polymer in which neither a conjugated diene structure nor a dienophile structure is bonded to a terminal of a polymer chain

It is also preferable that the polymer contained in the resin precursor composition according to the exemplary embodiment have one or more of at least one of the conjugated diene structure or the dienophile structure in a main chain of the polymer chain.

For example, in the case of the composition containing the component (b4) above, in the polymer having both a conjugated diene structure and a dienophile structure in a single polymer chain, any one or more of the conjugated diene structure and the dienophile structure may be bonded to the main chain of the polymer chain, and all the conjugated diene structure and the dienophile structure may be bonded to the main chain of the polymer chain.

For example, in the case of the composition containing the component (b4) above, the polymer having both a conjugated diene structure and a dienophile structure in a single polymer chain may be a polymer of the following form

(b4-4) A polymer in which one dienophile structure is bonded to each terminal of the polymer chain and at least one conjugated diene structure is bonded to the main chain of the polymer chain

In the case where a conjugated diene structure or a dienophile structure is bonded to a main chain of a polymer chain, the conjugated diene structure or the dienophile structure may be bonded to the main chain of the polymer chain either directly or with another group therebetween.

It is also preferable that the bond between polymer chains in the resin formed using the resin precursor composition according to the exemplary embodiment not be a bond only between terminals of polymer chains.

That is, it is also preferable that the bond between polymer chains in the resin formed using the resin precursor composition according to the exemplary embodiment have at least one of a bond between one of a conjugated diene structure and a dienophile structure bonded to a terminal of one polymer and the other of the conjugated diene structure and the dienophile structure bonded to the main chain of another polymer, or a bond between one of a conjugated diene structure and a dienophile structure bonded to the main chain of one polymer and the other of the conjugated diene structure and the dienophile structure bonded to the main chain of another polymer.

When the bond is not a bond only between terminals of polymer chains, three-dimensional cross-linking between polymer chains occurs, and, for example, solvent resistance of the resin is likely to improve.

Even when the bond is not a bond only between terminals of polymer chains, also in the case of a bond between polymer chains each having two reactive groups, similarly, three-dimensional cross-linking does not occur, and a straight-chain polymer is produced. Therefore, preferably, the bond between polymer chains in the resin formed using the resin

precursor composition according to the exemplary embodiment is not a bond formed by reaction only between polymers each having two reaction sites (reactive groups) in the polymer chain (for example, between polymers each having reactive groups at terminals thereof).

The bond between polymer chains in the resin formed using the resin precursor composition according to the exemplary embodiment may include a bond between terminals of polymer chains.

The details are described below by taking an example of, among the components described above, a polymer (polycarbonate polymer) having two or more conjugated diene structures in a polymer chain.

A first exemplary embodiment of a polycarbonate polymer (hereinafter, also referred to as a PC polymer) according to the exemplary embodiment is a PC polymer having a repeating unit constituted by a repeating unit A represented by a formula (1) below alone or has at least a repeating unit selected from the repeating unit A represented by the formula (1) below and a repeating unit B represented by a formula (2) below, and is obtained by using, as a raw material, at least one of a bischloroformate oligomer represented by a formula (1A) below, a bischloroformate oligomer represented by a formula (2A) below, or a bischloroformate oligomer represented by a formula (2C) below.

[Formula 14]

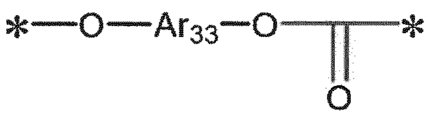

(1)

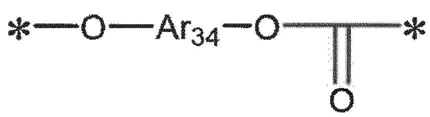

(2)

[Formula 15]

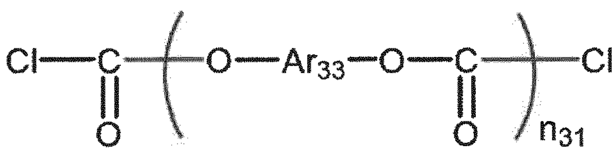

(1A)

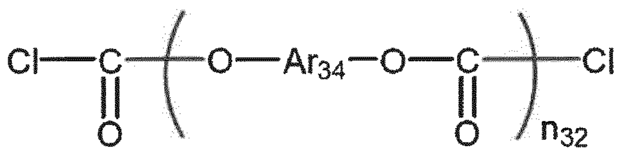

(2A)

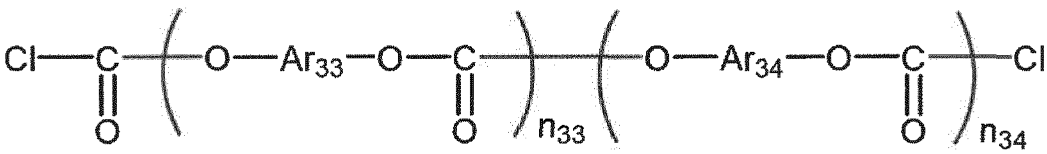

(2C)

In the formulae (1) and (1A), $Ar_{33}$ is at least one group selected from the group consisting of the groups represented by the formulae (DE3), (DE5), and (DE8) above, and $n_{31}$ represents an average number of repeating units. The average number of repeating units $n_{31}$ is in a range from 1.0 to 10.

In the formulae (2) and (2A), $Ar_{34}$ is a group represented by the formula (UN11) above, and $n_{32}$ represents an average number of repeating units. The average number of repeating units $n_{32}$ is in a range from 1.0 to 10.

In the formula (2C), $Ar_{33}$ is at least one group selected from the group consisting of the groups represented by the formulae (DE3), (DE5), and (DE8) above, and $Ar_{34}$ is a group represented by the formula (UN11) above. In addition, $n_{33}$ and $n_{34}$ each represent an average number of repeating units. The total of the average numbers of repeating units $n_{33}$ and $n_{34}$ is in a range from 1.0 to 10.

* represents a bonding position.

However, $Ar_{33}$ and $Ar_{34}$ are different from each other. In the formula (2C), the respective repeating units do not necessarily have to be successive.

The method for calculating the average number of repeating units may be a method described in Examples below.

Such a PC polymer has the repeating unit A that includes, for example, the group represented by the formula (DE3) having a conjugated diene structure and thus is a polymer having two or more conjugated diene structures in a polymer chain.

The PC polymer having a repeating unit constituted by the repeating unit A represented by the formula (1) alone and the PC polymer having the repeating unit A represented by the formula (1) and the repeating unit B represented by the formula (2) are each preferably a PC polymer represented by a formula (100) below.

[Formula 16]

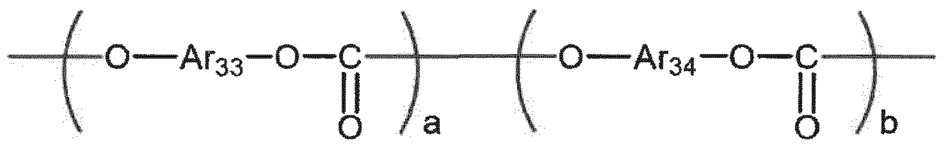

(100)

In the formula (100), a represents a molar copolymerization ratio in the repeating unit A, and b represents a molar copolymerization ratio in the repeating unit B.

a is $[Ar_{33}]/([Ar_{33}] + [Ar34])$, b is $[Ar_{34}]/([Ar_{33}] + [Ar_{34}])$, and the case where b is 0 is also included. [Arss] represents the number of moles of the repeating unit A that includes a group represented by $Ar_{33}$ in the PC polymer, and $[Ar_{34}]$ represents the number of moles of the repeating unit B that includes a group represented by $Ar_{34}$ in the PC polymer.

In the formula (100), the respective repeating units are not necessarily successive.

The PC polymer represented by the formula (100) may be any copolymer such as a block copolymer, an alternating copolymer, or a random copolymer.

A second exemplary embodiment of the PC polymer according to the exemplary embodiment is a PC polymer having, as a chain terminal of the PC polymer described above, any of the structures represented by the formulae (DE4), (DE6), (DE7), (DE9), (DE12), (DE14), (DP1), (DP3), and (DP4) above. In the above PC polymer (100), $Ar_{33}$ may not be included. In such a case, the chain terminal needs to include two or more of any of the above structures in total on average per molecule. However, when the PC polymer (100) does not have two or more conjugated diene structures at a terminal of the polymer chain, the PC polymer (100) preferably includes $Ar_{33}$. On the other hand, in the case of a skeleton including $Ar_{33}$, it is sufficient that the total of the number of diene structures included in $Ar_{33}$ and the number of diene structures included in the chain terminal is 2 or more per molecule. The number of diene structures included in $Ar_{33}$ is preferably 1 or more per molecule.

A chain terminal of the PC polymer according to the exemplary embodiment is preferably terminated with, besides any of the above specific terminal groups, a monovalent aromatic group or a monovalent fluorine-containing aliphatic group as long as the requirements of the present application are satisfied.

The monovalent aromatic group may be a group containing an aliphatic group.

The monovalent fluorine-containing aliphatic group may be a group containing an aromatic group.

At least one substituent selected from the group consisting of alkyl groups, halogen atoms, and aryl groups may be added to the monovalent aromatic group and the monovalent fluorine-containing aliphatic group. At least one substituent selected from the group consisting of alkyl groups, halogen atoms, and aryl groups may be further added to these substituents. When a plurality of substituents are present, these substituents may be bonded together to form a ring.

The monovalent aromatic group constituting a chain terminal preferably includes an aryl group having 6 to 12 ring carbon atoms. Examples of the aryl group include a phenyl group and a biphenyl group.

Examples of the substituent added to the aromatic group and the substituent added to an alkyl group added to the aromatic group include halogen atoms such as a fluorine atom, a chlorine atom, and a bromine atom. Examples of the substituent added to the aromatic group include alkyl groups having 1 to 20 carbon atoms. These alkyl groups may each be a group to which a halogen atom is added as described above or a group to which an aryl group is added.

The monovalent fluorine-containing aliphatic group constituting a chain terminal may be a monovalent group derived from a fluorine-containing alcohol.

The fluorine-containing alcohol is preferably an alcohol in which a plurality of fluoroalkyl chains having 2 to 6 carbon atoms are linked together with an ether bond therebetween and which has 13 to 19 fluorine atoms in total. When the total number of fluorine atoms is 13 or more, sufficient water repellency and oil repellency can be exhibited. On the other hand, when the total number of fluorine atoms is 19 or less, a decrease in reactivity during polymerization is restrained, and at least one of mechanical strength, surface hardness, heat resistance, or the like of the resulting PC polymer can be improved.

Furthermore, the monovalent fluorine-containing aliphatic group is also preferably a monovalent group derived

from a fluorine-containing alcohol having two or more ether bonds. The use of such a fluorine-containing alcohol enhances dispersibility of the PC polymer in a coating liquid composition, improves abrasion resistance in a molded body or an electrophotographic photoreceptor, and can maintain surface lubricating properties, water repellency, and oil repellency after abrasion.

Alternatively, the fluorine-containing alcohol is also preferably a fluorine-containing alcohol represented by a formula (30) or (31) below, a fluorine-containing alcohol such as 1,1,1,3,3,3-hexafluoro-2-propanol, or a fluorine-containing alcohol having an ether bond and represented by a formula (32), (33), or (34) below.

$H(CF_2)_{n1}CH_2OH \cdots$ (30)

$F(CF_2)_{m1}CH_2OH \cdots$ (31)

In the formula (30), n1 is an integer of 1 to 12, and in the formula (31), m1 is an integer of 1 to 12.

$F\text{-}(CF_2)_n{}^{31}\text{-}OCF_2CH_2\text{-}OH \cdots$ (32)

$F\text{-}(CF_2CF_2)_n{}^{32}\text{-}(CF_2CF_2O)_n{}^{33}\text{-}CF_2CH_2OH \cdots$ (33)

$CR_3\text{-}(CF_2)_n{}^{35}\text{-}O\text{-}(CF_2CF_2O)_n{}^{34}\text{-}CF_2CH_2OH \cdots$ (34)

In the formula (32), $n^{31}$ is an integer of 1 to 10, preferably an integer of 5 to 8.

In the formula (33), $n^{32}$ is an integer of 0 to 5, preferably an integer of 0 to 3. $n^{33}$ is an integer of 1 to 5, preferably an integer of 1 to 3.

In the formula (34), $n^{34}$ is an integer of 1 to 5, preferably an integer of 1 to 3. $n^{35}$ is an integer of 0 to 5, preferably an integer of 0 to 3. R is $CF_3$ or F.

In the exemplary embodiment, from the viewpoint of improving electrical characteristics and abrasion resistance, a chain terminal of the PC polymer is preferably terminated with a monovalent group derived from a phenol represented by a formula (35) below or a monovalent group derived from a fluorine-containing alcohol represented by a formula (36) below.

[Formula 17]

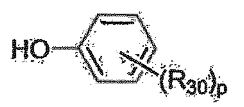

(35)

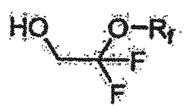

(36)

In the formula (35), $R_{30}$ represents an alkyl group having 1 to 10 carbon atoms or a fluoroalkyl group having 1 to 10 carbon atoms, and p is an integer of 1 to 3.

In the formula (36), $R_f$ represents a perfluoroalkyl group having 5 or more carbon atoms and 11 or more fluorine atoms or a perfluoroalkyloxy group represented by a formula (37) below.

[Formula 18]

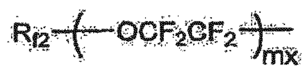

(37)

In the formula (37), $R_{f2}$ is a linear or branched perfluoroalkyl group having 1 to 6 carbon atoms, mx is an integer of 1 to 3.

One example of the method for producing a PC polymer according to the exemplary embodiment is a production method in which at least one of a bischloroformate oligomer compound represented by the formula (1A) or a bischloroformate oligomer compound represented by the formula (2A), an organic solvent, an alkaline aqueous solution, and a monomer such as a bisphenol compound are used, and an organic layer and an aqueous layer are mixed to conduct interfacial polycondensation reaction.

In the method for producing a PC polymer according to the exemplary embodiment, a monovalent carboxylic acid, a derivative thereof, or a monovalent phenol can be used as a terminal terminator for generating a chain terminal.

For example, p-tert-butyl-phenol, p-phenylphenol, p-cumylphenol, p-perfluorononylphenol, p-(perfluorononylphenyl)phenol, p-(perfluorohexyl)phenol, p-tert-perfluorobutylphenol, p-perfluorooctylphenol, 1-(p-hydroxybenzyl)perfluorodecane, p-[2-(1H,1H-perfluorotridodecyloxy)-1,1,1,3,3,3-hexafluoropropyl]phenol, 3,5-bis(perfluorohexyloxycarbonyl)phenol, perfluorododecyl p-hydroxybenzoate, p-(1H,1H-perfluorooctyloxy)phenol, 2H,2H,9H-perfluorononanoic acid, and the like are suitably used.

Alternatively, a fluorine-containing alcohol represented by the formula (30) or (31) or a monovalent fluorine-containing alcohol such as 1,1,1,3,3,3-hexafluoro-2-propanol is also suitably used as the terminal terminator for generating a chain terminal. It is also preferable to use a fluorine-containing alcohol having an ether bond and represented by the formula (32), (33), or (34) as the terminal terminator for generating a chain terminal.

Of these, a monovalent phenol represented by the formula (35) or a monovalent fluorine-containing alcohol represented by the formula (36) is preferably used as the terminal terminator for generating a chain terminal from the viewpoint of improving electrical characteristics and abrasion resistance.

As the monovalent phenol represented by the formula (35), for example, p-tert-butyl-phenol, p-perfluorononylphenol, p-perfluorohexylphenol, p-tert-perfluorobutylphenol, or p-perfluorooctylphenol is suitably used. That is, in the exemplary embodiment, a chain terminal is preferably terminated with a terminal terminator selected from the group consisting of p-tert-butyl-phenol, p-perfluorononylphenol, p-perfluorohexylphenol, p-tert-perfluorobutylphenol, and p-perfluorooctylphenol.

Examples of the fluorine-containing alcohol having an ether bond and represented by the formula (36) include compounds below. That is, it is also preferable that a chain terminal according to the exemplary embodiment be terminated with a terminal terminator selected from the following fluorine-containing alcohols.

[Formula 19]

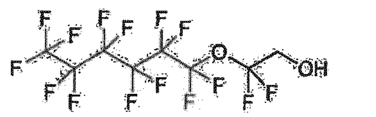
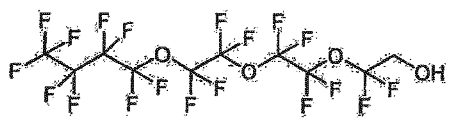

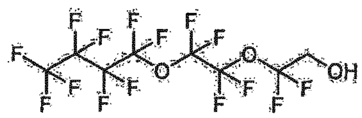
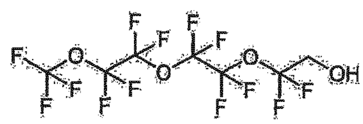

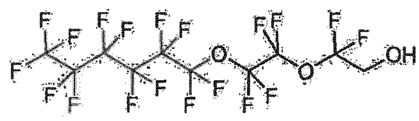

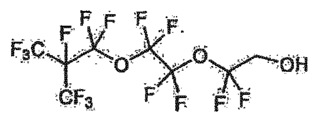
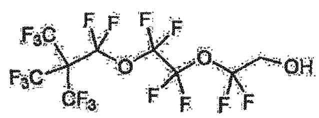

Regarding the proportion of the terminal terminator added, an appropriate proportion is different between the case where a Diels-Alder reactive functional group (conjugated diene or dienophile) is located at a terminal and the case where such a reactive functional group is located in the main chain or a side chain. In the case where a conjugated diene or a dienophile is included at a terminal, the concentration of a cross-linkable reactive group and the molecular weight change along with the fraction of the terminal. The proportion is preferably in a range from 0.1 mol% to 67 mol%, more preferably in a range from 0.5 mol% to 50 mol% in terms of mole percentage of the copolymer composition of diene or dienophile terminal groups relative to the total of repeating units of the main chain and terminals. When the proportion of the terminal terminator added is 67 mol% or less, a decrease in the mechanical strength can be inhibited.

When the proportion is 0.1 mol% or more, the effect of improving characteristics due to cross-linking can be obtained. In the case where a conjugated diene or a dienophile is not included, the proportion is preferably in a range from 0.05 mol% to 40 mol%, more preferably in a range from 0.1 mol% to 20 mol% in terms of mole percentage of the copolymer composition of chain terminals relative to the total of repeating units of the main chain and terminals. When the proportion of the terminal terminator added is 40 mol% or less, a decrease in the mechanical strength can be inhibited. When the proportion is 0.05 mol% or more, deterioration of moldability can be inhibited.

No particular limitation is imposed on a branching agent that can be used in the method for producing a PC polymer according to the exemplary embodiment, and specific examples of the branching agent include phloroglucin, pyrogallol, 4,6-dimethyl-2,4,6-tris(4-hydroxyphenyl)-2-heptene, 2,6-dimethyl-2,4,6-tris(4-hydroxypheny)-3-heptene, 2,4-dimethyl-2,4,6-tris(4-hydroxyphenyl)heptane, 1,3,5-tris(2-hydroxyphenyl)benzene, 1,3,5-tris(4-hydroxyphenyl)benzene, 1,1, 1-tris(4-hydroxyphenyl)ethane, tris(4-hydroxyphenyl)phenylmethane, 2,2-bis[4,4-bis(4-hydroxyphenyl)cyclohexyl]propane, 2,4-bis[2-bis(4-hydroxyphenyl)-2-propyl]phenol, 2,6-bis(2-hydroxy-5-methylbenzyl)-4-methylphenol, 2-(4-hydroxyphenyl)-2-(2,4-dihydroxyphenyl)propane, tetrakis(4-hydroxyphenyl)methane, tetrakis[4-(4-hydroxyphenylisopropyl)phenoxy]methane, 2,4-dihydroxybenzoic acid, trimesic acid, cyanuric acid, 3,3-bis(3-methyl-4-hydroxyphenyl)-2-oxo-2,3-dihydroindole, 3,3-bis(4-hydroxyaryl)oxyindole, 5-chloroisatin, 5,7-dichloroisatin, and 5-bromoisatin.

The proportion of the branching agent added is preferably 30 mol% or less, more preferably 5 mol% or less in terms of mole percentage of the copolymer composition of the repeating unit A, the repeating unit B, and chain terminals or in terms of mole percentage of the copolymer composition of the repeating unit A and chain terminals. When the proportion of the branching agent added is 30 mol% or less, deterioration of moldability can be inhibited.

In the case of conducting interfacial polycondensation, examples of an acid-binding agent include alkali metal hydroxides such as sodium hydroxide, potassium hydroxide, lithium hydroxide, and cesium hydroxide; alkaline earth metal hydroxides such as magnesium hydroxide and calcium hydroxide; alkali metal weak acid salts and alkaline earth metal weak acid salts such as sodium carbonate, potassium carbonate, and calcium acetate; and organic bases such as pyridine. Preferred acid-binding agents used in the case of conducting interfacial polycondensation are alkali metal hydroxides and alkaline earth metal hydroxides such as sodium hydroxide, potassium hydroxide, and calcium hydroxide. These acid-binding agents may be used as a mixture. The proportion of the acid-binding agent used may be also appropriately adjusted in consideration of the stoichiometric ratio (equivalent) of the reaction. Specifically, the acid-binding agent may be used in an amount of 1 equivalent or in a more excessive amount per 1 mole of the total of hydroxy groups of a divalent phenol serving as a raw material. Preferably, 1 to 10 equivalents of the acid-binding agent may be used.

A solvent used in the method for producing a PC polymer according to the exemplary embodiment is simply required to exhibit solubility to the obtained copolymer at a predetermined level or more. Preferred examples of the solvent include aromatic hydrocarbons such as toluene and xylene; halogenated hydrocarbons such as methylene chloride, chloroform, 1,1-dichloroethane, 1,2-dichloroethane, 1,1,1-trichloroethane, 1,1,2-trichloroethane, 1,1,1,2-tetrachloroethane, 1,1,2,2-tetrachloroethane, pentachloroethane, and chlorobenzene; ketones such as cyclohexanone, acetone, and acetophenone; and ethers such as tetrahydrofuran and 1,4-dioxane. These solvents may be used alone or in combination of two or more thereof. Furthermore, the interfacial polycondensation reaction may be conducted using two solvents that are immiscible with each other.

It is preferable to use, as the organic solvent used in the method for producing a PC polymer according to the exemplary embodiment, an organic solvent that is substantially immiscible with water and that can dissolve the finally obtained polycarbonate copolymer in an amount of 5 mass% or more. The organic solvent is preferably an organic solvent that is substantially immiscible with water and that can dissolve the finally obtained polycarbonate copolymer in an amount of 5 mass% or more.

Herein, the organic solvent that is "substantially immiscible with water" refers to an organic solvent that does not provide a solution formed of a uniform layer (a solution in which neither a gelled product nor insoluble matter is observed) when water and the organic solvent are mixed in a composition range of 1:9 to 9:1.

The organic solvent "can dissolve the finally obtained polycarbonate copolymer in an amount of 5 mass% or more" means a solubility of the polycarbonate copolymer as measured at a temperature of 20 degrees C to 30 degrees C and normal pressure.

The "finally obtained polycarbonate polymer" refers to a polymer obtained through a polymerization step in the method for producing a polycarbonate polymer according to the exemplary embodiment, the polymer before being subjected to cross-linking.

Examples of such an organic solvent include aromatic hydrocarbons such as toluene, ketones such as cyclohexanone, and halogenated hydrocarbons such as methylene chloride. Of these, methylene chloride is preferred because of its high solubility.

No particular limitation is imposed on a catalyst used in the method for producing a PC polymer according to the exemplary embodiment, and preferred examples thereof include tertiary amines such as trimethylamine, triethylamine, tributylamine, N,N-dimethylcyclohexylamine, pyridine, N,N-diethylaniline, and N,N-dimethylaniline; quaternary

ammonium salts such as trimethylbenzylammonium chloride, triethylbenzylammonium chloride, tributylbenzylammonium chloride, trioctylmethylammonium chloride, tetrabutylammonium chloride, and tetrabutylammonium bromide; and quaternary phosphonium salts such as tetrabutylphosphonium chloride and tetrabutylphosphonium bromide.

Furthermore, a small amount of an antioxidant such as sodium sulfite or a hydrosulfite salt may be added as needed to the reaction system of the PC polymer of the exemplary embodiment.

Coating Liquid Composition

A coating liquid composition according to the exemplary embodiment contains the resin precursor composition according to the exemplary embodiment and an organic solvent.

The organic solvent according to the exemplary embodiment can be appropriately selected in consideration of solubility of a material such as the resin precursor composition, the drying rate after molding, the effect of a residue on a molded product, and the risk (fire or harmful effect on the health).

Examples of the organic solvent according to the exemplary embodiment include cyclic ethers (such as tetrahydrofuran (THF), dioxane, and dioxolane), cyclic ketones (such as cyclohexanone, cyclopentanone, and cycloheptanone), aromatic hydrocarbons (such as benzene, xylene, and chlorobenzene), ketones (such as methyl ethyl ketone (MEK) and methyl isobutyl ketone (MIBK)), halogenated hydrocarbons (such as dichloromethane and chloroform), esters (such as ethyl acetate, isopropyl acetate, isobutyl acetate, and butyl acetate), ethers (such as ethylene glycol dimethyl ether and ethylene glycol monoethyl ether), amides (such as dimethyl fumarate (DMF) and dimethylacetamide (DMAc), and aprotic polar solvents (such as dimethyl sulfoxide (DMSO)).

The concentration of the resin precursor composition according to the exemplary embodiment in the coating liquid composition according to the exemplary embodiment is not limited as long as an appropriate viscosity suitable for the method of using the coating liquid composition is achieved, and is preferably in a range from 0.1 mass% to 40 mass%, more preferably in a range from 1 mass% to 35 mass%, still more preferably in a range from 5 mass% to 30 mass%. At a concentration of 40 mass% or less, the viscosity is not excessively high, and good coatability is achieved. At a concentration of 0.1 mass% or more, a suitable viscosity can be maintained, and a homogenous film is obtained. Furthermore, the concentration is one suitable for reducing the drying time after coating and for easily obtaining a target film thickness.

The coating liquid composition may contain additives besides the resin precursor composition according to the exemplary embodiment and the organic solvent. Examples of the additives include low-molecular compounds, coloring agents (such as dyes and pigments), functional compounds (such as charge transporting materials, electron transporting materials, hole transporting materials, and charge generating materials), fillers (such as inorganic or organic fillers, fibers, cloths, and fine particles), antioxidants, UV absorbents, and acid scavengers. The coating liquid composition may contain another resin other than the resin precursor composition according to an exemplary embodiment of the invention.

As the additives and the other resin, substances known as substances that can be blended with the resin precursor composition can be used.

When a charge transporting substance is contained, in view of the product performance, a ratio between the resin precursor composition and the charge transporting substance in the coating liquid composition according to the exemplary embodiment is preferably in a range from 20:80 to 80:20, more preferably in a range from 30:70 to 70:30, by mass.

In the coating liquid composition according to the exemplary embodiment, one resin precursor composition according to the exemplary embodiment may be used alone, or two or more resin precursor compositions according to the exemplary embodiment may be used in combination.

The coating liquid composition according to the exemplary embodiment is suitable for use in forming a photosensitive layer of a multilayer electrophotographic photoreceptor. The photosensitive layer of such a multilayer electrophotographic photoreceptor preferably includes at least a charge generating layer and a charge transporting layer, and the coating liquid composition according to the exemplary embodiment is suitable for use in forming the charge transporting layer. When the charge generating substance is further contained in the coating liquid composition according to the exemplary embodiment, the coating liquid composition can also be used to form a photosensitive layer of a single-layer electrophotographic photoreceptor.

The coating liquid composition can also be used to form a protection layer of the photoreceptor.

[Molded Product]

A molded product according to the exemplary embodiment includes the resin according to the exemplary embodiment. The molded product according to the exemplary embodiment can be used in various applications besides the application to an electrophotographic photoreceptor described later. The molded product according to the exemplary embodiment can be suitably used in applications to, for example, a substrate, an insulating layer, a protection layer, an

adhesion layer, a conductive layer, and a structural member of an electronic device or the like.

The molded product according to the exemplary embodiment can be produced using the resin precursor composition according to the exemplary embodiment.

In the case of using the resin precursor composition according to the exemplary embodiment, a wet molding method and a melt molding method can be employed as the molding method.

When the molded product is obtained by the wet molding method, it is possible to employ (i) a method in which molding is performed at a temperature at which cross-linking reaction proceeds, (ii) a method in which a wet molded product is prepared at a temperature at which cross-linking does not substantially proceed, the temperature is subsequently raised to a temperature at which cross-linking reaction proceeds during a step of removing a solvent to simultaneously perform drying and cross-linking, and (iii) a method in which, at a temperature at which cross-linking does not substantially proceed, a dry molded product is prepared by wet molding and drying, and the temperature of the molded body is subsequently raised to a temperature at which cross-linking reaction proceeds to perform cross-linking. Any of these method may be employed.

In the wet molding method, the above-described coating liquid composition according the exemplary embodiment can be used.

In the case of performing the melt molding method, the method is usually performed at a temperature at which Diels-Alder reaction proceeds or a higher temperature. On the other hand, it is also possible to suitably employ a method in which the molding temperature is raised until retro-Diels-Alder reaction occurs to reduce the melt viscosity, thus improving fluidity. When the molding is performed under the conditions in which retro-Diels-Alder reaction occurs, the proceeding of Diels-Alder reaction can be appropriately controlled again by controlling the rate and temperature of cooling the molded product. This enables the production of a molded product formed from a resin having good molding fluidity and having improved resin physical properties due to a cross-linked structure.

The cross-linking temperature can be appropriately determined according to the desired physical properties and intended use. The types of cross-linkable functional groups, the ratio between the conjugated diene and the dienophile, the functional group concentration, and the like are adjusted according to this cross-linking temperature, and the cross-linking method may be determined.

In one example, regarding the cross-linking temperature for an electrophotographic photoreceptor, usually, it is preferable that a wet molded product be prepared by wet molding and then cross-linked in a drying step, and the cross-linking is required to be performed at a temperature at which a functional low-molecular compound is not degraded. For example, the cross-linking temperature for an electrophotographic photoreceptor is preferably in a range from 60 degrees C to 170 degrees C, more preferably in a range from 80 degrees C to 160 degrees C, still more preferably in a range from 100 degrees C to 150 degrees C. At a cross-linking temperature of higher than 170 degrees C, a functional low-molecular compound such as a charge transporting substance may be degraded. A cross-linking temperature of lower than 60 degrees C is not preferred because drying does not sufficiently proceed or it takes a long time for drying.

On the other hand, in the application to an electronic device, the process may be performed at a high temperature because film physical properties are adjusted by drying or the curing rate during the film formation by coating. In view of this, the cross-linking temperature for an electronic device is preferably in a range from 60 degrees C to 250 degrees C, more preferably in a range from 100 degrees C to 200 degrees C. Under the condition of a cross-linking temperature of higher than 250 degrees C, malfunction of an electronic component or decomposition of other organic materials may occur. At a cross-linking temperature of lower than 60 degrees C, cross-linking may not sufficiently proceed, and a material that is cross-linked at such a low temperature may have a problem in stability of the coating liquid, for example, the reaction partially proceeds even in the coating liquid composition, resulting in an increase in the viscosity.

In the exemplary embodiment, cross-linking of the resin precursor composition can be performed without adding a catalyst, a polymerization initiator, or the like. However, a substance such as a catalyst or a polymerization initiator may be added for the purpose of, for example, using another cross-linking system in combination as long as the effects of the exemplary embodiment are not impaired.

Electrophotographic Photoreceptor

An electrophotographic photoreceptor according to the exemplary embodiment preferably includes the resin according to the exemplary embodiment in an outermost layer.

The electrophotographic photoreceptor according to the exemplary embodiment includes a substrate and a photosensitive layer disposed on the substrate and contains the resin according to the exemplary embodiment in this photosensitive layer.

The electrophotographic photoreceptor according to the exemplary embodiment may be not only any of various known types of electrophotographic photoreceptors but also any electrophotographic photoreceptor as long as the resin according to the exemplary embodiment is used in the photosensitive layer. The electrophotographic photoreceptor according to the exemplary embodiment is preferably a multilayer electrophotographic photoreceptor in which the photosensitive layer includes at least one charge generating layer and at least one charge transporting layer or a single-layer electrophotographic photoreceptor including a single layer that contains a charge generating substance and a charge transporting substance therein.

The resin according to the exemplary embodiment may be used in any portion in the photosensitive layer. To sufficiently exhibit the effect of the exemplary embodiment, the resin according to the exemplary embodiment is preferably used as a binder resin of a charge transferring substance in the charge transporting layer or a binder resin of the single-layer photosensitive layer. It is desirable that the resin according to the exemplary embodiment be used not only as a photosensitive layer but also as a surface protection layer. In the case of a multilayer electrophotographic photoreceptor including two charge transporting layers, the resin according to the exemplary embodiment is preferably used in one of the charge transporting layers.

In the electrophotographic photoreceptor according to the exemplary embodiment, resins according to the exemplary embodiment may be used alone or in combination of two or more thereof. A binder resin component such as another polycarbonate may further be contained if required as long as the objects of the exemplary embodiment are not impaired. Furthermore, an additive such as an antioxidant may be contained.

The electrophotographic photoreceptor according to the exemplary embodiment includes a photosensitive layer on a conductive substrate. When the photosensitive layer has a charge generating layer and a charge transporting layer, the charge transporting layer may be stacked on the charge generating layer, or conversely, the charge generating layer may be stacked on the charge transporting layer. Alternatively, the photosensitive layer may be a single layer that contains both a charge generating substance and a charge transporting substance therein. Furthermore, a conductive or insulating protection film may be formed as a surface layer if necessary. When the resin according to the exemplary embodiment is used in the outermost layer, an electrophotographic photoreceptor having good solvent resistance and abrasion resistance can be provided.

Furthermore, for example, an intermediate layer such as an adhesion layer for improving adhesiveness between layers or a blocking layer having a function of blocking charges may be formed.

Various materials such as known materials can be used as the material of the conductive substrate used in the electrophotographic photoreceptor of the exemplary embodiment. Specific examples of the material that can be used include a plate, a drum, and a sheet formed of aluminum, nickel, chromium, palladium, titanium, molybdenum, indium, gold, platinum, silver, copper, zinc, brass, stainless steel, lead oxide, tin oxide, indium oxide, ITO (indium tin oxide: tin-doped indium oxide) or graphite; a film, a sheet, and a seamless belt formed of glass, cloth, paper, or plastic having been subjected to conductive treatment through, for example, coating by vapor deposition, sputtering, application, or the like; and a metal drum having been subjected to metal oxidation treatment by electrode oxidation or the like.

The charge generating layer contains at least a charge generating material. The charge generating layer can be obtained by forming a layer from the charge generating material on the underlying substrate by vacuum deposition, sputtering, or the like or by forming, on the underlying substrate, a layer in which the charge generating material is bound with a binder resin. Various methods such as known methods can be employed as the method for forming the charge generating layer using a binder resin. Typically, for example, the charge generating layer is suitably obtained as a wet molded body by a method including applying, onto a predetermined underlying substrate, a coating liquid composition in which a charge generating material is dispersed or dissolved in a suitable solvent together with a binder resin, followed by drying.

Various known materials can be used as the charge generating material in the charge generating layer. Examples of specific compounds include elemental selenium (such as amorphous selenium and trigonal selenium), selenium alloys (such as selenium-tellurium), selenium compounds and selenium-containing compositions (such as $As_2Se_3$), inorganic materials formed of a group 12 element and a group 16 element in the periodic table (such as zinc oxide and CdS-Se), oxide-based semiconductors (such as titanium oxide), silicon-based materials (such as amorphous silicon), metal-free phthalocyanine pigments (such as $\tau$-type metal-free phthalocyanine and $\chi$-type metal-free phthalocyanine), metal phthalocyanine pigments (such as $\alpha$-type copper phthalocyanine, $\beta$-type copper phthalocyanine, $\gamma$-type copper phthalocyanine, $\varepsilon$-type copper phthalocyanine, X-type copper phthalocyanine, A-type titanyl phthalocyanine, B-type titanyl phthalocyanine, C-type titanyl phthalocyanine, D-type titanyl phthalocyanine, E-type titanyl phthalocyanine, F-type titanyl phthalocyanine, G-type titanyl phthalocyanine, H-type titanyl phthalocyanine, K-type titanyl phthalocyanine, L-type titanyl phthalocyanine, M-type titanyl phthalocyanine, N-type titanyl phthalocyanine, Y-type titanyl phthalocyanine, Y-type oxotitanyl phthalocyanine, $\alpha$-type oxotitanyl phthalocyanine, $\beta$-type oxotitanyl phthalocyanine, titanyl phthalocyanine having a strong diffraction peak at a Bragg angle 2$\theta$ of 27.3 $\pm$ 0.2 degrees in an X-ray diffraction pattern, and gallium phthalocyanine), cyanine dyes, anthracene pigments, bisazo pigments, pyrene pigments, polycyclic quinone pigments, quinacridone pigments, indigo pigments, perylene pigments, pyrylium dyes, squarylium pigments, anthanthrone pigments, benzimidazole pigments, azo pigments, thioindigo pigments, quinoline pigments, lake pigments, oxazine pigments, dioxazine pigments, triphenylmethane pigments, azulenium dyes, triarylmethane dyes, xanthine dyes, thiazine dyes, thiapyrylium dyes, polyvinyl carbazole, and bisbenzimidazole pigments. These compounds may be used, as the charge generating substance, alone or as a mixture of two or more compounds. Of these charge generating substances, charge generating

substances specifically disclosed in JP-H11-172003A are examples of preferred charge generating substances.

The charge transporting layer can be obtained as a wet molded body by forming, on the underlying substrate, a layer in which a charge transporting substance is bound with a binder resin.

No particular limitation is imposed on the binder resin of the charge generating layer and the charge transporting layer, and various known resins can be used. Specific examples thereof include polystyrene, polyvinyl chloride, polyvinyl acetate, vinyl chloride-vinyl acetate copolymer, polyvinyl acetal, alkyd resin, acrylic resin, polyacrylonitrile, polycarbonate, polyurethane, epoxy resin, phenolic resin, polyamide, polyketone, polyacrylamide, butyral resin, polyester resin, vinylidene chloride-vinyl chloride copolymer, methacrylic resin, styrene-butadiene copolymer, vinylidene chloride-acrylonitrile copolymer, vinyl chloride-vinyl acetate-maleic anhydride copolymer, silicone resin, silicone-alkyd resin, phenol-formaldehyde resin, styrene-alkyd resin, melamine resin, polyether resin, benzoguanamine resin, epoxy-acrylate resin, urethane-acrylate resin, poly-N-vinylcarbazole, polyvinyl butyral, polyvinyl formal, polysulfone, casein, gelatine, polyvinyl alcohol, ethyl cellulose, nitrocellulose, carboxy-methyl cellulose, vinylidene chloride-based polymer latex, acrylonitrile-butadiene copolymer, vinyltoluene-styrene copolymer, soybean oil-modified alkyd resin, nitrated polystyrene, polymethylstyrene, polyisoprene, polythiocarbonate, polyarylate, polyhaloarylate, polyallyl ether, polyvinyl acrylate, and polyester acrylate.

These may be used alone or as a mixture of two or more thereof. Note that the above-described PC polymer of the exemplary embodiment is suitably used as the binder resin in the charge generating layer and/or the charge transporting layer.

Various known methods can be employed as the method for forming the charge transporting layer. The charge transporting layer is suitably obtained as a wet molded body by a method including applying, onto a predetermined underlying substrate, a coating liquid composition in which a charge transporting substance is dispersed or dissolved in a suitable solvent together with the PC polymer of the exemplary embodiment, followed by drying. A blend ratio between the charge transporting substance and the PC polymer used to form the charge transporting layer is preferably in a range from 20:80 to 80:20, more preferably in a range from 30:70 to 70:30, by mass.

In this charge transporting layer, PC polymers of the exemplary embodiment may be used alone or as a mixture of two or more thereof. In addition, another binder resin may be used in combination with the PC polymer of the exemplary embodiment as long as the objects of the invention are not impaired.

Typically, the thickness of the charge transporting layer formed in this manner is approximately in a range from 5 $\mu$m to 100 $\mu$m, preferably in a range from 10 $\mu$m to 50 $\mu$m, more preferably in a range from 15 $\mu$m to 40 $\mu$m. When the thickness is 5 $\mu$m or more, the initial potential is not lowered. When the thickness is 100 $\mu$m or less, degradation of electrophotographic characteristics can be prevented.

Various known compounds can be used as the charge transporting substance that can be used together with the PC polymer of the exemplary embodiment. Examples of such compounds that are suitably used include carbazole compounds, indole compounds, imidazole compounds, oxazole compounds, pyrazole compounds, oxadiazole compounds, pyrazoline compounds, thiadiazole compounds, aniline compounds, hydrazone compounds, aromatic amine compounds, aliphatic amine compounds, stilbene compounds, fluorenone compounds, butadiene compounds, quinone compounds, quinodimethane compounds, thiazole compounds, triazole compounds, imidazolone compounds, imidazolidine compounds, bisimidazolidine compounds, oxazolone compounds, benzothiazole compounds, benzimidazole compounds, quinazoline compounds, benzofuran compounds, acridine compounds, phenazine compounds, poly-N-vinylcarbazole, polyvinylpyrene, polyvinylanthracene, polyvinylacridine, poly-9-vinylphenylanthracene, pyrene-formaldehyde resin, ethylcarbazole resin, and polymers having any of the aforementioned structures in the main chain or a side chain. These compounds may be used alone or in combination of two or more thereof.

Of these charge transporting substances, compounds specifically disclosed as examples in JP-H11-172003A and charge transporting substances represented by structures below are particularly suitably used.

[Formula 20]

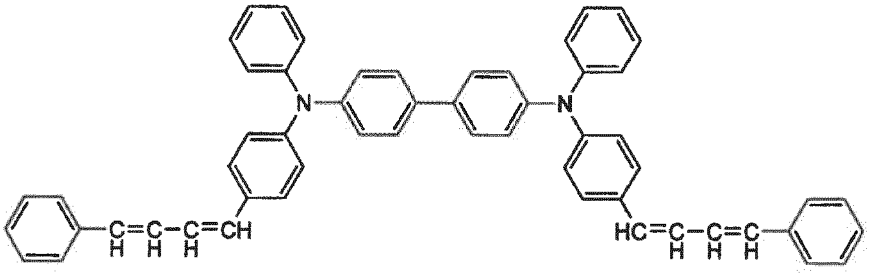

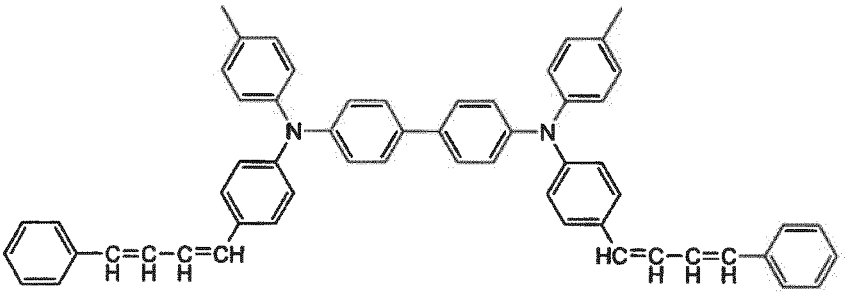

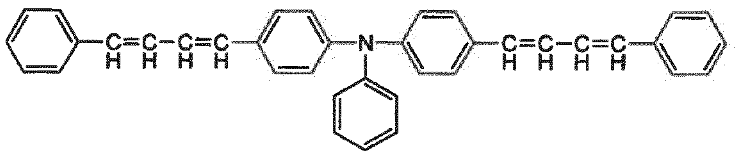

[Formula 21]

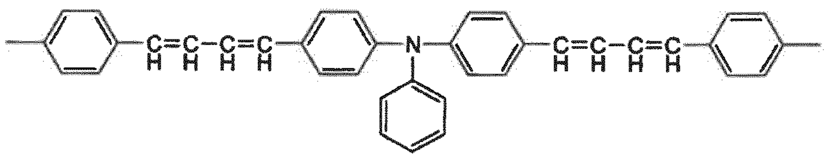

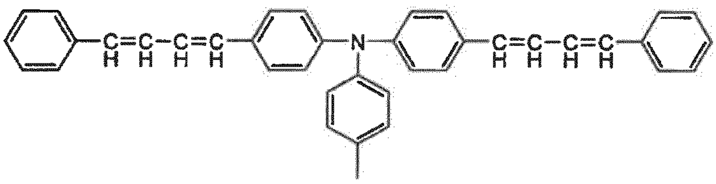

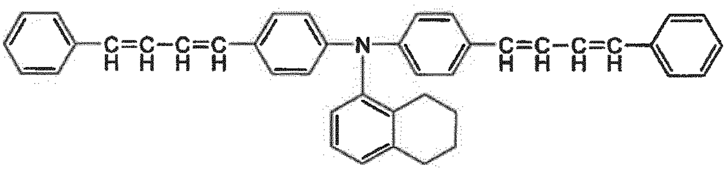

[Formula 22]

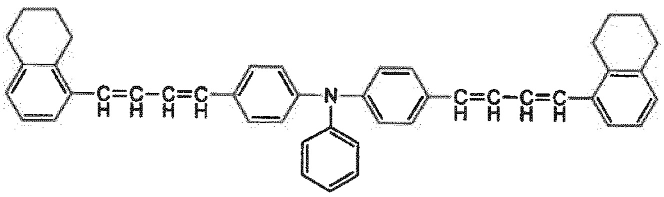

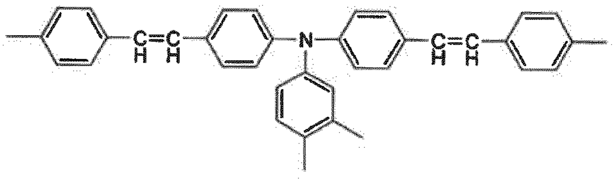

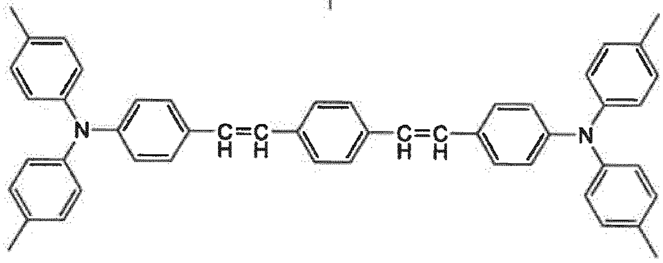

[Formula 23]

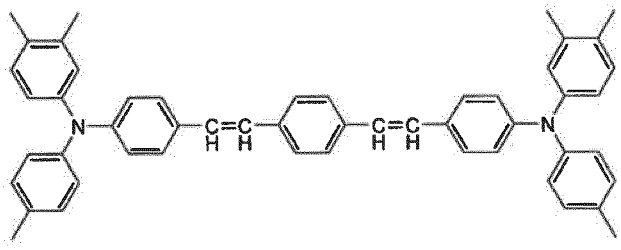

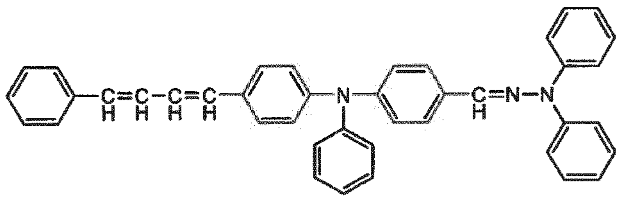

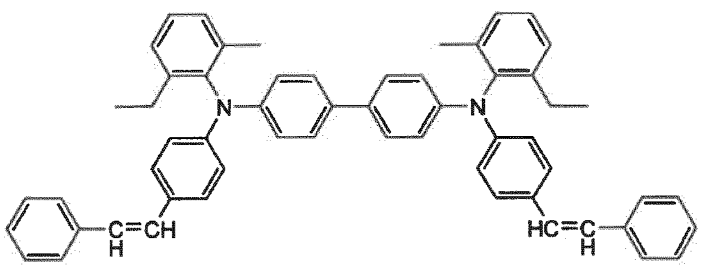

[Formula 24]

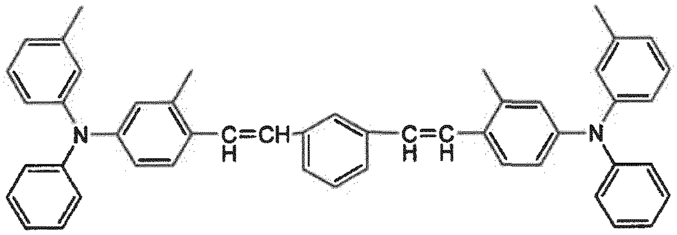

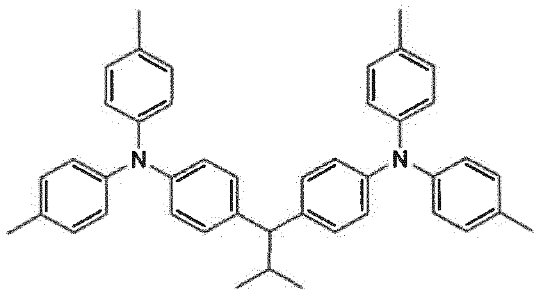

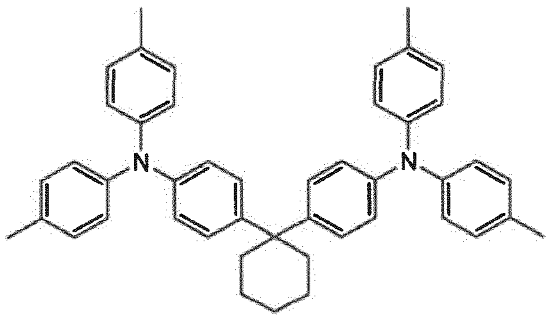

[Formula 25]

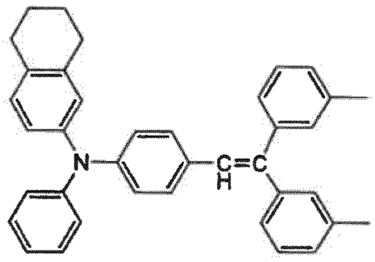

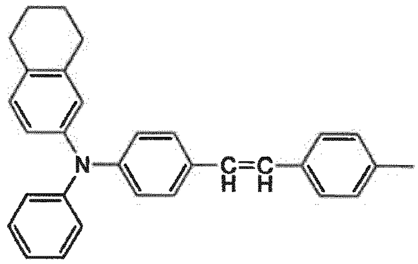

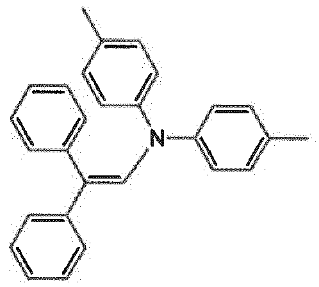

[Formula 26]

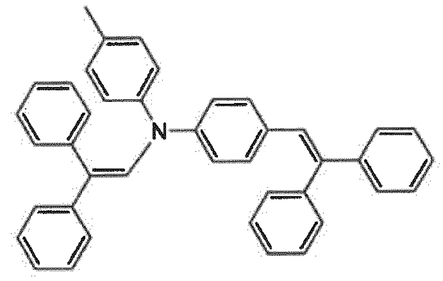

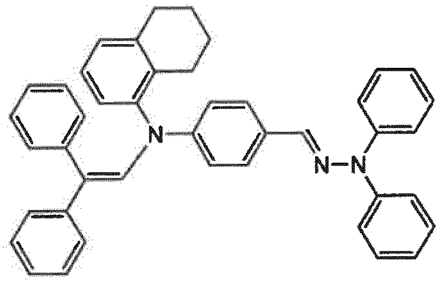

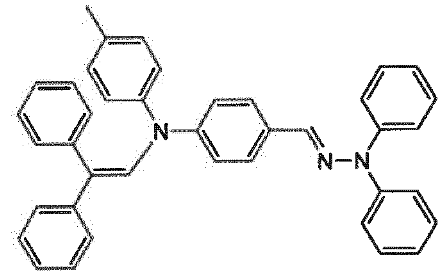

[Formula 27]

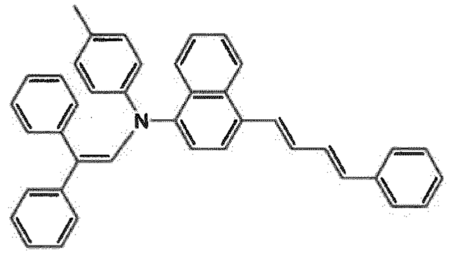

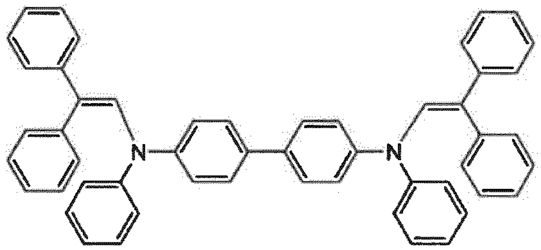

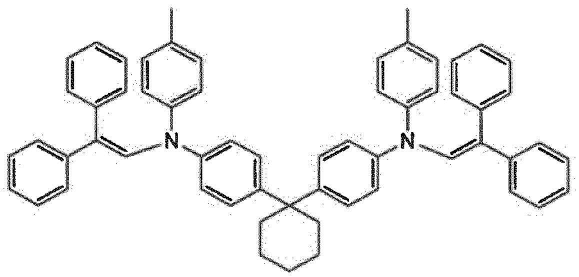

[Formula 28]

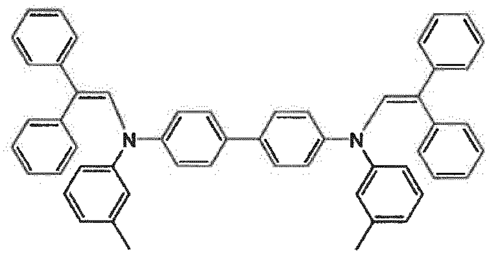

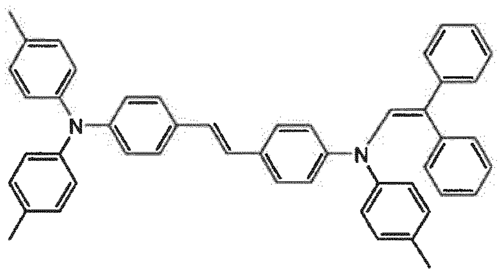

[Formula 29]

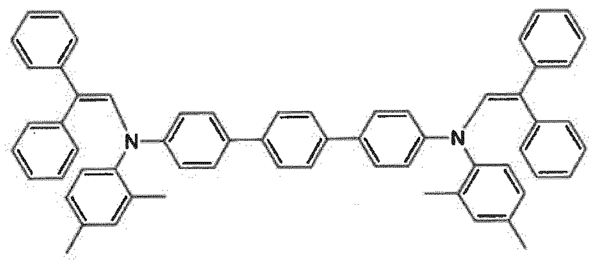

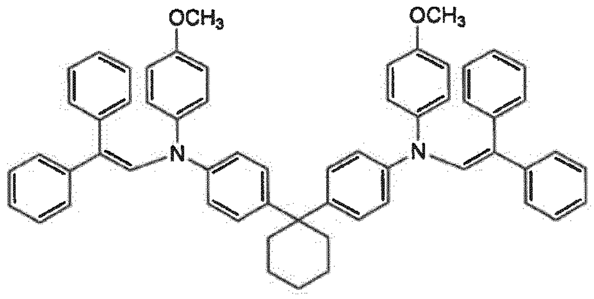

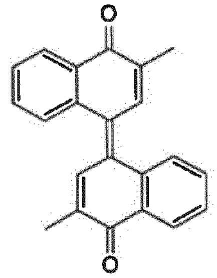

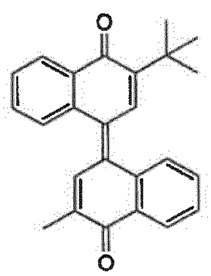

[Formula 30]

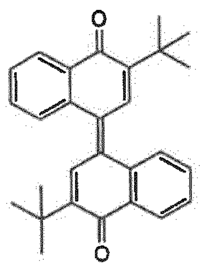

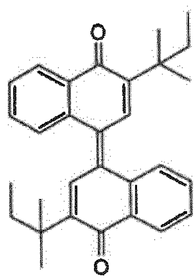

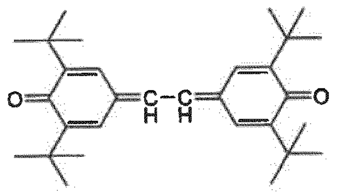

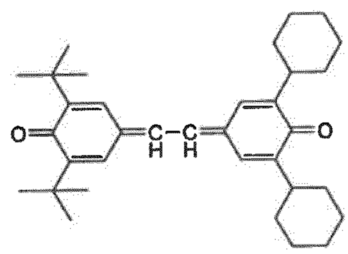

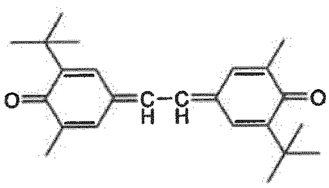

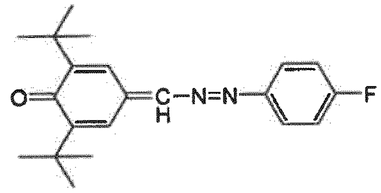

[Formula 31]

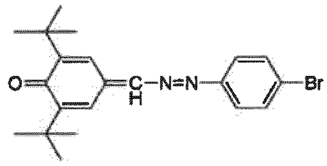
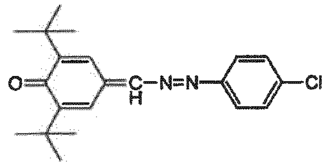
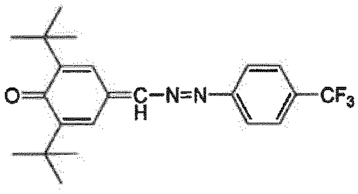
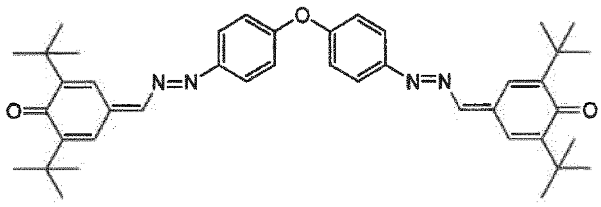
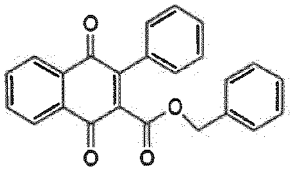
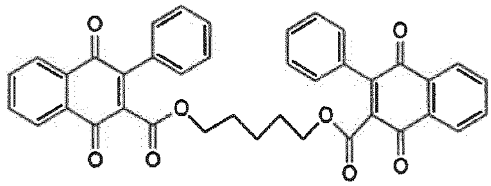

[Formula 32]

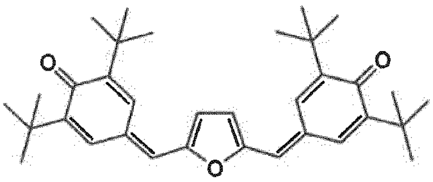
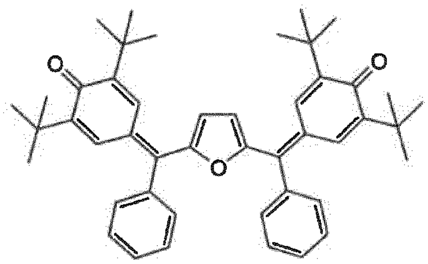
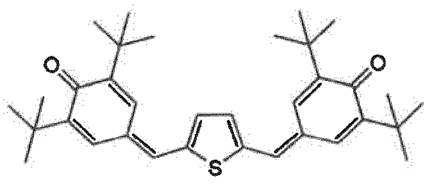
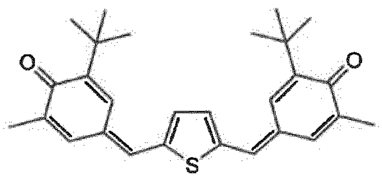

[Formula 33]

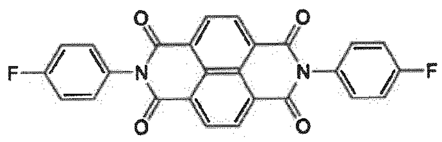

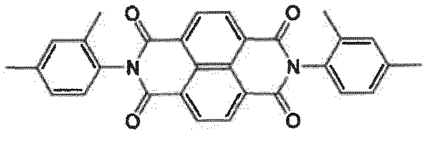

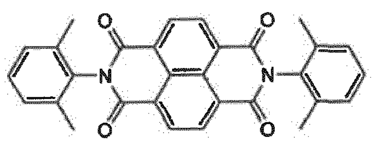

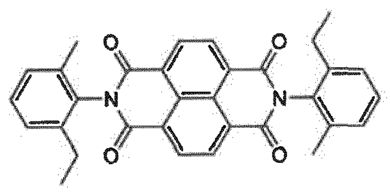

Note that, in the electrophotographic photoreceptor according to the exemplary embodiment, the resin precursor composition according to the exemplary embodiment is suitably used as a binder resin in at least one of the charge generating layer, the charge transporting layer, or the surface protection layer.

The electrophotographic photoreceptor according to the exemplary embodiment may include a typically used undercoat layer between the conductive substrate and the photosensitive layer. Examples of components of the undercoat layer that can be used include fine particles (such as titanium oxide, aluminum oxide, zirconia, titanic acid, zirconic acid, lanthanum lead, titanium black, silica, lead titanate, barium titanate, tin oxide, indium oxide, and silicon oxide), polyamide resin, phenolic resin, casein, melamine resin, benzoguanamine resin, polyurethane resin, epoxy resin, cellulose, nitrocellulose, polyvinyl alcohol, and polyvinyl butyral resin. As the resin used for this undercoat layer, the binder resin described above may be used, or the resin precursor composition according to the exemplary embodiment may be used. The above fine particles and resins may be used alone, or a variety thereof may be mixed for use. When the fine particles and the resins are used as a mixture, inorganic fine particles and a resin are preferably used in combination because a film having good smoothness is formed.

The thickness of the undercoat layer is in a range from 0.01 μm to 10 μm, preferably in a range from 0.1 μm to 7 μm. When the thickness is 0.01 μm or more, the undercoat layer can be uniformly formed. When the thickness is 10 μm or less, degradation of electrophotographic characteristics can be restrained.

A typically used known blocking layer may be disposed between the conductive base and the photosensitive layer. The same type of resin as the above-described binder resin may be used for the blocking layer. The resin precursor composition according the exemplary embodiment may be used. The thickness of the blocking layer is in a range from 0.01 μm to 20 μm, preferably in a range from 0.1 μm to 10 μm. When the thickness is 0.01 μm or more, the blocking layer can be uniformly formed. When the thickness is 20 μm or less, degradation of electrophotographic characteristics can be restrained.

Furthermore, the electrophotographic photoreceptor according to the exemplary embodiment may include a protection layer stacked on the photosensitive layer. The same type of resin as the above-described binder resin may be used for the protection layer. The resin precursor composition according the exemplary embodiment is particularly preferably used. The thickness of the protection layer is in a range from 0.01 μm to 20 μm, preferably in a range from 0.1 μm to 10 μm. This protection layer may contain the charge generating substance, the charge transporting substance, additives, metal and oxides, nitrides, or salts thereof, alloys, carbon black, and a conductive material such as an organic conductive compound.

Furthermore, in order to improve the performance of this electrophotographic photoreceptor, a binding agent, a plasticizer, a curing catalyst, a fluidity-imparting agent, a pinhole-controlling agent, and a spectral-sensitivity sensitizer (sensitizer dye), and the like may be added to the charge generating layer and the charge transporting layer as long as the effects of the invention are not lost. Furthermore, in order to prevent an increase in the residual potential, a reduction in the charged potential, and a decrease in the sensitivity due to repeated use, various chemical substances and additives such as an antioxidant, a surfactant, an anti-curling agent, and a leveling agent may be added.

Examples of the binding agent include silicone resin, polyamide resin, polyurethane resin, polyester resin, epoxy resin, polyketone resin, polycarbonate copolymer, polystyrene resin, polymethacrylate resin, polyacrylamide resin, polybutadiene resin, polyisoprene resin, melamine resin, benzoguanamine resin, polychloroprene resin, polyacrylonitrile resin, ethyl cellulose resin, nitrocellulose resin, urea resin, phenolic resin, phenoxy resin, polyvinyl butyral resin, formal resin, vinyl acetate resin, vinyl acetate/vinyl chloride copolymer resin, and polyester carbonate resin. At least one of thermosetting resin or photo-curable resin can also be used. In any case, there is no particular limitation as long as the binding agent is an electrically insulating resin with which a film can be formed under ordinary conditions, and as long as the effects of the exemplary embodiment are not impaired.

Specific examples of the plasticizer include biphenyl, chlorinated biphenyl, o-terphenyl, halogenated paraffin, dimethylnaphthalene, dimethyl phthalate, dibutyl phthalate, dioctyl phthalate, diethylene glycol phthalate, triphenyl phosphate, diisobutyl adipate, dimethyl sebacate, dibutyl sebacate, butyl laurate, methyl phthalyl ethyl glycolate, dimethyl glycol phthalate, methyl naphthalene, benzophenone, polypropylene, polystyrene, and fluorohydrocarbon.

Specific examples of the curing catalyst include methanesulfonic acid, dodecylbenzenesulfonic acid, and dinonylnaphthalene disulfonic acid. Examples of the fluidity-imparting agent include Modaflow and Acronal 4F. Examples of the pinhole-controlling agent include benzoin and dimethyl phthalate. The plasticizer, curing catalyst, fluidity-imparting agent, and pinhole-controlling agent are preferably used in an amount of 5 mass% or less relative to the charge transporting substance as long as the effects of the invention are not lost.

When a sensitizer dye is used as the spectral-sensitivity sensitizer, suitable examples of the sensitizer dye include triphenylmethane-based dyes (such as methyl violet, crystal violet, night blue, and victoria blue), acridine dyes (such as erythrosine, Rhodamine B, Rhodamine 3R, acridine orange, and frapeosine), thiazine dyes (such as methylene blue and methylene green), oxazine dyes (such as capri blue and meldola blue), cyanine dyes, merocyanine dyes, styryl dyes, pyrylium salt dyes, and thiopyrylium salt dyes.

In order to, for example, enhance the sensitivity, reduce the residual potential, and reduce fatigue due to repeated use, an electron-accepting substance may be added to the photosensitive layer as long as the effects of the invention are not lost. Specific examples thereof preferably include compounds having high electron affinity, such as succinic anhydride, maleic anhydride, dibromomaleic anhydride, phthalic anhydride, tetrachlorophthalic anhydride, tetrabromophthalic anhydride, 3-nitrophthalic anhydride, 4-nitrophthalic anhydride, pyromellitic anhydride, mellitic anhydride, tetracyanoethylene, tetracyanoquinodimethane, o-dinitrobenzene, m-dinitrobenzene, 1,3,5-trinitrobenzene, p-nitrobenzonitrile, picryl chloride, quinone chlorimide, chloranil, bromanil, benzoquinone, 2,3-dichlorobenzoquinone, dichlorodicyanoparabenzoquinone, naphthoquinone, diphenoquinone, tropoquinone, anthraquinone, 1-chloroanthraquinone, dinitroanthraquinone, 4-nitrobenzophenone, 4,4'-dinitrobenzophenone, 4-nitrobenzal malonodinitrile, ethyl $\alpha$-cyano-$\beta$-(p-cyanophenyl) acrylate, 9-anthracenyl methylmalonodinitrile, 1-cyano-(p-nitrophenyl)-2-(p-chlorophenyl)ethylene, 2,7-dinitrofluorenone, 2,4,7-trinitrofluorenone, 2,4,5,7-tetranitrofluorenone, 9-fluorenylidene-(dicyanomethylene malononitrile), polynitro-9-fluorenylidene-(dicyanomethylene malonodinitrile), picric acid, o-nitrobenzoic acid, p-nitrobenzoic acid, 3,5-dinitrobenzoic acid, pentafluorobenzoic acid, 5-nitrosalicylic acid, 3,5-dinitrosalicylic acid, phthalic acid, and mellitic acid. Any of these compounds may be added to either the charge generating layer or the charge transporting layer. A blend ratio of the compound is in a range from 0.01 parts by mass to 200 parts by mass, preferably in a range from 0.1 parts by mass to 50 parts by mass when the amount of the charge generating substance or charge transporting substance is 100 parts by mass, as long as the effects of the invention are not lost.

Furthermore, in order to improve surface quality, for example, tetrafluoroethylene resin, chlorotrifluoroethylene resin, tetrafluoroethylene hexafluoropropylene resin, vinyl fluoride resin, vinylidene fluoride resin, dichlorodifluoroethylene resin, copolymers thereof, and a fluorine-containing graft polymer may be used as long as the effects of the invention are not lost. A blend ratio of the surface modifier is in a range from 0.1 mass% to 60 mass%, preferably in a range from 5 mass% to 40 mass% relative to the binder resin as long as the effects of the invention are not lost. At a blend ratio of 0.1 mass% or more, surface modifications such as surface durability and a reduction in surface energy are sufficiently achieved. At a blend ratio of 60 mass% or less, degradation of electrophotographic characteristics is not caused.

Preferred examples of the antioxidant include hindered phenol antioxidants, aromatic amine antioxidants, hindered amine antioxidants, sulfide antioxidants, and organophosphate antioxidants. A blend ratio of the antioxidant is usually in a range from 0.01 mass% to 10 mass%, preferably in a range from 0.1 mass% to 2 mass% relative to the charge transporting substance as long as the effects of the invention are not lost.

Specific examples of the antioxidant preferably include compounds represented by [Formula 94] to [Formula 101] disclosed in the Specification of JP-H11-172003A.

These antioxidants may be used alone or as a mixture of two or more thereof. These may be added to the surface protection layer, the undercoat layer, and the blocking layer in addition to the photosensitive layer.

Specific examples of the solvent used in the formation of at least one of the charge generating layer or the charge transporting layer include aromatic solvents (such as benzene, toluene, xylene, and chlorobenzene), ketones (such as acetone, methyl ethyl ketone, and cyclohexanone), alcohols (such as methanol, ethanol, and isopropanol), esters (such as ethyl acetate and ethyl cellosolve), halogenated hydrocarbons (such as carbon tetrachloride, carbon tetrabromide, chloroform, dichloromethane, and tetrachloroethane), ethers (such as tetrahydrofuran, dioxolane, and dioxane), sulfoxides (such as dimethyl sulfoxide), and amides (such as dimethylformamide and diethylformamide). These solvents may be used alone or as a mixed solvent of two or more thereof.

The photosensitive layer of a single-layer electrophotographic photoreceptor can be easily formed by applying the resin precursor composition according to the exemplary embodiment as the binder resin with the use of the charge generating substance, the charge transporting substance, and the additives. At least one of the above-described hole transporting substance or electron transporting substance is preferably added to the charge transporting substance. Electron transporting substances disclosed as examples in JP2005-139339A are preferably used as the electron transporting substance.

Application of each layer can be performed with an application device such as a known device. Specifically,

the application can be performed with, for example, an applicator, a spray coater, a bar coater, a chip coater, a roll coater, a dip coater, a doctor blade, or the like.

The thickness of the photosensitive layer in the electrophotographic photoreceptor is in a range from 5 μm to 100 μm, preferably in a range from 8 μm to 50 μm. When the thickness is 5 μm or more, a decrease in the initial potential can be prevented. When the thickness is 100 μm or less, degradation of electrophotographic characteristics can be suppressed. A ratio of charge generating substance:resin precursor composition used in the production of the electrophotographic photoreceptor is preferably in a range from 20:80 to 80:20, more preferably in a range from 30:70 to 70:30, by mass.

The electrophotographic photoreceptor obtained as described above includes, as a binder resin in the photosensitive layer, a cross-linked resin formed from the resin precursor composition according to the exemplary embodiment. Thus, the electrophotographic photoreceptor exhibits good solvent resistance and durability (abrasion resistance) and has good electrical characteristics (electrophotographic characteristics) to maintain good electrophotographic characteristics for a long period of time. Accordingly, the electrophotographic photoreceptor is suitable for use in various electrophotographic fields such as copiers (monochrome, multi-color, full-color, analog, and digital copiers), printers (laser, LED, and liquid-crystal shutter printers), facsimile machines, platemakers, and devices having a function of a plurality of these.

Method for Producing Electrophotographic Photoreceptor

A method for producing an electrophotographic photoreceptor according to the exemplary embodiment is a method including: applying the coating liquid composition according to the exemplary embodiment to a conductive base by a wet molding method; removing the organic solvent in the coating liquid composition by performing heating; and performing cross-linking reaction of the resin precursor composition in the coating liquid composition either simultaneously with the heating in the removal of the organic solvent or by continuously performing heating.

In the application of the coating liquid composition to the conductive base, the coating thickness of the coating liquid composition can be appropriately determined according to the thickness of the photosensitive layer of the electrophotographic photoreceptor according to the exemplary embodiment.

In the removal of the organic solvent, the conditions can be appropriately determined according to the type of the organic solvent in the coating liquid composition according to the exemplary embodiment.

In the cross-linking reaction of the resin precursor composition, the heating temperature is the same as the cross-linking temperature for an electrophotographic photoreceptor in the molded product according to the exemplary embodiment.

EXAMPLES

Next, the invention will be described in more detail with reference to Examples and Comparative Examples. However, the invention is not limited to these Examples, and various modifications and applications can be made without departing from the spirit of the invention.

Production Examples: Preparation of Oligomers

Production Example 1: Synthesis of Bisphenol Z Oligomer (Bischloroformate)

In 1,080 mL of methylene chloride, 60.0 g (224 mmol) of 1,1 -bis(4-hydroxyphenyl)cyclohexane (bisphenol Z) was suspended, and 66.0 g (667 mmol) of phosgene was added thereto to achieve dissolution. To this, a liquid in which 44.0 g (435 mmol) of triethylamine was dissolved in 120 mL of methylene chloride was added dropwise in a temperature range from 5 degrees C to 15 degrees C. Next, stirring was performed for 30 minutes, and methylene chloride was then distilled off until the concentration thereof reached a predetermined value. To the residual liquid, 210 mL of pure water, 1.2 g of concentrated hydrochloric acid, and 450 mg of hydrosulfite were added, and washing was performed. Subsequently, washing was repeated with 210 mL of pure water five times to obtain a methylene chloride solution of a bisphenol Z oligomer having chloroformate groups at molecular terminals. The obtained solution had a chloroformate concentration of 1.12 mol/L, a solid concentration of 0.225 kg/L, and an average number of repeating units of 1.03. Hereinafter, this resulting raw material is referred to as Z-CF.

The average number of repeating units (nx) of a bischloroformate compound represented by a formula (X1) below was determined using the following numerical formula (Numerical Formula 1).

$$\text{Average number of repeating units } (n_X) = 1 + (Mav - M1)/M2 \cdots$$

(Numerical Formula 1)

In the numerical formula (Numerical Formula 1), Mav is (2 × 1000/(CF value)), M2 is (M1 - 98.92), M1 is a molecular weight of the bischloroformate compound when nx is equal to 1 in the formula (X1) below, CF value (N/kg) is (CF number/concentration), CF number (N) is the number of chlorine atoms in the bischloroformate compound represented by the formula (X1) below and contained in 1 L of the reaction solution, and concentration (kg/L) is an amount of solid component obtained by concentrating 1 L of the reaction solution. Here, 98.92 is an atomic weight of the total of two chlorine atoms, one oxygen atom, and one carbon atom that are eliminated by polycondensation between bischloroformate compound molecules.

When a bischloroformate is synthesized using two or more types of raw materials and the average number of repeating units thereof is determined, M1 is calculated on the basis of a molecular weight determined by averaging the molecular weights of the raw materials used in terms of molar ratio, and the average number of repeating units is determined. In one example, when synthesis is performed using 366 moles of a monomer having a molecular weight of 268 and 108 moles of another monomer having a molecular weight of 214, M1 is calculated by the following calculation formula.

$$M1 = (268 \times (366/(366 + 108)) + 214 \times (108/(366 + 108)) + 124.9$$

In this calculation formula for M1, "124.9" is an increment of the molecular weight when two hydrogen atoms of the monomers used are lost, and two carbon atoms, two oxygen atoms, and two chlorine atoms thereof are increased.

[Formula 34]

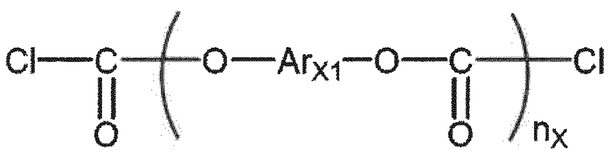

(X1)

In the formula (X1), $Arx_1$ is a divalent group. For example, in a case of the bischloroformate compound (bisphenol Z oligomer) according to Production Example 1, the divalent group represented by a formula (10) below corresponds to $Arx_1$.

[Formula 35]

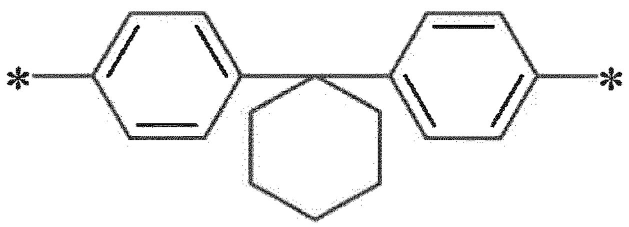

(10)

In a case of the bischloroformate oligomer represented by the formula (1A) above, $Ar_{33}$ corresponds to $Arx_1$, and $n_{31}$ corresponds to nx.

In a case of the bischloroformate oligomer represented by the formula (2A) above, $Ar_{34}$ corresponds to $Arx_1$, and $n_{32}$ corresponds to nx.

Production Example 2: Synthesis of Bisphenol Z/3,3'-Dimethyl-4,4'-Dihydroxybiphenyl Oligomer (Bischloroformate)

In 2,400 mL of methylene chloride, 98 g (366 mmol) of 1,1-bis(4-hydroxyphenyl)cyclohexane (bisphenol Z) and 22 g (103 mmol) of 3,3'-dimethyl-4,4'-dihydroxybiphenyl were suspended, and 138 g (1,395 mmol) of phosgene was added thereto to achieve dissolution. To this, a liquid in which 93.8 g (929 mmol) of triethylamine was dissolved in 256

mL of methylene chloride was added dropwise in a temperature range from 16 degrees C to 19 degrees C. Next, stirring was performed for 140 minutes, and methylene chloride was then distilled off until the concentration thereof reached a predetermined value. To the residual liquid, 1,100 mL of pure water, 2.4 g of concentrated hydrochloric acid, and 450 mg of hydrosulfite were added, and washing was performed. Subsequently, washing was repeated with 210 mL of pure water five times to obtain a methylene chloride solution of a bisphenol Z oligomer and 3,3'-dimethyl-4,4'-dihydroxybiphenyl oligomer having chloroformate groups at molecular terminals. The obtained solution had a chloroformate concentration of 0.57 mol/L, a solid concentration of 0.11 kg/L, and an average number of repeating units of 1.02. Hereinafter, this resulting raw material is referred to as ZOCBP-CF.

Production Example 3: Synthesis of 3,3'-Dimethyl-4,4'-Dihydroxybiphenyl Oligomer (Bischloroformate)

In 2,400 mL of methylene chloride, 100.4 g (469 mmol) of 3,3'-dimethyl-4,4'-dihydroxybiphenyl was suspended, and 138 g (1,395 mmol) of phosgene was added thereto to achieve dissolution. To this, a liquid in which 93.8 g (929 mmol) of triethylamine was dissolved in 256 mL of methylene chloride was added dropwise in a temperature range from 16 degrees C to 19 degrees C. Next, stirring was performed for 140 minutes, and methylene chloride was then distilled off until the concentration thereof reached a predetermined value. To the residual liquid, 1,100 mL of pure water, 2.4 g of concentrated hydrochloric acid, and 450 mg of hydrosulfite were added, and washing was performed. Subsequently, washing was repeated with 210 mL of pure water five times to obtain a methylene chloride solution of a bisphenol Z oligomer and 3,3'-dimethyl-4,4'-dihydroxybiphenyl oligomer having chloroformate groups at molecular terminals. The obtained solution had a chloroformate concentration of 0.52 mol/L, a solid concentration of 0.089 kg/L, and an average number of repeating units of 1.01. Hereinafter, this resulting raw material is referred to as OCBP-CF.

Production Example 4: Synthesis of 2,2-Bis(4-Hydroxyphenyl)Butane (BisB)/4,4'-Dihydroxydiphenyl Ether Oligomer (Bischloroformate)

In 2,400 mL of methylene chloride, 57 g (235 mmol) of 2,2-bis(4-hydroxyphenyl)butane (bisphenol B) and 47 g (233 mmol) of 4,4'-dihydroxydiphenyl ether were suspended, and 138 g (1,395 mmol) of phosgene was added thereto to achieve dissolution. To this, a liquid in which 93.8 g (929 mmol) of triethylamine was dissolved in 256 mL of methylene chloride was added dropwise in a temperature range from 16 degrees C to 19 degrees C. Next, stirring was performed for 140 minutes, and methylene chloride was then distilled off until the concentration thereof reached a predetermined value. To the residual liquid, 1,100 mL of pure water, 2.4 g of concentrated hydrochloric acid, and 450 mg of hydrosulfite were added, and washing was performed. Subsequently, washing was repeated with 210 mL of pure water five times to obtain a methylene chloride solution of a bisphenol B oligomer and 4,4'-dihydroxydiphenyl ether oligomer having chloroformate groups at molecular terminals. The obtained solution had a chloroformate concentration of 1.23 mol/L, a solid concentration of 0.233 kg/L, and an average number of repeating units of 1.05. Hereinafter, this resulting raw material is referred to as BDHDE-CF.

Synthesis Example 1

Production of PC Polymer

ZOCBP-CF (368 mL) of Production Example 2 and methylene chloride (82 mL) were poured into a reactor equipped with a mechanical stirrer, a stirring blade, and a baffle plate. To this, p-tert-butylphenol (hereinafter denoted by PTBP) (0.314 g) was added as a terminal terminator and stirred to be sufficiently mixed. After cooling was performed until the temperature inside the reactor was 10 degrees C, the entire amount of a prepared solution of 3,3'-dimethyl-4,4'-dihydroxybiphenyl and 9-(4-hydroxybenzyl)-10-(4-hydroxyphenyl)anthracene (solution preparation method: A 2.5 N aqueous potassium hydroxide solution (120 mL) (potassium hydroxide: 16.9 g) was prepared and cooled to room temperature or lower, 0.25 g of hydrosulfite serving as an antioxidant, 9.0 g of 3,3'-dimethyl-4,4'-dihydroxybiphenyl, and 15.8 g of 9-(4-hydroxybenzyl)-10-(4-hydroxyphenyl)anthracene were then added thereto and completely dissolved to prepare the solution) was added to the above solution, 5.4 mL of an aqueous triethylamine solution (7 vol%) was added thereto while stirring, and stirring was continued for three hours.

The resulting reaction mixture was diluted with 1 L of methylene chloride and 0.1 L of water, and washing was performed. The lower layer was separated and further washed with 0.25 L of water once, with 0.25 L of 0.03 N hydrochloric acid once, and with 0.25 L of water three times in this order. The resulting methylene chloride solution was added dropwise to methanol under stirring, and the resulting reprecipitated substance was filtered and dried to obtain a PC polymer (PC-1) having a structure below.

Identification of PC Polymer

The PC polymer (PC-1) thus obtained was dissolved in methylene chloride to prepare a solution with a concentration of 0.5 g/dL, and a reduced viscosity [ηsp/C] at 20 degrees C was measured. The reduced viscosity was 1.06 dL/g. The structure and the composition of the obtained PC-1 were analyzed by $^1$H-NMR spectroscopy. The results confirmed that PC-1 was a PC polymer having the following repeating units, numbers of repeating units, and composition.
The reduced viscosity was measured using an automatic viscosity measuring apparatus VMR-042 manufactured by RIGO Co., Ltd. with an Ubbelohde modified viscometer (model RM) for automatic viscosity. The $^1$H-NMR spectroscopy was performed using a nuclear magnetic resonance spectrometer JNM-ECZ400S manufactured by JEOL Ltd.
Conditions for the $^1$H-NMR spectroscopy are as follows.

Conditions for $^1$H-NMR spectroscopy

- Solvent: $CD_2Cl_2$
- Measurement concentration (amount of sample/amount of solvent): 1.5 mg/mL
- Number of scans: 64 (about 3 min)

[Formula 36]

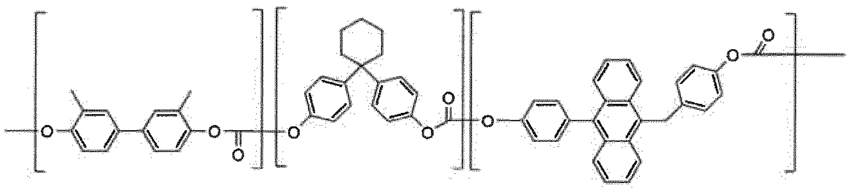

(PC−1)

The composition ratio (mol%) is OCBP:BisZ:BIPANT = 3:5:2.
The conjugated diene group (anthracene skeleton) concentration is 0.71 mmol/g.

Synthesis Example 2

Production of PC Polymer

ZOCBP-CF (184 mL) of Production Example 2 and methylene chloride (41 mL) were poured into a reactor equipped with a mechanical stirrer, a stirring blade, and a baffle plate. To this, N-(4-hydroxyphenyl)maleimide (hereinafter denoted by Mate1) (2.968 g) was added as a terminal terminator and stirred to be sufficiently mixed. After cooling was performed until the temperature inside the reactor was 10 degrees C, the entire amount of a prepared 3,3'-dimethyl-4,4'-dihydroxybiphenyl solution (solution preparation method: An aqueous potassium carbonate solution (60 mL) with a concentration of 2.5 mol/L (potassium carbonate: 20.9 g) was prepared and cooled to room temperature or lower, 0.1 g of hydrosulfite serving as an antioxidant and 7.3 g of 3,3'-dimethyl-4,4'-dihydroxybiphenyl were then added thereto to prepare the solution) was added to the above solution, 2.7 mL of an aqueous triethylamine solution (7 vol%) was added thereto while stirring, and stirring was continued for three hours.
The resulting reaction mixture was diluted with 0.5 L of methylene chloride and 0.1 L of water, and washing was performed. The lower layer was separated and further washed with 0.15 L of water once, with 0.15 L of 0.03 N hydrochloric acid once, and with 0.15 L of water three times in this order. The resulting methylene chloride solution was added dropwise to methanol under stirring, and the resulting reprecipitated substance was filtered and dried to obtain a PC polymer (PC-2) having a structure below.

Identification of PC Polymer

The PC polymer (PC-2) thus obtained was dissolved in methylene chloride to prepare a solution with a concentration of 0.5 g/dL, and a reduced viscosity [ηsp/C] at 20 degrees C was measured. The reduced viscosity was 0.23 dL/g. The structure and the composition of the obtained PC-2 were analyzed by $^1$H-NMR spectroscopy. The results

confirmed that PC-2 was a PC polymer having the following repeating units, numbers of repeating units, and composition.

[Formula 37]

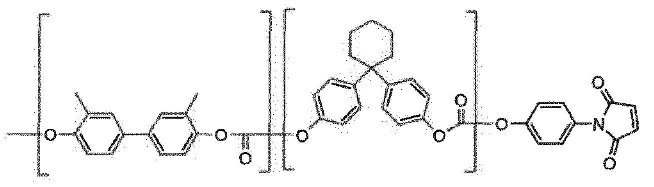

(PC−2)

The composition ratio (mol%) is OCBP:BisZ:Male1 = 5:4:1.

The dienophile group (maleimide group) concentration is 0.39 mmol/g.

Synthesis Example 3

Production of PC Polymer

A PC polymer (PC-3) having a structure below was obtained as in Synthesis Example 1 except that, in Synthesis Example 1, the amount of 3,3'-dimethyl-4,4'-dihydroxybiphenyl used was changed to 13.5 g, and the amount of 9-(4-hydroxybenzyl)-10-(4-hydroxyphenyl)anthracene used was changed to 7.9 g.

Identification of PC Polymer

The PC polymer (PC-3) thus obtained was dissolved in methylene chloride to prepare a solution with a concentration of 0.5 g/dL, and a reduced viscosity [ηsp/C] at 20 degrees C was measured. The reduced viscosity was 1.08 dL/g. The structure and the composition of the obtained PC-3 were analyzed by $^1$H-NMR spectroscopy. The results confirmed that PC-3 was a PC polymer having the following repeating units, numbers of repeating units, and composition.

[Formula 38]

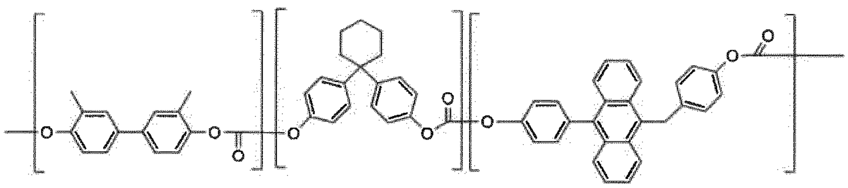

(PC−3)

The composition ratio (mol%) is OCBP:BisZ:BIPANT = 4:5:1.

The conjugated diene group (anthracene skeleton) concentration is 0.39 mmol/g.

Synthesis Example 4

Production of PC Polymer

A PC polymer (PC-4) having a structure below was obtained as in Synthesis Example 1 except that, in Synthesis Example 1, ZOCBP-CF was changed to OCBP-CF (227 mL) of Production Example 3, the methylene chloride (82 mL) initially used was not used, the amount of PTBP used was changed to 0.53 g, 3,3'-dimethyl-4,4'-dihydroxybiphenyl was not used, the amount of 9-(4-hydroxybenzyl)-10-(4-hydroxyphenyl)anthracene used was changed to 19.6 g, the amount of the 2.5 N aqueous potassium hydroxide solution was changed to 75 mL (potassium hydroxide: 10.5 g), and the amount of triethylamine used was changed to 2.7 mL.

Identification of PC Polymer

The PC polymer (PC-4) thus obtained was dissolved in methylene chloride to prepare a solution with a concentration of 0.5 g/dL, and a reduced viscosity [ηsp/C] at 20 degrees C was measured. The reduced viscosity was 0.95 dL/g. The structure and the composition of the obtained PC-4 were analyzed by $^1$H-NMR spectroscopy. The results

confirmed that PC-4 was a PC polymer having the following repeating units, numbers of repeating units, and composition.

[Formula 39]

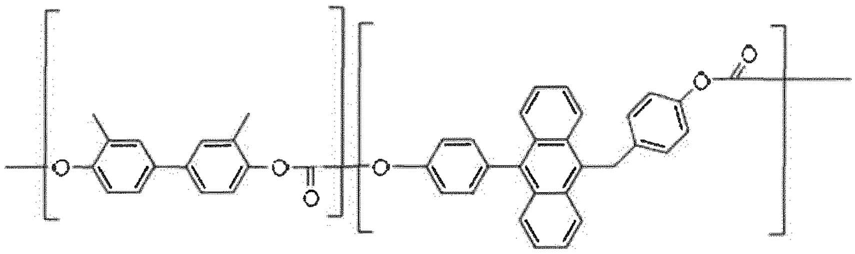

(PC−4)

The composition ratio (mol%) is OCBP:BIPANT = 55:45.
The conjugated diene group (anthracene skeleton) concentration is 1.44 mmol/g.

Synthesis Example 5

Production of PC Polymer

A PC polymer (PC-5) having a structure below was obtained as in Synthesis Example 1 except that, in Synthesis Example 1, ZOCBP-CF was changed to Z-CF (76 mL) of Production Example 1, the amount of methylene chloride initially used was changed to 114 mL, the amount of PTBP used was changed to 0.151 g, 3,3'-dimethyl-4,4'-dihydroxybiphenyl was not used, the amount of 9-(4-hydroxybenzyl)-10-(4-hydroxyphenyl)anthracene used was changed to 16.0 g, the 2.5 N aqueous potassium hydroxide solution was changed to 65 mL of a 2.36 N aqueous potassium hydroxide solution (potassium hydroxide: 8.6 g), and the amount of triethylamine used was changed to 1.0 mL.

Identification of PC Polymer

The PC polymer (PC-5) thus obtained was dissolved in methylene chloride to prepare a solution with a concentration of 0.5 g/dL, and a reduced viscosity [ηsp/C] at 20 degrees C was measured. The reduced viscosity was 0.95 dL/g. The structure and the composition of the obtained PC-5 were analyzed by $^{1}$H-NMR spectroscopy. The results confirmed that PC-5 was a PC polymer having the following repeating units, numbers of repeating units, and composition.

[Formula 40]

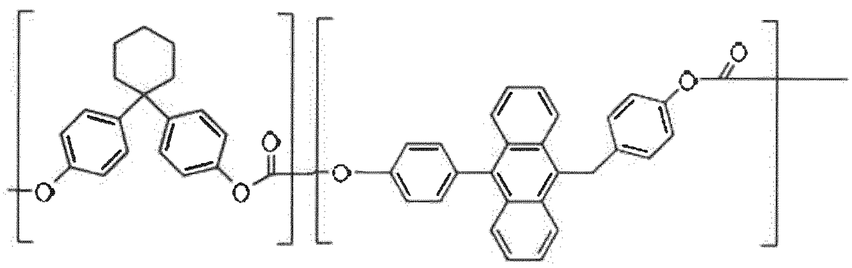

(PC−5)

The composition ratio (mol%) is BisZ:BIPANT = 6:4
The conjugated diene group (anthracene skeleton) concentration is 1.44 mmol/g.

Synthesis Example 6

Production of PC Polymer

A PC polymer (PC-6) having a structure below was obtained as in Synthesis Example 1 except that, in Synthesis Example 1, ZOCBP-CF was changed to BDHDE-CF (87 mL) of Production Example 4, the amount of methylene chloride

initially used was changed to 138 mL, the amount of PTBP used was changed to 0.142 g, 3,3'-dimethyl-4,4'-dihydroxybiphenyl was changed to 5.3 g of 4,4'-dihydroxydiphenyl ether, the amount of 9-(4-hydroxybenzyl)-10-(4-hydroxyphenyl)anthracene used was changed to 9.8 g, the 2.5 N aqueous potassium hydroxide solution was changed to 75 mL of a 2.25 N aqueous potassium hydroxide solution (potassium hydroxide: 9.5 g), and the amount of triethylamine used was changed to 1.0 mL.

Identification of PC Polymer

The PC polymer (PC-6) thus obtained was dissolved in methylene chloride to prepare a solution with a concentration of 0.5 g/dL, and a reduced viscosity [ηsp/C] at 20 degrees C was measured. The reduced viscosity was 1.25 dL/g. The structure and the composition of the obtained PC-6 were analyzed by $^1$H-NMR spectroscopy. The results confirmed that PC-6 was a PC polymer having the following repeating units, numbers of repeating units, and composition.

[Formula 41]

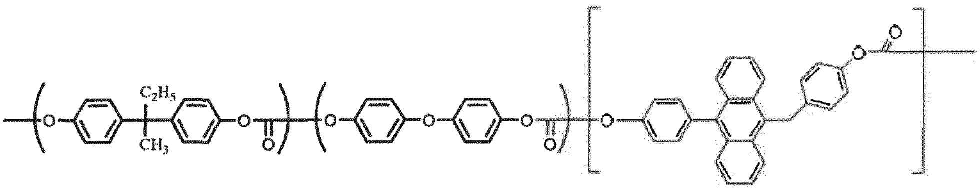

(PC−6)

The composition ratio (mol%) is BisB:DHDE:BIPANT = 3:5:2.
The conjugated diene group (anthracene skeleton) concentration is 0.82 mmol/g.

Synthesis Example 7

Production of PC Polymer

ZOCBP-CF (184 mL) of Production Example 2 and methylene chloride (41 mL) were poured into a reactor equipped with a mechanical stirrer, a stirring blade, and a baffle plate. To this, N-(4-hydroxyphenyl)maleimide (hereinafter denoted by Mate1) (0.546 g) was added as a terminal terminator and stirred to be sufficiently mixed. After cooling was performed until the temperature inside the reactor was 10 degrees C, 10 mL of an aqueous potassium carbonate solution with a concentration of 2.5 mol/L (potassium carbonate: 3.5 g) was added, and 2.7 mL of an aqueous triethylamine solution (7 vol%) was added thereto while stirring, and stirring was performed for 30 minutes. Subsequently, the entire amount of a solution in which 4.5 g of 3,3'-dimethyl-4,4'-dihydroxybiphenyl and 7.9 g of 9-(4-hydroxybenzyl)-10-(4-hydroxyphenyl)anthracene were dissolved in 75 mL of a 1.7 N aqueous NaOH solution (prepared by using 5.0 g of NaOH and adding 100 mg of sodium hydrosulfite) was added thereto, and stirring was further performed for one hour. The resulting reaction mixture was diluted with 0.5 L of methylene chloride and 0.1 L of water, and washing was performed. The lower layer was separated and further washed with 0.15 L of water once, with 0.15 L of 0.03 N hydrochloric acid once, and with 0.15 L of water three times in this order. The resulting methylene chloride solution was added dropwise to methanol under stirring, and the resulting reprecipitated substance was filtered and dried to obtain a PC polymer (PC-7) having a structure below.

Identification of PC Polymer

The PC polymer (PC-7) thus obtained was dissolved in methylene chloride to prepare a solution with a concentration of 0.5 g/dL, and a reduced viscosity [ηsp/C] at 20 degrees C was measured. The reduced viscosity was 0.66 dL/g. The structure and the composition of the obtained PC-7 were analyzed by $^1$H-NMR spectroscopy. The results confirmed that PC-7 was a PC polymer having the following repeating units, numbers of repeating units, and composition.

[Formula 42]

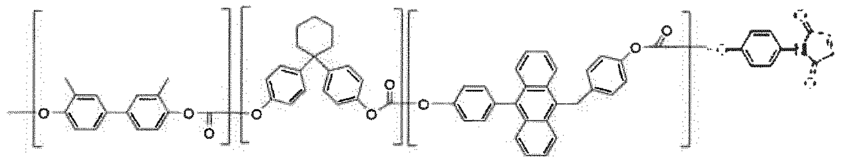

(PC−7)

The composition ratio (mol%) is OCBP:BisZ:BIPANT:Male1 = 22:53:23:2.

The conjugated diene group (anthracene skeleton) concentration is 0.74 mmol/g.

The dienophile group (maleimide skeleton) concentration is 0.082 mmol/g.

Synthesis Example 8

Production of PC Polymer

A PC polymer (PC-8) having a structure below was obtained as in Synthesis Example 1 except that, in Synthesis Example 1, ZOCBP-CF was changed to OCBP-CF (112 mL) of Production Example 3, the methylene chloride (82 mL) initially used was not used, the amount of PTBP used was changed to 0.21 g, 3,3'-dimethyl-4,4'-dihydroxybiphenyl was changed to 5.2 g of 4,4'-dihydroxydiphenyl ether (DHDE), the amount of 9-(4-hydroxybenzyl)-10-(4-hydroxyphenyl)anthracene used was changed to 2.4 g, the aqueous potassium hydroxide solution was changed to 50 mL of a 2.1 N aqueous potassium hydroxide solution (potassium hydroxide: 5.8 g), and the amount of triethylamine used was changed to 1.4 mL.

Identification of PC Polymer

The PC polymer (PC-8) thus obtained was dissolved in methylene chloride to prepare a solution with a concentration of 0.5 g/dL, and a reduced viscosity [ηsp/C] at 20 degrees C was measured. The reduced viscosity was 1.04 dL/g. The structure and the composition of the obtained PC-8 were analyzed by $^1$H-NMR spectroscopy. The results confirmed that PC-8 was a PC polymer having the following repeating units, numbers of repeating units, and composition.

[Formula 43]

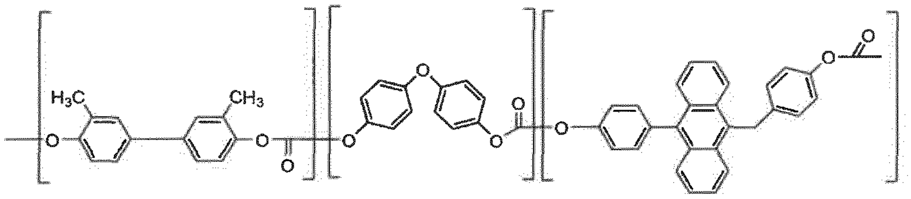

(PC-8)

The composition ratio (mol%) is OCBP:DHDE:BIPANT = 55:33:12.

The conjugated diene group (anthracene skeleton) concentration is 0.46 mmol/g.

Synthesis Example 9

Production of PC Polymer

A PC polymer (PC-9) having a structure below was obtained as in Synthesis Example 1 except that, in Synthesis Example 1, ZOCBP-CF was changed to OCBP-CF (112 mL) of Production Example 3, the methylene chloride (82 mL) initially used was not used, the amount of PTBP used was changed to 0.224 g, 3,3'-dimethyl-4,4'-dihydroxybiphenyl was changed to 6.2 g of 1,1-bis(3-methyl-4-hydroxyphenyl)ethane (hereinafter denoted by BisOCE), the amount of 9-(4-hydroxybenzyl)-10-(4-hydroxyphenyl)anthracene used was changed to 2.4 g, the aqueous potassium hydroxide solution was changed to 50 mL of a 2.1 N aqueous potassium hydroxide solution (potassium hydroxide: 5.8 g), and the amount of triethylamine used was changed to 1.4 mL.

Identification of PC Polymer

The PC polymer (PC-9) thus obtained was dissolved in methylene chloride to prepare a solution with a concentration of 0.5 g/dL, and a reduced viscosity [ηsp/C] at 20 degrees C was measured. The reduced viscosity was 1.07 dL/g. The structure and the composition of the obtained PC-9 were analyzed by $^1$H-NMR spectroscopy. The results confirmed that PC-9 was a PC polymer having the following repeating units, numbers of repeating units, and composition.

[Formula 44]

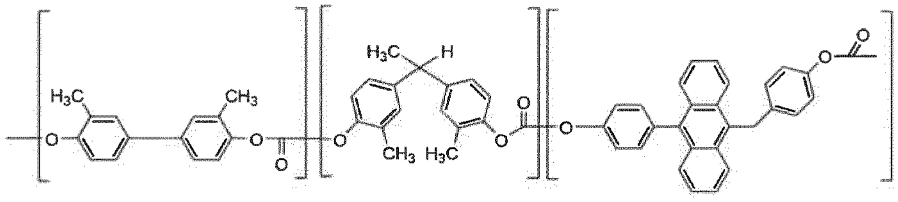

(PC-9)

The composition ratio (mol%) is OCBP:BisOCE:BIPANT = 56:34:10.
The conjugated diene group (anthracene skeleton) concentration is 0.39 mmol/g.

Synthesis Example 10

Production of PC Polymer

OCBP-CF (57 mL) of Production Example 3 was poured into a reactor equipped with a mechanical stirrer, a stirring blade, and a baffle plate. To this, p-tert-butylphenol (hereinafter denoted by PTBP) (0.107 g) serving as a terminal terminator and 2-(2-furanylmethyl)hydroquinone (hereinafter denoted by FR) (2.48 g) were added and stirred for 20 minutes to be sufficiently mixed while nitrogen gas was blown into the gas phase of the reactor at a flow rate of 0.2 L/min. After the oxygen concentration value of the gas phase read in a DO mode of a dissolved oxygen meter (DO meter MODEL B-506, manufactured by Iijima Electronics Corporation) was 0.5 mg/L or less, a measurement probe was immersed into the reaction solution to measure the oxygen concentration in the solution, and the reading was confirmed to be 0.5 mg/L or less as in the gas phase. After cooling was performed until the temperature inside the reactor was 10 degrees C, a 2.3 N aqueous potassium carbonate solution (prepared by dissolving 1.26 g of potassium carbonate in ion-exchange water (4 mL) and adding 50 mg of sodium hydrosulfite) was added to the reaction solution, and 0.7 mL of an aqueous triethylamine solution (7 vol%) was added thereto while stirring, and stirring was continued for 30 minutes. To this solution, the entire amount of a solution (prepared by preparing 20 mL of a 1.9 N of aqueous sodium hydroxide solution (sodium hydroxide: 1.5 g), cooling the solution to room temperature or lower, subsequently adding 50 mg of hydrosulfite serving as an antioxidant thereto, and completely dissolving hydrosulfite) was added, and stirring was further continued for 30 minutes.
The resulting reaction mixture was diluted in a nitrogen atmosphere with 200 mL of methylene chloride and 50 mLL of water whose oxygen concentrations were separately decreased to 0.1 mg/L or less by nitrogen purging, and washing was performed. The lower layer was separated and further washed with 100 mL of water once, with 100 mL of 0.03 N hydrochloric acid once, and with 100 mL of water three times in this order. The resulting methylene chloride solution was added dropwise to methanol under stirring, and the resulting reprecipitated substance was filtered and dried to obtain a PC polymer (PC-10) having a structure below.

Identification of PC Polymer

The PC polymer (PC-10) thus obtained was dissolved in methylene chloride to prepare a solution with a concentration of 0.5 g/dL, and a reduced viscosity [ηsp/C] at 20 degrees C was measured. The reduced viscosity was 1.56 dL/g. The structure and the composition of the obtained PC-10 were analyzed by $^1$H-NMR spectroscopy. The results confirmed that PC-10 was a PC polymer having the following repeating units, numbers of repeating units, and composition.

[Formula 45]

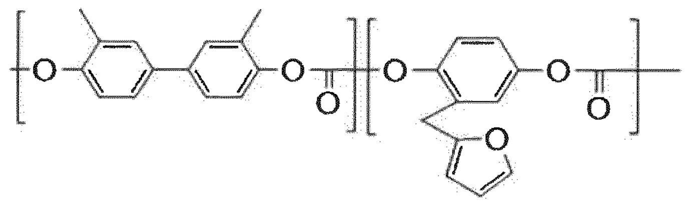

(PC-10)

The composition ratio (mol%) is OCBP:FR = 57:43.
The furan group concentration is 1.89 mmol/g.

Synthesis Example 11

Production of PC Polymer

OCBP-CF (56 mL) of Production Example 3 was poured into a reactor equipped with a mechanical stirrer, a stirring blade, and a baffle plate. p-tert-Butylphenol (hereinafter denoted by PTBP) (0.077 g) serving as a terminal terminator and 1,4-dihydroxyanthracene (hereinafter denoted by 1,4ANT) (0.68 g) were dissolved in 5 mL of acetone and added thereto, and the resulting mixture was stirred for 20 minutes to be sufficiently mixed while nitrogen gas was blown into the gas phase of the reactor at a flow rate of 0.2 L/min. After the oxygen concentration value of the gas phase read in a DO mode of a dissolved oxygen meter (DO meter MODEL B-506, manufactured by Iijima Electronics Corporation) was 0.5 mg/L or less, a measurement probe was immersed into the reaction solution to measure the oxygen concentration in the solution, and the reading was confirmed to be 0.5 mg/L or less as in the gas phase. After cooling was performed until the temperature inside the reactor was 10 degrees C, a 1.6 N aqueous potassium carbonate solution (prepared by dissolving 1.07 g of potassium carbonate in ion-exchange water (5 mL) and adding 50 mg of sodium hydrosulfite) was added to the reaction solution, and 0.7 mL of an aqueous triethylamine solution (7 vol%) was added thereto while stirring, and stirring was continued for 30 minutes. To this solution, the entire amount of a prepared 1,1-bis(3-methyl-4-hydroxyphenyl)ethane (3.1 g) solution (solution preparation method: A 2.4 N aqueous sodium hydroxide solution (16 mL) (sodium hydroxide: 1.5 g) was prepared and cooled to 10 degrees C or lower, 50 mg of hydrosulfite serving as an antioxidant was then added thereto and completely dissolved to prepare the solution) was added, and stirring was further continued for two hours and 30 minutes.
The resulting reaction mixture was diluted in a nitrogen atmosphere with 200 mL of methylene chloride and 50 mLL of water whose oxygen concentrations were separately decreased to 0.1 mg/L or less by nitrogen purging, and washing was performed. The lower layer was separated and further washed with 100 mL of water once, with 100 mL of 0.03 N hydrochloric acid once, and with 100 mL of water three times in this order. The resulting methylene chloride solution was added dropwise to methanol under stirring, and the resulting reprecipitated substance was filtered and dried to obtain a PC polymer (PC-11) having a structure below.

Identification of PC Polymer

The PC polymer (PC-1) thus obtained was dissolved in methylene chloride to prepare a solution with a concentration of 0.5 g/dL, and a reduced viscosity [ηsp/C] at 20 degrees C was measured. The reduced viscosity was 0.72 dL/g. The structure and the composition of the obtained PC-11 were analyzed by $^1$H-NMR spectroscopy. The results confirmed that PC-11 was a PC polymer having the following repeating units, numbers of repeating units, and composition.

[Formula 46]

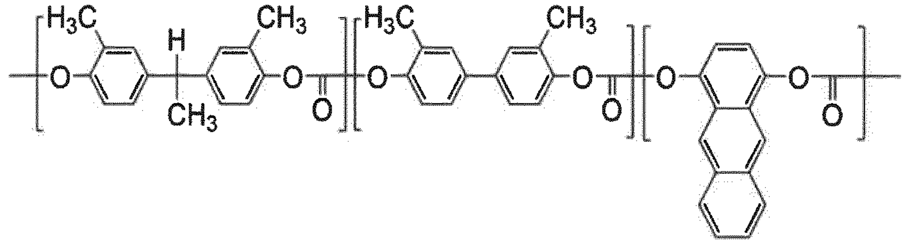

(PC-11)

The composition ratio (mol%) is BisOCE:OCBP:1,4ANT = 28:60:12.
The anthracene group concentration is 0.49 mmol/g.

Synthesis Example 12

Production of PC Polymer

A PC polymer (PC-12) having a structure below was obtained as in Synthesis Example 8 except that, in Synthesis Example 8, the amount of OCBP-CF used was changed to 29.2 mL, methylene chloride (16 mL) was added, 0.049 g of 9-(4-hydroxyphenyl)anthracene was used instead of PTBP, the amount of 4,4'-dihydroxydiphenyl ether (DHDE) was changed to 1.23 g, the amount of 9-(4-hydroxybenzyl)-10-(4-hydroxyphenyl)anthracene (hereinafter denoted by ANT1) used was changed to 0.57 g, the amount of the 2.1 N aqueous potassium hydroxide solution was changed to 12 mL (potassium hydroxide: 1.4 g), and the amount of triethylamine used was changed to 0.3 mL.

Identification of PC Polymer

The PC polymer (PC-12) thus obtained was dissolved in methylene chloride to prepare a solution with a concentration of 0.5 g/dL, and a reduced viscosity [ηsp/C] at 20 degrees C was measured. The reduced viscosity was 1.37 dL/g. The structure and the composition of the obtained PC-12 were analyzed by $^1$H-NMR spectroscopy. The results confirmed that PC-12 was a PC polymer having the following repeating units, numbers of repeating units, and composition.

[Formula 47]

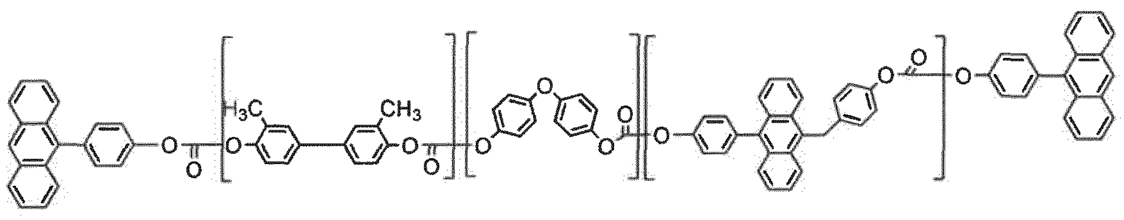

(PC-12)

The composition ratio (mol%) is OCBP:DHDE:BIPANT:ANT1 = 55:34:10:2.
The conjugated diene group (anthracene skeleton) concentration is 0.46 mmol/g.

Synthesis Example 13

Production of PAR Polymer

A polyarylate polymer (PAR-1) having a structure below was obtained as in Synthesis Example 12 except that, in Synthesis Example 12, 2.2 g of 4,4'-biphenyldicarboxylic acid chloride (DPE) (manufactured by Tokyo Formulaical Industry Co., Ltd.) was used instead of OCBP-CF, the amount of methylene chloride used was changed to 200 mL, 0.01 g of 2,3,5-trimethylphenol was used instead of PTBP, 4,4'-dihydroxydiphenyl ether (DHDE) was changed to 0.56 g of 1,1-bis(3-methyl-4-hydroxyphenyl)ethane, the 2.1 N aqueous potassium hydroxide solution was changed to 15 mL of a 0.15 N aqueous potassium hydroxide solution (potassium hydroxide: 1.3 g), and the amount of triethylamine used was changed to 0.5 mL.

Identification of PAR Polymer

The PC polymer (PAR-1) thus obtained was dissolved in methylene chloride to prepare a solution with a concentration of 0.5 g/dL, and a reduced viscosity [ηsp/C] at 20 degrees C was measured. The reduced viscosity was 0.27 dL/g. The structure and the composition of the obtained PAR-1 were analyzed by $^1$H-NMR spectroscopy. The results confirmed that PAR-1 was a PAR polymer having the following repeating units, numbers of repeating units, and composition.

[Formula 48]

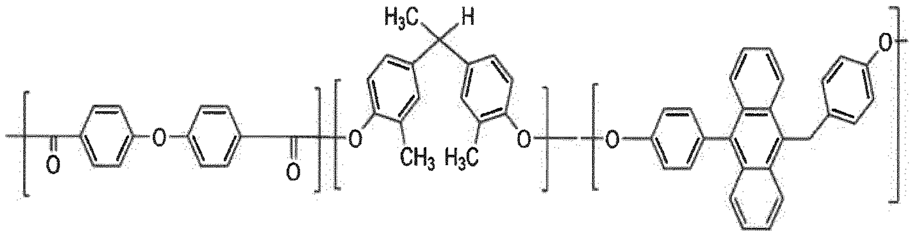

(PAR-1)

The composition ratio (mol%) is DPE:OCE:BIPANT = 52:34:14.
The conjugated diene group (anthracene skeleton) concentration is 0.52 mmol/g.

Example 1

Preparation of Coating Liquid Composition Formed from Polycarbonate Having Conjugated Diene Group and Polycarbonate Having Dienophile Group and Preparation of Cross-Linked Resin Film

In a sample tube with a screw cap, 1.5 g of PC-1 and 0.3 g of PC-2 were weighed and dissolved in 10 mL of tetrahydrofuran to obtain a coating liquid composition. The resulting coating liquid composition was applied to a polyimide film with a thickness of 50 μm by casting using an applicator with a gap of 200 μm to form a film. The film was air-dried for one hour and then treated in a vacuum dryer at a temperature of 50 degrees C for 16 hours to remove the solvent, thereby obtaining a precursor film.
The resulting precursor film was subjected to cross-linking treatment by heating in a reduced pressure dryer (degree of pressure reduction: 1 to 100 Pa) at a temperature of 200 degrees C for three hours to obtain a resin film.

Example 2

Preparation of Charge Transporting Layer Coating Liquid Composition Formed from Polycarbonate Having Conjugated Diene Group, Polycarbonate Having Dienophile Group, and Charge Transporting Substance and Preparation of Cross-Linked Resin Film

In a sample tube with a screw cap, 1.25 g of PC-1, 0.25 g of PC-2, and 1.0 g of a charge transporting substance (CTM-1) were weighed and dissolved in 10 mL of tetrahydrofuran to obtain a coating liquid composition. The resulting coating liquid composition was applied to a polyimide film with a thickness of 50 μm by casting using an applicator with a gap of 200 μm to form a film. The film was air-dried for one hour and then treated in a vacuum dryer at a temperature of 50 degrees C for 16 hours to remove the solvent, thereby obtaining a precursor film.
The resulting precursor film was subjected to cross-linking treatment by heating in a reduced pressure dryer (degree of pressure reduction: 1 to 100 Pa) at a temperature of 150 degrees C for three hours to obtain a resin film.

[Formula 49]

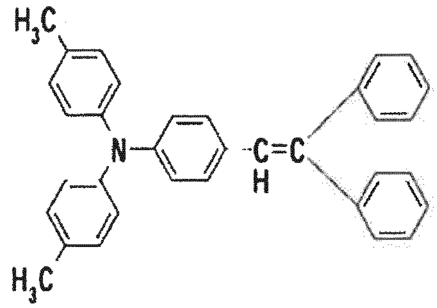

(CTM－1)

Comparative Example 1

A resin film (for an abrasion test) was obtained as in Example 1 except that PC-2 was not used in Example 1.

Comparative Example 2

A coating liquid composition and resin films (for an abrasion test and for evaluating electrical characteristics) were obtained as in Example 2 except that, in Example 2, PC-2 was not used, and the amount of PC-1 used was changed to 1.5 g.

Comparative Example 100

A resin film (for an abrasion test) was obtained as in Example 1 except that, in Example 1, neither PC-1 nor PC-2 was used, and a polycarbonate resin (amount used: 1.5 g) having a structure below was used.

[Formula 50]

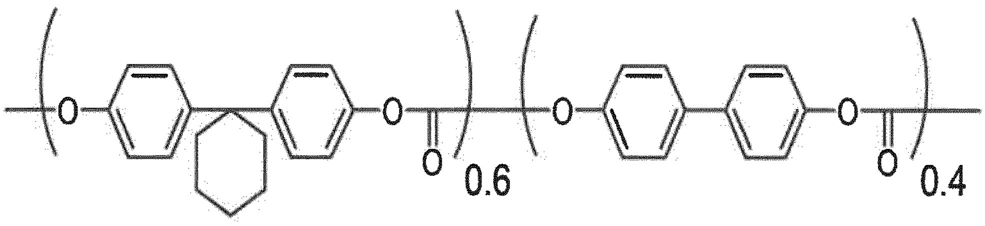

Comparative Example 101

A coating liquid composition and resin films (for an abrasion test and for evaluating electrical characteristics) were obtained as in Example 2 except that, in Example 2, neither PC-1 nor PC-2 was used, and the polycarbonate resin (amount used: 1.5 g) used in Comparative Example 100 was used.

Evaluation of Solvent Resistance (Solubility in Methylene Chloride)

The resin films after the cross-linking treatment were peeled off and placed in methylene chloride, and the appearance of each of the resin films was examined. The results are shown in Table 1.

The details of the evaluation of solvent resistance are as follows. A film having a thickness of 20 to 30 μm was cut to a rectangle of 1 cm × 2 cm to prepare a sample. The sample was placed in an 8 mL sample tube. Subsequently, 8 mL of methylene chloride was placed in the sample tube to completely immerse the sample in methylene chloride. The sample tube was shaken with a shaker at room temperature for one hour at a shaking speed of 120 rpm, and the appearance was then examined.

The criteria for evaluation are as follows.

D (Dissolved): No insoluble matter is visually observed.

C (Fragmented): Although fragmented insoluble matter remains, most part is dissolved.

B (Swelled): Although insoluble matter is in the form of one lump, the shape of the film is not maintained due to solvent swelling.

A (Insoluble): The shape of the film is maintained without swelling or with slight swelling.

Evaluation of Abrasion Resistance

Abrasion resistance of the cast surface of each of the resin films was evaluated with a Suga Abrasion Tester, Model: NUS-ISO-3 (manufactured by Suga Test Instruments Co., Ltd.). The test conditions were as follows. While abrasion paper (containing alumina particles with a particle size of 3 μm) to which a load of 4.9 N was applied was brought into contact with the cast surface (surface simulating a surface of a photosensitive layer), a reciprocating motion was performed 2,000 times, and a decrease in the mass (amount of abrasion) was measured. The results are shown in Table 1.

[Table 1]

| | Solvent resistance | Amount of abrasion (mg) |
|---|---|---|
| Example 1 | A | 0.22 |
| Example 2 | A | 0.43 |

(continued)

| | Solvent resistance | Amount of abrasion (mg) |
|---|---|---|
| Comparative Example 1 | D | 0. 35 |
| Comparative Example 2 | D | 0.66 |
| Comparative Example 100 | D | 0.38 |
| Comparative Example 101 | D | 0.64 |

Evaluation of Electrophotographic Photoreceptor Characteristics

An electrophotographic photoreceptor including a multilayer photosensitive layer was produced by sequentially stacking a charge generating layer and a charge transporting layer on a surface of an aluminum sheet used as a conductive base and having a film thickness of 100 μm. A charge generating substance used was 0.5 parts by mass of Y-type oxotitanium phthalocyanine, and a binder resin used was 0.5 parts by mass of a butyral resin. These were added to 19 parts by mass of THF serving as a solvent and dispersed in a ball mill. The resulting dispersion solution was applied to the surface of the conductive base film using a bar coater and dried at 70 degrees C for 30 minutes to form the charge generating layer having a thickness of about 0.5 μm.

Next, as a coating liquid composition for the charge transporting layer, a coating liquid composition prepared as in Example 2 except that the amount of CTM-1 used was changed to 0.75 g was applied onto the charge generating layer using an applicator with a gap of 200 μm and dried under reduced pressure (degree of pressure reduction: 1 to 100 Pa) at a temperature of 50 degrees C for eight hours and then at a temperature of 100 degrees C for eight hours to form the charge transporting layer having a thickness of about 30 μm. The resulting photoreceptor film was heated at a temperature of 150 degrees C for three hours to obtain a photoreceptor.

The obtained electrophotographic photoreceptor film was attached to an aluminum drum having a diameter ϕ of 60 mm, and electrophotographic characteristics were evaluated in terms of light attenuation characteristics of the surface potential in the EV mode using an electrostatic charging tester CYNTHIA54IM (manufactured by GENTECH Co., Ltd.). The initial amount of charge was -750 V.

The results are shown in Fig. 1.

For the coating liquid compositions obtained in Comparative Examples 2 and 101, the light attenuation characteristics of the surface potential were evaluated in the same manner as described above. The results are shown in Fig. 1.

Example 3

In a sample tube with a screw cap, 1.5 g of PC-5 (conjugated diene in which the composition ratio (mol%) is BisZ:BIPANT = 6:4) and 0.56 g of 2,2-bis[4-(4-maleimidophenoxy)phenyl]propane (hereinafter denoted by MI-BisA) represented by a formula (MI-BisA) below and serving as a dienophile were weighed and dissolved in 10 mL of tetrahydrofuran to obtain a coating liquid composition. The resulting coating liquid composition was applied to a polyimide film with a thickness of 50 μm by casting using an applicator with a gap of 200 μm to form a film. The film was air-dried for one hour and then treated in a vacuum dryer at a temperature of 50 degrees C for 16 hours to remove the solvent, thereby obtaining a precursor film.

The resulting precursor film was subjected to cross-linking treatment by heating in a reduced pressure dryer (degree of pressure reduction: 1 to 100 Pa) at a temperature of 200 degrees C for three hours to obtain a resin film. The solvent resistance (solubility in methylene chloride) and the abrasion resistance of the obtained resin film were evaluated by the methods described above. The results are shown in Table 2.

[Formula 51]

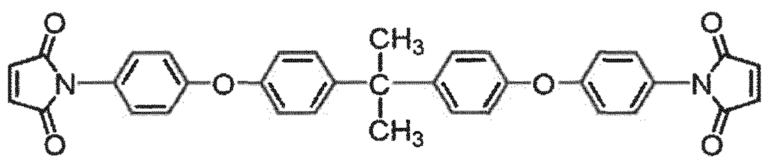

(MI-BisA)

Examples 4 to 12

Resin films were obtained as in Example 3 except that the conjugated diene, the dienophile, and the charge transporting substance were as described in Table 2 below, and furthermore, heating conditions were as described in Table 2 below. The solvent resistance and the abrasion resistance of the obtained resin films were evaluated by the methods described above. The results are shown in Table 2.

The charge transporting substance (CTM-2) is a mixture shown below.

[Formula 52]

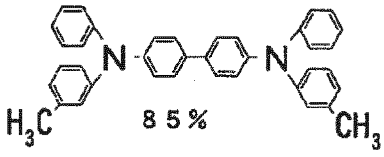

85 %

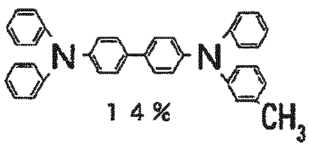

14 %

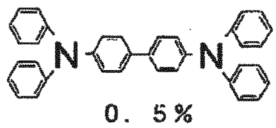

0. 5 %

(CTM−2)

Comparative Example 3-1

A resin film was obtained as in Example 3 except that, in Example 3, MI-BisA was not used, and heating conditions were changed to 100 degrees C and three hours. The solvent resistance and the abrasion resistance of the obtained resin film were evaluated by the methods described above. The results are shown in Table 2.

Comparative Examples 3 to 11

Resin films were obtained as in Comparative Example 3-1 except that the conjugated diene, the dienophile, and the charge transporting substance were as described in Table 2 below, and furthermore, heating conditions were as described in Table 2 below. The solvent resistance and the abrasion resistance of the obtained resin films were evaluated by the methods described above. The results are shown in Table 2.

[Table 2]

| | Conjugated diene | | Dienophile | | Charge transporting substance | | Heating conditions | | Solvent resistance Solubility in methylene chloride | Amount of abrasion mg |
|---|---|---|---|---|---|---|---|---|---|---|
| | Type | Amount | Type | Amount | Type | Amount | Temperature (°C) | Time (h) | | |
| Example 3 | PC-5 | 1.5 | MI-BisA | 0.56 | - | - | 200 | 3 | A | 0.48 |
| Comparative Example 3-1 | PC-5 | 1.5 | - | - | - | - | 100 | 3 | D | 0.75 |
| Comparative Example 3-2 | PC-5 | 1.5 | - | - | - | - | 200 | 3 | D | 0.81 |
| Example 4-1 | PC-5 | 1.5 | MI-BisA | 0.56 | CTM-1 | 1.0 | 100 | 3 | A | 0.55 |
| Example 4-2 | PC-5 | 1.5 | MI-BisA | 0.56 | CTM-1 | 1.0 | 150 | 3 | A | 0.61 |
| Comparative Example 4-1 | PC-5 | 1.5 | | | CTM-1 | 1.0 | 100 | 3 | D | 1.00 |
| Comparative Example 4-2 | PC-5 | 1.5 | | | CTM-1 | 1.0 | 150 | 3 | D | 1.04 |
| Example 5-1 | PC-3 | 1.5 | MI-BisA | 0.17 | - | - | 150 | 3 | A | 0 26 |
| Example 5-2 | PC-3 | 1.5 | MI-BisA | 0.17 | - | - | 200 | 3 | A | 0.20 |
| Example 5-3 | PC-3 | 1.5 | PC-2 | 0.17 | - | - | 200 | 3 | A | 0.21 |
| Comparative Example 5 | PC-3 | 1.5 | - | - | - | - | 100 | 3 | D | 0.29 |
| Example 6-1 | PC-3 | 1.35 | PC-2 | 0.15 | CTM-1 | 1.0 | 150 | 3 | A | 0.36 |
| Example 6-2 | PC-3 | 1.35 | PC-2 | 015 | CTM-2 | 1.0 | 150 | 3 | A | 0.44 |
| Comparative Example 6-1 | PC-3 | 1.5 | - | - | CTM-1 | 1.0 | 100 | 8 | D | 0.51 |
| Comparative Example 6-2 | PC-3 | 1.5 | - | - | CTM-2 | 1.0 | 100 | 8 | D | 0.58 |

(continued)

| | Conjugated diene | | Dienophile | | Charge transporting substance | | Heating conditions | | Solvent resistance Solubility in methylene chloride | Amount of abrasion mg |
|---|---|---|---|---|---|---|---|---|---|---|
| | Type | Amount | Type | Amount | Type | Amount | Temperature (°C) | Time (h) | | |
| Example 7-1 | PC-1 | 1.25 | PC-2 | 0.25 | CTM-1 | 1.0 | 150 | 3 | A | 0.43 |
| Example 7-2 | PC-1 | 1.25 | PC-2 | 0.25 | CTM-2 | 1.0 | 150 | 3 | A | 0.57 |
| Comparative Example 7-1 | PC-1 | 1.5 | - | - | CTM-1 | 1.0 | 100 | 8 | D | 0.66 |
| Comparative Example 7-2 | PC-1 | 1.5 | - | - | CTM-2 | 1.0 | 100 | 8 | D | 0.89 |
| Example 8-1 | PC-4 | 1.5 | PC-2 | 0.6 | - | - | 150 | 3 | A | 0.22 |
| Example 8-2 | PC-4 | 1.5 | PC-2 | 0.6 | - | - | 200 | 3 | A | 0.21 |
| Comparative Example 8 | PC-4 | 1.5 | - | - | - | - | 100 | 3 | D | 0.30 |
| Example 9-1 | PC-4 | 1.07 | PC-2 | 0.43 | CTM-1 | 1.0 | 150 | 3 | A | 0.30 |
| Example 9-2 | PC-4 | 1.07 | PC-2 | 0.43 | CTM-2 | 1.0 | 150 | 3 | A | 0.37 |
| Comparative Example 9-1 | PC-4 | 1.5 | - | - | CTM-1 | 1.0 | 150 | 3 | D | 0.62 |
| Comparative Example 9-2 | PC-4 | 1.5 | - | - | CTM-2 | 1.0 | 150 | 3 | D | 0.60 |
| Example 10 | PC-6 | 1.15 | MI-BisA | 0.35 | - | - | 200 | 3 | A | 0.35 |
| Comparative Example 10 | PC-6 | 1.5 | - | - | - | - | 100 | 3 | D | 0.45 |
| Example 11 | PC-6 | 1.15 | MI-BisA | 0.35 | CTM-1 | 1.0 | 150 | 3 | A | 0.45 |
| Comparative Example 11 | PC-6 | 1.5 | - | - | CTM-1 | 1.0 | 100 | 3 | D | 0.81 |
| Example 12 | PC-7 | 1.5 | - | - | - | - | 200 | 3 | A | 0.29 |

Examples 13 to 17

Resin film were obtained as in Exmaple 3 except that the conjugated diene, dienophile, and the charge transporting substance were as described in Table 3 below, furthermore, heating conditions were as described in Table 3 below, and the number of repetitions of the abrasion test was changed to 800. The solvent resistance and the abrasion resistance of the obtained resin films were evaluated by the methods described above. The results are shown in Table 3.

Comparative Examples 13 to 17

Resin films were obtained as in Comparative Example 3-1 except that the conjugated diene, the dienophile, and the charge transporting substance were as described in Table 3 below, furthermore, heating conditions were as described in Table 3 below, and the number of repetitions of the abrasion test was changed to 800. The solvent resistance and the abrasion resistance of the obtained resin films were evaluated by the methods described above. The results are shown in Table 3.

[Table 3]

| | Conjugated diene | | Dienophile | | Charge transporting substance | | Heating conditions | | Solvent resistance Solubility in methylene chloride | Amount of abrasion mg |
|---|---|---|---|---|---|---|---|---|---|---|
| | Type | Amount | Type | Amount | Type | Amount | Temperature (°C) | Time (h) | | |
| Example 13-1 | PC-8 | 1.25 | PC-2 | 0.25 | CTM-1 | 1 | 140 | 1 | A | 0.22 |
| Example 13-2 | PC-8 | 1.34 | MI-BisA | 0.16 | CTM-1 | 1 | 140 | 1 | A | 0.19 |
| Comparative Example 13 | PC-8 | 1.5 | - | - | CTM-1 | 1 | 140 | 1 | D | 0.25 |
| Example 14-1 | PC-9 | 1.25 | PC-2 | 0.25 | CTM-1 | 1 | 140 | 1 | A | 0.15 |
| Example 14-2 | PC-9 | 1.34 | MI-BisA | 0.16 | CTM-1 | 1 | 140 | 1 | A | 0.14 |
| Comparative Example 14 | PC-9 | 1.5 | - | - | CTM-1 | 1 | 140 | 1 | D | 0.22 |
| Example 15-1 | PC-10 | 1.25 | PC-2 | 0.25 | CTM-1 | | 140 | 1 | A | 0.32 |
| Example 15-2 | PC-10 | 1.34 | MI-BisA | 0.16 | CTM-1 | 1 | 140 | 1 | A | 0.23 |
| Comparative Example 15 | PC-10 | 1.5 | - | - | CTM-1 | 1 | 140 | 1 | D | 0.37 |
| Example 16-1 | PC-11 | 1.25 | PC-2 | 0.25 | CTM-1 | 1 | 140 | 1 | A | 0.24 |
| Example 16-2 | PC-11 | 1.34 | MI-BisA | 0.16 | CTM-1 | 1 | 140 | 1 | A | 0.25 |
| Comparative Example 16 | PC-11 | 1.5 | - | - | CTM-1 | 1 | 140 | 1 | D | 0.34 |
| Example 17-1 | PC-12 | 1.25 | PC-2 | 0.25 | CTM-1 | 1 | 140 | 1 | A | 0.13 |
| Example 17-2 | PC-12 | 1.34 | MI-BisA | 0.16 | CTM-1 | 1 | 140 | 1 | A | 0.17 |
| Comparative Example 17 | PC-12 | 1.5 | - | - | CTM-1 | 1 | 140 | 1 | D | 0.21 |

Example 18

Preparation of Coating Liquid Composition Formed from Polyarylate Having Conjugated Diene Group and Polycarbonate Having Dienophile Group and Preparation of Cross-Linked Resin Film

In a sample tube with a screw cap, 1.2 g of PAR-1 and 0.3 g of PC-2 were weighed and dissolved in 10 mL of tetrahydrofuran to obtain a coating liquid composition. The resulting coating liquid composition was applied to a PET film with a thickness of 250 μm by casting using an applicator with a gap of 200 μm to form a film. The film was air-dried for one hour and then treated in a vacuum dryer at a temperature of 50 degrees C for 16 hours to remove the solvent, thereby obtaining a precursor film.
The resulting precursor film was subjected to cross-linking treatment by heating in a reduced pressure dryer (degree of pressure reduction: 1 to 100 Pa) at a temperature of 200 degrees C for one hour to obtain a resin film.

Example 19

Preparation of Charge Transporting Layer Coating Liquid Composition Formed from Polyarylate Having Conjugated Diene Group, Polycarbonate Having Dienophile Group, and Charge Transporting Substance and Preparation of Cross-Linked Resin Film

In a sample tube with a screw cap, 1.25 g of PAR-1, 0.25 g of PC-2, and 1.0 g of a charge transporting substance (CTM-1) were weighed and dissolved in 10 mL of tetrahydrofuran to obtain a coating liquid composition. The resulting coating liquid composition was applied to a PET film with a thickness of 250 μm by casting using an applicator with a gap of 200 μm to form a film. The film was air-dried for one hour and then treated in a vacuum dryer at a temperature of 50 degrees C for 16 hours to remove the solvent, thereby obtaining a precursor film.
The resulting precursor film was subjected to cross-linking treatment by heating in a reduced pressure dryer (degree of pressure reduction: 1 to 100 Pa) at a temperature of 150 degrees C for one hour to obtain a resin film.

Comparative Example 18

A resin film was obtained as in Example 18 except that, in Example 18, PC-2 was not used, and the amount of PAR-1 used was changed to 1.5 g.

Comparative Example 19

A coating liquid composition and a resin film were obtained as in Example 2 except that, in Example 19, PC-2 was not used, and the amount of PAR-1 used was changed to 1.5 g.
For the resin films prepared in Examples 18 and 19 and Comparative Examples 18 and 19, the solvent resistance was evaluated by the method described above. The results are shown in Table 4.

[Table 4]

| | Solvent resistance (Solubility in methylene chloride) |
|---|---|
| Example 18 | A |
| Example 19 | A |
| Comparative Example 18 | D |
| Comparative Example 19 | D |

Confirmation of Cross-Linking Reaction

The precursor film prepared in Example 3 was peeled off and subjected to DSC ("diamond DSC" manufactured by PerkinElmer Co., Ltd.) measurement under the measurement conditions described below. The results are shown in Fig. 2.

Measurement Conditions

Temperature increase rate: 5 degrees C/min, Measurement range: The temperature was increased from 50

degrees C to 300 degrees C.

In Fig. 2, a large exothermic peak was observed in a temperature range around the heat treatment temperature (200 degrees C) in Example 3, and this confirmed that exothermic reaction was caused by heating.

A film obtained after drying for the purpose of removing the solvent (after drying at 50 degrees C for 16 hours) in Example 3, a film obtained after the above film was heat-treated at 200 degrees C for three hours, and the film of Comparative Example 3-1 were peeled off and subjected to three-dimensional excitation-emission matrix fluorescence spectroscopy. The results are shown in Fig. 3.

Measurement Conditions

Apparatus used: "FP-8600" manufactured by JASCO Corporation
Excitation wavelength: 300 to 500 nm
Fluorescence wavelength: 300 to 600 nm
Data acquisition interval: (Excitation) 5 nm, (Fluorescence) 4 nm
Sensitivity: high
Fluorescence band: 5.0 nm
Excitation band width: 5.0 nm
Response: 0.5 sec
Scan rate: 500 nm/min
Measurement method: A film fixed to a slide glass was disposed such that an angle with respect to a light source and a detector was 45° and subjected to the measurement.

The spectra shown in Fig. 3 are results obtained by cutting out measured three-dimensional fluorescence spectra at an excitation wavelength of 350 nm and in a fluorescence wavelength range of 400 to 600 nm.

In the resin film shown in Comparative Example 3-1, fluorescence specific to the anthracene skeleton was observed. In contrast, in the film obtained by mixing the PC having a maleimide group in Example 1, the fluorescence intensity significantly decreased even under the drying conditions (50 degrees C, 16 hours) for removing the solvent. After heat treatment was further performed at 200 degrees C for three hours, fluorescence was not observed. These results confirmed that the anthracene skeleton was converted, by reaction, into a skeleton that does not have fluorescence.

The film obtained after heat treatment at 200 degrees C for three hours in Example 3 was peeled off and subjected to hydrolysis of carbonate bonds under alkaline conditions, and fragmented components were analyzed by LC-MS.

Examination Conditions

After 0.05 g of the specimen was dissolved in 15 mL of methylene chloride, 3 mL of 1 N-KOH/methanol was added thereto. The resulting solution was stirred for 30 minutes, and the solvent was then dried by nitrogen blowing at 40 degrees C. The specimen was dissolved in 10 mL of ion-exchange water and neutralized with 2 N-HCl. The volume of the resulting solution was adjusted to 50 mL by using acetonitrile, and solid matter was removed with a 0.45 μm chromatodisc. Subsequently, the obtained specimen was subjected to LC-MS measurement under the following conditions.

Apparatus:

LC unit (UPLC H-Class, manufactured by Waters Corporation)
MS unit (XevoG2XS QTof, manufactured by Waters Corporation)
Column: BEH C18 (1.7 μm × 2.1 mm × 50 mm)
Column temperature: 40 degrees C
Amount of injection: 1.0 μL
Flow rate: 0.50 mL/min
Eluent:

0 to 2 min, aqueous ammonium acetate solution (0.2 mol/L):acetonitrile = 7:3

2 to 6 min, aqueous ammonium acetate solution (0.2 mol/L):acetonitrile = 7:3

6 to 8 min, aqueous ammonium acetate solution (0.2 mol/L):acetonitrile = 3:7

8 to 8.5 min, aqueous ammonium acetate solution (0.2 mol/L):acetonitrile:THF = 5:45:50

8.5 min to last, aqueous ammonium acetate solution (0.2 mol/L):acetonitrile = 7:3

MS conditions

Ionization method: ESI±
Mass range: 50 to 1500

Examination Results

A mass peak due to a compound having a probable structure below with a mass of 1323.48 was detected in a component at an elution time of 7.3 to 7.6.

[Formula 53]

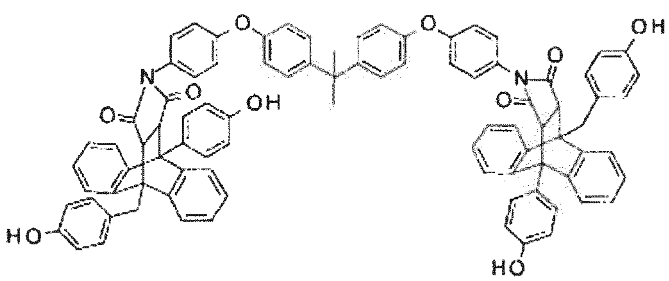

Formula Weight : 1323.48(7)
Exact Mass : 1322.4717
Formula : $C_{89}H_{66}N_2O_{10}$

M-H:1321.46373
M+H:1323.47967

This compound is considered to be a component generated by binding the 9-(4-hydroxybenzyl)-10-(4-hydroxyphenyl)anthracene component in the PC polymer (PC-5) with 2,2-bis[4-(4-maleimidophenoxy)phenyl]propane used as a cross-linking agent by Diels-Alder reaction, and further subjecting carbonate groups to hydrolysis with an alkali.

On the basis of the above results and a general reaction form related to Diels-Alder reaction, it was confirmed that a resin having a cross-linked structure below was generated by heating a cross-linking precursor composition.

[Formula 54]

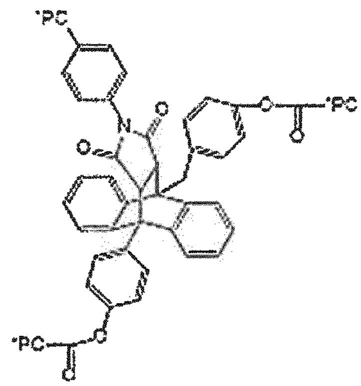

## Claims

1. At least one resin selected from the group consisting of aromatic polycarbonates and polyarylates, the resin comprising a bond between polymer chains formed by Diels-Alder reaction.

2. The resin according to claim 1, wherein the bond between polymer chains is formed by reaction between a polymer having two or more conjugated diene structures in a polymer chain and a compound having di- or higher-functional dienophile groups.

3. The resin according to claim 1, wherein the bond between polymer chains is formed by reaction between a polymer having two or more dienophile structures in a polymer chain and a compound having di- or higher-functional conjugated diene groups.

4. The resin according to claim 1, wherein the bond between polymer chains is formed by reaction between a polymer having two or more conjugated diene structures in a polymer chain and a polymer having two or more dienophile structures in a polymer chain.

5. The resin according to any one of claims 2 to 4, wherein the polymer does not have two or more of at least one of the conjugated diene structures or the dienophile structures at a terminal of the polymer chain.

6. The resin according to any one of claims 2 to 5, wherein the polymer has one or more of at least one of the conjugated diene structures or the dienophile structures in a main chain of the polymer chain.

7. The resin according to claim 1, wherein the bond between polymer chains is formed by at least one of reactions (iii-1) to (iii-8) below:

   (iii-1) reaction between a polymer having two dienophile structures, the polymer having one of the dienophile structures at one terminal of a polymer chain and having the other dienophile structure at the other terminal of the polymer chain, and a polymer having more than two conjugated diene structures in a polymer chain,
   (iii-2) reaction between a polymer having two dienophile structures, the polymer having one of the dienophile structures at one terminal of a polymer chain and having the other dienophile structure at the other terminal of the polymer chain, and a polymer having more than two conjugated diene structures in a polymer chain, the polymer having one of the conjugated diene structures at one terminal of the polymer chain, having another one of the conjugated diene structures at the other terminal of the polymer chain, and also having one or more of the conjugated diene structures in a main chain,
   (iii-3) reaction between a polymer having two dienophile structures, the polymer having one of the dienophile structures at one terminal of a polymer chain and having the other dienophile structure at the other terminal of the polymer chain, and a polymer having more than two conjugated diene structures in a polymer chain, the polymer having one of the conjugated diene structures at one terminal of the polymer chain, having none of the conjugated diene structures at the other terminal of the polymer chain, and having two or more of the conjugated

diene structures in a main chain,

(iii-4) reaction between a polymer having two dienophile structures, the polymer having one of the dienophile structures at one terminal of a polymer chain and having the other dienophile structure at the other terminal of the polymer chain, and a polymer having no conjugated diene structure at each terminal of a polymer chain and having more than two conjugated diene structures in a main chain,

(iii-5) reaction between a polymer having two conjugated diene structures, the polymer having one of the conjugated diene structures at one terminal of a polymer chain and having the other conjugated diene structure at the other terminal of the polymer chain, and a polymer having more than two dienophile structures in a polymer chain,

(iii-6) reaction between a polymer having two conjugated diene structures, the polymer having one of the conjugated diene structures at one terminal of a polymer chain and having the other conjugated diene structure at the other terminal of the polymer chain, and a polymer having more than two dienophile structures in a polymer chain, the polymer having one of the dienophile structures at one terminal of the polymer chain, having another one of the dienophile structures at the other terminal of the polymer chain, and also having one or more of the dienophile structures in a main chain,

(iii-7) reaction between a polymer having two conjugated diene structures, the polymer having one of the conjugated diene structures at one terminal of a polymer chain and having the other conjugated diene structure at the other terminal of the polymer chain, and a polymer having more than two dienophile structures in a polymer chain, the polymer having one of the dienophile structures at one terminal of the polymer chain, having none of the dienophile structures at the other terminal of the polymer chain, and having two or more of the dienophile structures in a main chain, or

(iii-8) reaction between a polymer having two conjugated diene structures, the polymer having one of the conjugated diene structures at one terminal of a polymer chain and having the other conjugated diene structure at the other terminal of the polymer chain, and a polymer having no dienophile structure at each terminal of a polymer chain and having more than two dienophile structures in a main chain.

**8.** The resin according to claim 1, wherein the bond between polymer chains is formed by reaction of a polymer which has both a conjugated diene structure and a dienophile structure in a single polymer chain and in which average numbers of the conjugated diene structures and the dienophile structures per one polymer chain are each 1 or more.

**9.** The resin according to claim 8, wherein the polymer does not have two or more of at least one of the conjugated diene structure or the dienophile structure at a terminal of the polymer chain.

**10.** The resin according to claim 8 or 9, wherein the polymer has one or more of at least one of the conjugated diene structure or the dienophile structure in a main chain of the polymer chain.

**11.** The resin according to any one of claims 2 to 10, wherein

the conjugated diene structure or the conjugated diene group includes at least one of structures represented by formulae (DE1) and (DE2) below:

[Formula 1]

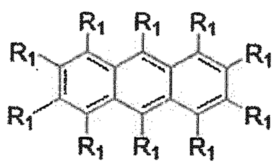

(DE1)

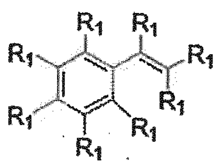

(DE2)

where, in the formulae (DE1) and (DE2):

each $R_1$ is independently a single bond, a bonding group to another skeleton, a hydrogen atom, an aliphatic hydrocarbon group having 1 to 12 carbon atoms, an aromatic hydrocarbon group having 6 to 12 ring carbon atoms, or an alkoxy group having 1 to 10 carbon atoms;

one or two of $R_1$ are a single bond or a linking group to another skeleton;
$R_1$ serving as the linking group is a group which contains at least one atom selected from the group consisting of a carbon atom, an oxygen atom, a nitrogen atom, a sulfur atom, a silicon atom, a phosphorus atom, and a boron atom and in which bonding forms between atoms constituting the linking group are each a covalent bond; and
a plurality of $R_1$ are optionally linked together to form a cyclic structure (including an aromatic ring and a heterocycle).

**12.** The resin according to claim 11, wherein

the conjugated diene structure or the conjugated diene group includes at least one of structures represented by formulae (DE3) to (DE8) below:

[Formula 2]

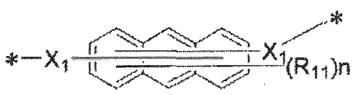

(DE3)

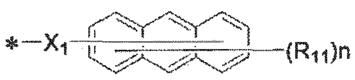

(DE4)

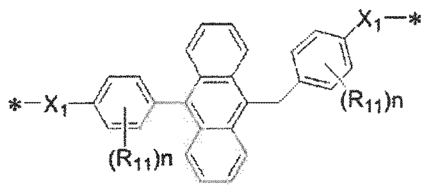

(DE5)

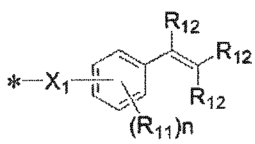

(DE6)

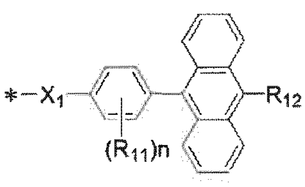

(DE7)

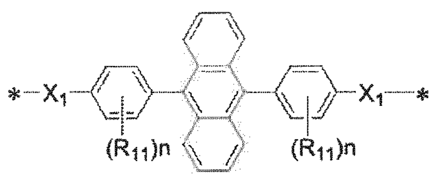

(DE8)

where, in the formulae (DE3) to (DE8):

each $X_1$ is independently -O-, -(C=O)-O-, -O-(C=O)-O-, -O-(C=O)-, or - S-;
each $R_{11}$ is independently a hydrogen atom, an aliphatic hydrocarbon group having 1 to 12 carbon atoms, an aromatic hydrocarbon group having 6 to 12 ring carbon atoms, or an alkoxy group having 1 to 10 carbon atoms, and
a plurality of $R_{11}$ are optionally linked together to form a cyclic structure (including an aromatic ring and a heterocycle);
each $R_{12}$ is independently a hydrogen atom, an aliphatic hydrocarbon group having 1 to 12 carbon atoms, or an aromatic hydrocarbon group having 6 to 12 carbon atoms; and
n represents 0 or a natural number whose upper limit is the number of substitutable positions.

**13.** The resin according to claim 12, wherein

the conjugated diene structure or the conjugated diene group includes at least one of structures represented by formulae (DE9) to (DE16) below:

[Formula 3]

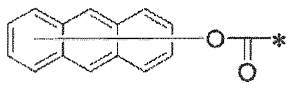

(DE9)

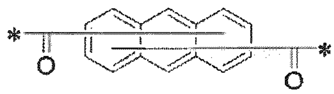

(DE10)

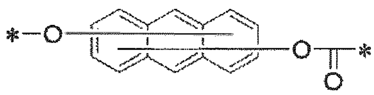

(DE11)

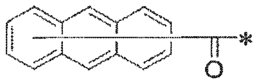

(DE12)

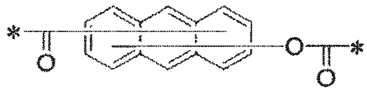

(DE13)

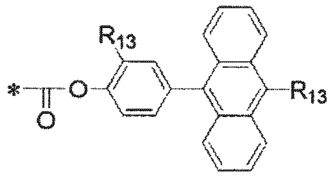

(DE14)

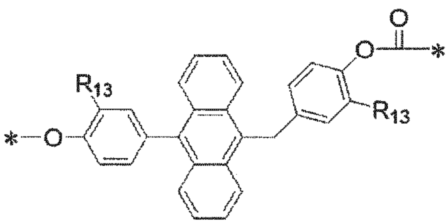

(DE15)

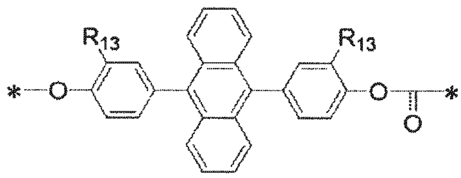

(DE16)

where, in the formulae (DE9) to (DE16), each $R_{13}$ is independently a hydrogen atom, an aliphatic hydrocarbon group having 1 to 12 carbon atoms, or an aromatic hydrocarbon group having 6 to 12 carbon atoms.

**14.** The resin according to claim 11, wherein

the conjugated diene structure or the conjugated diene group includes at least one of structures represented by formulae (DE17) and (DE18) below:

[Formula 4]

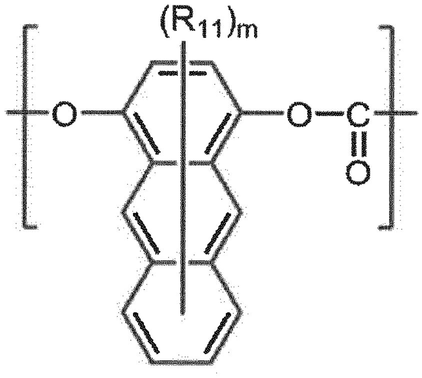

(DE17)

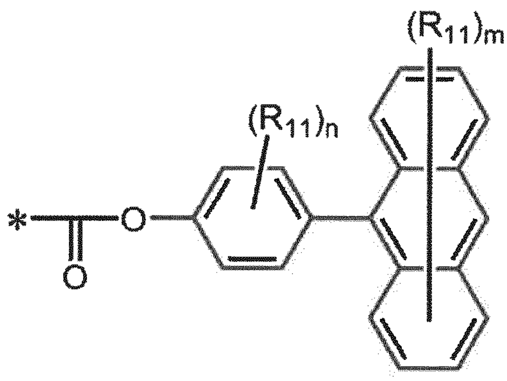

(DE18)

where, in the formulae (DE17) and (DE18):

each $R_{11}$ is independently an aliphatic hydrocarbon group having 1 to 12 carbon atoms, an aromatic hydrocarbon group having 6 to 12 ring carbon atoms, or an alkoxy group having 1 to 10 carbon atoms; and a plurality of $R_{11}$ are optionally linked together to form a cyclic structure (including an aromatic ring and a heterocycle),

in the formula (DE17), m represents an integer in a range from 0 to 8, and

in the formula (DE18), n represents an integer in a range from 0 to 4, and m represents an integer in a range from 0 to 9.

**15.** The resin according to any one of claims 2 to 10, wherein

the conjugated diene structure or the conjugated diene group includes at least one structure represented by a formula (DE19) below:

[Formula 5]

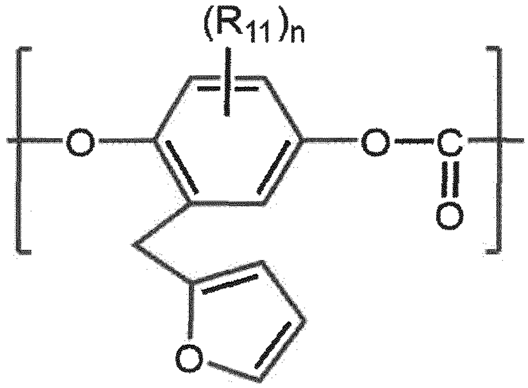

(DE19)

where, in the formula (DE19):

each $R_{11}$ is independently an aliphatic hydrocarbon group having 1 to 12 carbon atoms, an aromatic hydrocarbon group having 6 to 12 ring carbon atoms, or an alkoxy group having 1 to 10 carbon atoms;

a plurality of $R_{11}$ are optionally linked together to form a cyclic structure (including an aromatic ring and a heterocycle); and

n represents an integer in a range from 0 to 3.

**16.** The resin according to any one of claims 2 to 15, wherein

the dienophile structure or the dienophile group includes a structure represented by a formula (DP1) below:

[Formula 6]

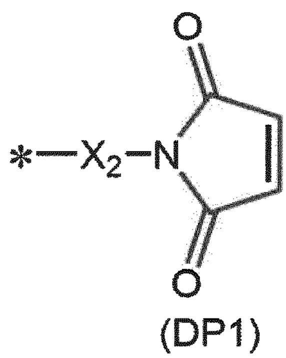

(DP1)

where, in the formula (DP1):

$X_2$ is a single bond or a linking group to another skeleton;

$X_2$ serving as the linking group is a group which contains at least one atom selected from the group consisting of a carbon atom, an oxygen atom, a nitrogen atom, a sulfur atom, a silicon atom, a phosphorus atom, and a boron atom; and

in which bonding forms between atoms constituting the linking group are each a covalent bond.

**17.** The resin according to claim 16, wherein

the dienophile structure or the dienophile group is included in at least one of structures represented by formulae (DP2) and (DP3) below:

[Formula 7]

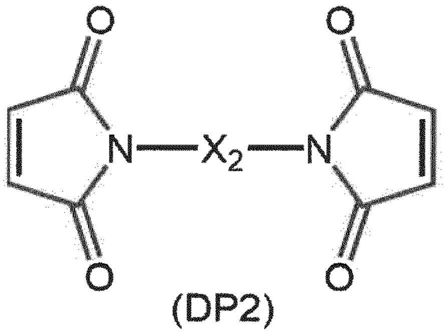

(DP2)

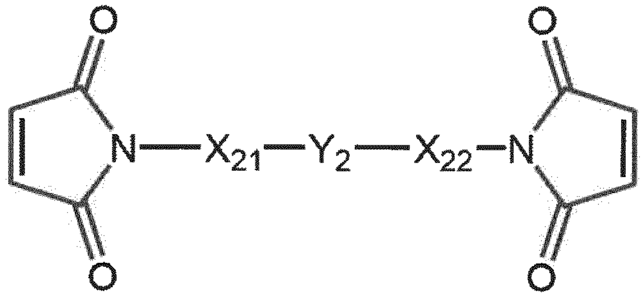

(DP3)

where, $X_2$ in the formula (DP2) and $X_{21}$ and $X_{22}$ in the formula (DP3) each independently represent the same as $X_2$ in the formula (DP1), and

$Y_2$ in the formula (DP3) is a group including an aromatic polycarbonate skeleton or a polyarylate skeleton.

**18.** The resin according to claim 16 or 17, wherein
the dienophile structure or the dienophile group includes a structure represented by a formula (DP4) below,

[Formula 8]

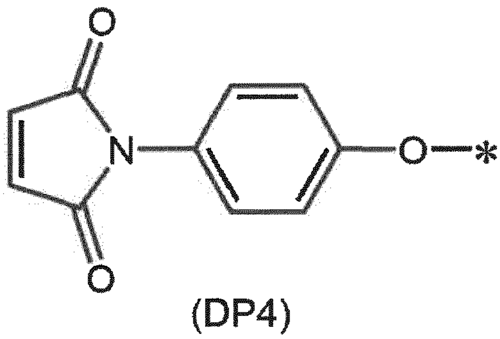

(DP4)

**19.** The resin according to any one of claims 1 to 18, comprising at least one of structures represented by formulae (UN1) and (UN2) below:

[Formula 9]

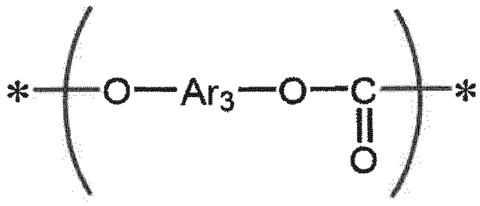

(UN1)

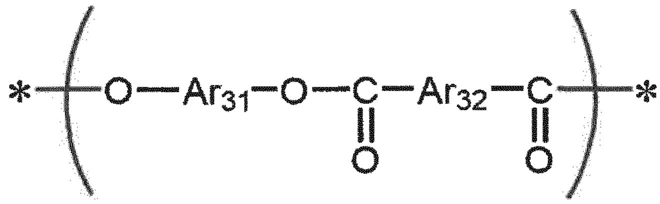

(UN2)

where, in the formulae (UN1) and (UN2), $Ar_3$, $Ar_{31}$, and $Ar_{32}$ are each independently a group represented by a formula (UN11) below,

[Formula 10]

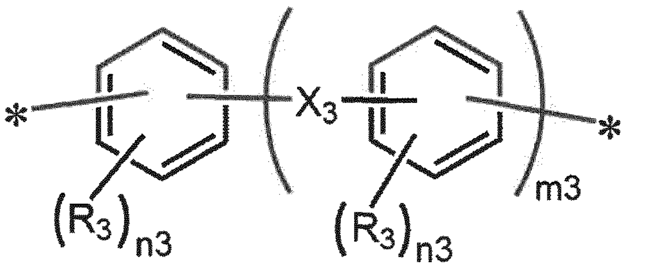

(UN11)

where, in the formula (UN11):

m3 is 0, 1, or 2;
n3 is 4;
a plurality of $R_3$ are each independently a hydrogen atom, a halogen atom, an alkyl having 1 to 10 carbon atoms, an aryl having 6 to 12 ring carbon atoms, or a fluorinated alkyl having 1 to 10 carbon atoms;
each $X_3$ is independently a group constituted by one or two or more selected from the group consisting of a single bond, $-C(-R_{31})_2-$, -O-, -S-, -SO-, $-SO_2-$, $-N(-R_{32})-$, $-P(-R_{33})-$, $-P{=}O(-R_{34})-$, a carbonyl, an ester, an amide, an alkylene having 2 to 20 carbon atoms, an alkylidene having 2 to 20 carbon atoms, a cycloalkylene having 3 to 20 ring carbon atoms, a cycloalkylidene having 3 to 20 ring carbon atoms, an arylene having 6 to 20 ring carbon atoms, a bicycloalkanediyl having 4 to 20 ring carbon atoms, a tricycloalkanediyl having 5 to 20 ring carbon atoms, a bicycloalkylidene having 4 to 20 ring carbon atoms, and a tricycloalkylidene having 5 to 20 ring carbon atoms; and
$R_{31}$ to $R_{34}$ are each independently a hydrogen atom, a halogen atom, an alkyl having 1 to 10 carbon atoms, an aryl having 6 to 12 ring carbon atoms, or a fluorinated alkyl having 1 to 10 carbon atoms.

**20.** A resin precursor composition capable of producing the resin according to any one of claims 1 to 19 by cross-linking reaction.

**21.** A coating liquid composition comprising the resin precursor composition according to claim 20 and an organic solvent.

**22.** An electrophotographic photoreceptor comprising the resin according to any one of claims 1 to 19 in an outermost layer.

**23.** A method for producing an electrophotographic photoreceptor, comprising:

applying the coating liquid composition according to claim 21 to a conductive base by a wet molding method;
removing the organic solvent in the coating liquid composition by performing heating; and
performing cross-linking reaction of the resin precursor composition in the coating liquid composition either simultaneously with the heating in the removal of the organic solvent or by continuously performing heating.

**24.** A molded product comprising the resin according to any one of claims 1 to 19.

**25.** An electronic device comprising the resin according to any one of claims 1 to 19.

FIG. 1

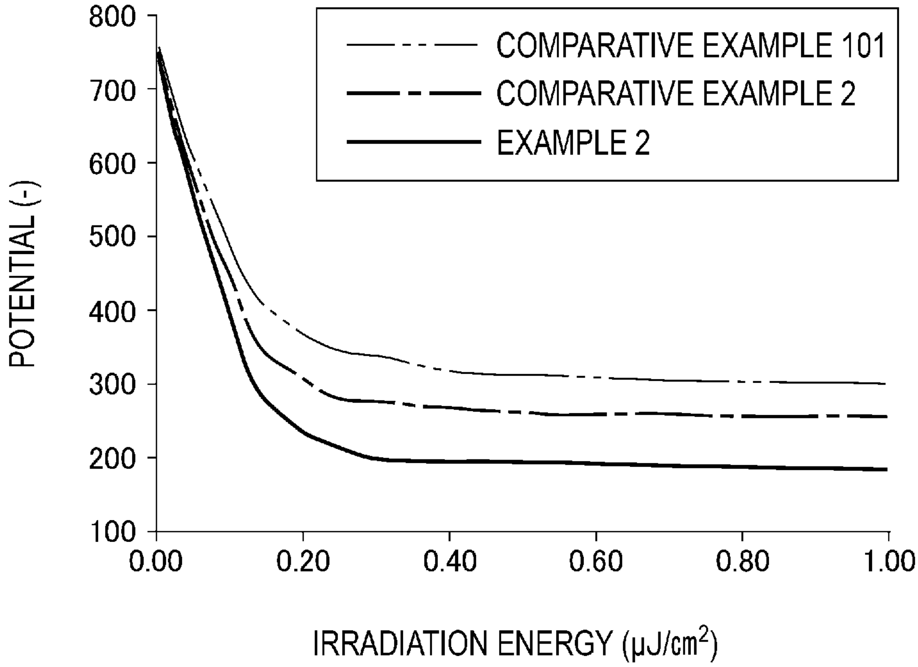
800
700
600
500
400
300
200
100
POTENTIAL (-)
0.00
0.20
0.40
0.60
0.80
1.00
IRRADIATION ENERGY (μJ/cm²)
COMPARATIVE EXAMPLE 101
COMPARATIVE EXAMPLE 2
EXAMPLE 2

FIG.2

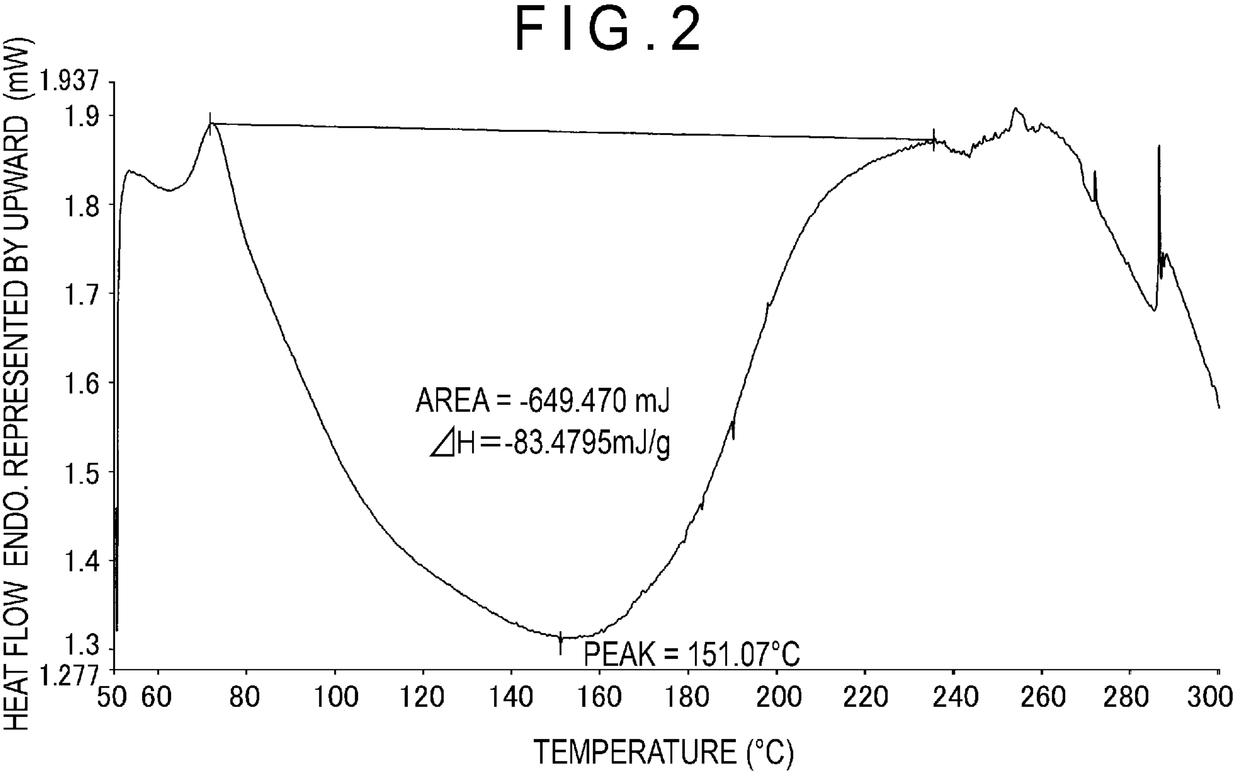
HEAT FLOW ENDO. REPRESENTED BY UPWARD (mW)
1.937
1.9
1.8
1.7
1.6
1.5
1.4
1.3
1.277
50 60 80 100 120 140 160 180 200 220 240 260 280 300
TEMPERATURE (°C)
AREA = -649.470 mJ
⊿H = -83.4795mJ/g
PEAK = 151.07°C

FIG. 3

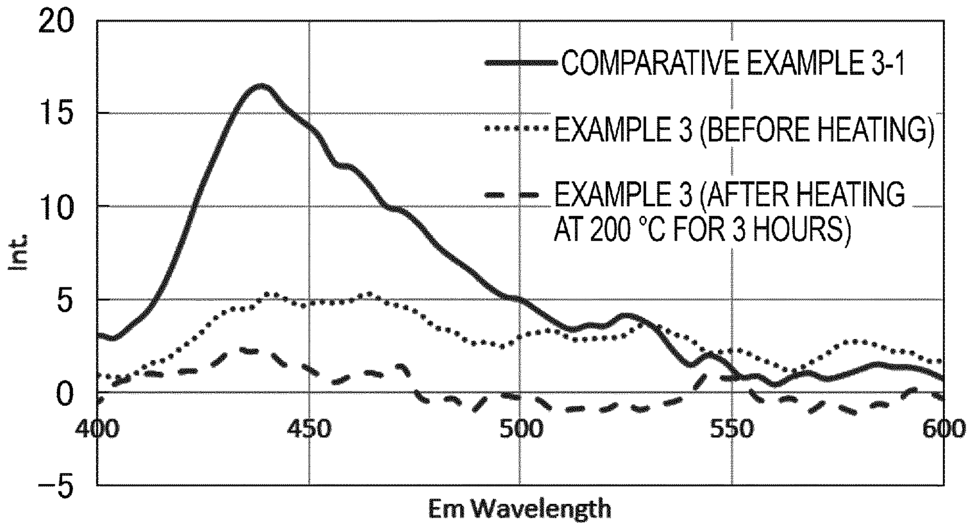
20
15
10
5
0
−5
Int.
400
450
500
550
600
Em Wavelength
COMPARATIVE EXAMPLE 3-1
EXAMPLE 3 (BEFORE HEATING)
EXAMPLE 3 (AFTER HEATING
AT 200 °C FOR 3 HOURS)

## INTERNATIONAL SEARCH REPORT

International application No.
PCT/JP2021/014164

A. CLASSIFICATION OF SUBJECT MATTER
Int.Cl. C08G64/18(2006.01)i, C08G81/00(2006.01)i, C08G85/00(2006.01)i, C08L67/03(2006.01)i, C08L69/00(2006.01)i, C08G63/91(2006.01)i
FI: C08G64/18, C08L69/00, C08G63/91, C08L67/03, C08G81/00, C08G85/00
According to International Patent Classification (IPC) or to both national classification and IPC

B. FIELDS SEARCHED
Minimum documentation searched (classification system followed by classification symbols)
Int.Cl. C08G64/18, C08L67/03, C08L69/00, C08G63/91

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | CN 103373950 A (TECHNICAL INSTITUTE OF PHYSICS AND CHEMISTRY, CHINESE ACADEMY OF SCIENCES) 30 October 2013 (2013-10-30), claims, examples 3, 4 | 1, 3, 5, 6, 11, 12, 16, 20, 21, 24, 25<br>2, 4, 7-10, 13-15, 17-19, 22, 23 |
| X<br>A | CN 110092720 A (TECHNICAL INSTITUTE OF PHYSICS AND CHEMISTRY, CHINESE ACADEMY OF SCIENCES) 06 August 2019 (2019-08-06), claims, application examples 1, 2 | 1, 2, 5, 6, 11-13, 16, 17, 20, 21, 24, 25<br>3, 4, 7-10, 14, 15, 18, 19, 22, 23 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 03 June 2021 | 15 June 2021 |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No. PCT/JP2021/014164

C (Continuation). DOCUMENTS CONSIDERED TO BE RELEVANT

| Category* | Citation of document, with indication, where appropriate, of the relevant passages | Relevant to claim No. |
|---|---|---|
| X<br><br>A | WO 2005/056642 A1 (NEC CORPORATION) 23 June 2005 (2005-06-23), claims, paragraphs [0039], [0050]-[0068], [0101]-[0103], examples 1, 11, comparative example 3, paragraph [0179] | 1-10, 16, 17, 19, 20, 24, 25<br>11-15, 18, 21-23 |
| X<br><br>A | JP 2020-509140 A (SOLVAY SPECIALTY POLYMERS USA, LLC) 26 March 2020 (2020-03-26), claims, paragraphs [0023]-[0033], [0123]-[0140], [0183] | 1-7, 11-14, 16, 17, 19-21, 24, 25<br>8-10, 15, 18, 22, 23 |
| X<br><br>A | JP 2003-286347 A (TORAY INDUSTRIES, INC.) 10 October 2003 (2003-10-10), claims, paragraphs [0011]-[0035], [0041], [0083] | 1-4, 8, 9, 11-13, 16-19, 24, 25<br>5-7, 10, 14, 15, 20-23 |
| X<br><br>A | JP 2013-519764 A (EVONIK ROEHM GMBH) 30 May 2013 (2013-05-30), claims, paragraphs [0026], [0035], [0036] | 1-4, 7, 19-21, 24, 25<br>5, 6, 8-18, 22, 23 |

Form PCT/ISA/210 (second sheet) (January 2015)

**INTERNATIONAL SEARCH REPORT**
Information on patent family members

International application No.
PCT/JP2021/014164

| | | |
|---|---|---|
| CN 103373950 A | 30 October 2013 | (Family: none) |
| CN 110092720 A | 06 August 2019 | (Family: none) |
| WO 2005/056642 A1 | 23 June 2005 | US 2007/0148465 A1<br>claims, paragraphs [0054], [0066]-[0083], [0111]-[0113], examples 1, 11, comparative example 3, paragraph [0185]<br>CN 1894313 A |
| JP 2020-509140 A | 26 March 2020 | WO 2018/162497 A1<br>claims, paragraphs [0023]-[0033], [00129]-[00148], [00198]<br>US 2020/0032060 A1<br>CN 110461906 A<br>KR 10-2019-0123285 A |
| JP 2003-286347 A | 10 October 2003 | (Family: none) |
| JP 2013-519764 A | 30 May 2013 | US 2012/0309895 A1<br>claims, paragraphs [0025], [0033], [0034]<br>WO 2011/101176 A1<br>DE 102010001987 A1<br>AU 2011217504 A1<br>TW 201141919 A<br>CA 2789841 A1<br>CN 102844391 A<br>BR 112012020564 A2 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H1077338 A
- JP H09319102 A
- JP 2000044668 A
- JP 2007314719 A
- JP 2010072019 A
- JP 2003286347 A
- US 3435003 A
- JP 2012224569 A
- JP H11172003 A
- JP 2005139339 A


### Non-patent literature cited in the description


- *Macromolecules,* 1999, vol. 32, 5786-5792